(19) **Europäisches Patentamt / European Patent Office / Office européen des brevets**

(11) **EP 1 667 065 B1**

(12) # EUROPEAN PATENT SPECIFICATION

(45) Date of publication and mention
of the grant of the patent:
**06.06.2018   Bulletin 2018/23**

(51) Int Cl.:
***G06T 5/00*** *(2006.01)*        ***G06T 5/20*** *(2006.01)*
***H04N 1/409*** *(2006.01)*

(21) Application number: **04773246.6**

(22) Date of filing: **10.09.2004**

(86) International application number:
**PCT/JP2004/013602**

(87) International publication number:
**WO 2005/027042 (24.03.2005 Gazette 2005/12)**

(54) **VISUAL PROCESSING APPARATUS, VISUAL PROCESSING METHOD, VISUAL PROCESSING PROGRAM, AND SEMICONDUCTOR DEVICE**

BILDVERARBEITUNGSVORRICHTUNG, -VERFAHREN UND -PROGRAMM UND HALBLEITERBAUELEMENT

APPAREIL DE TRAITEMENT VISUEL, PROCEDE DE TRAITEMENT VISUEL, PROGRAMME DE TRAITEMENT VISUEL ET DISPOSITIF SEMI-CONDUCTEUR

(84) Designated Contracting States:
**AT BE BG CH CY CZ DE DK EE ES FI FR GB GR HU IE IT LI LU MC NL PL PT RO SE SI SK TR**

(30) Priority: **11.09.2003   JP 2003320060**
**23.03.2004   JP 2004084118**

(43) Date of publication of application:
**07.06.2006   Bulletin 2006/23**

(73) Proprietor: **Panasonic Intellectual Property Corporation**
**of America**
**Torrance, CA 90503 (US)**

(72) Inventors:
• **YAMASHITA, Haruo**
**c/o Matsushita Electric Ind. Co,**
**Chuo-ku,**
**Osaka-shi**
**Osaka 540-6319 (JP)**
• **WATANABE, Tatsumi**
**c/o Matsushita Electric Ind. Co,**
**Chuo-ku,**
**Osaka-shi**
**Osaka 540-6319 (JP)**
• **MONOBE, Yusuke**
**c/o Matsushita Electric Ind. Co,**
**Chuo-ku,**
**Osaka-shi**
**Osaka 540-6319 (JP)**

• **ITO, Takeshi**
**c/o Matsushita Electric Ind. Co,**
**Chuo-ku,**
**Osaka-shi**
**Osaka 540-6319 (JP)**
• **KOJIMA, Akio**
**c/o Matsushita Electric Ind. Co,**
**Chuo-ku,**
**Osaka-shi**
**Osaka 540-6319 (JP)**
• **KUWAHARA Yasuhiro**
**c/o Matsushita Electric Ind. Co,**
**Chuo-ku,**
**Osaka-shi**
**Osaka 540-6319 (JP)**
• **KUROSAWA Toshiharu**
**c/o Matsushita Electric Ind. Co**
**Chuo-ku,**
**Osaka-shi**
**Osaka 540-6319 (JP)**

(74) Representative: **Eisenführ Speiser**
**Patentanwälte Rechtsanwälte PartGmbB**
**Postfach 10 60 78**
**28060 Bremen (DE)**

(56) References cited:
EP-A- 0 732 669      JP-A- 10 065 930
JP-A- 10 334 218     JP-A- 2002 095 021
JP-A- 2002 204 372   JP-A- 2002 536 677
JP-A- 2003 108 109   US-A- 5 454 053
US-A- 6 094 185      US-A1- 2002 024 529

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

US-B1- 6 618 045

- TUMBLIN JACK ET AL: "Tone reproduction for realistic images" IEEE COMPUTER GRAPHICS AND APPLICATIONS 1993 NOV, vol. 13, no. 6, November 1993 (1993-11), pages 42-48, XP007908337

- PELI T ET AL: "ADAPTIVE FILTERING FOR IMAGE ENHANCEMENT", OPTICAL ENGINEERING, SOC. OF PHOTO-OPTICAL INSTRUMENTATION ENGINEERS, BELLINGHAM, vol. 21, no. 1, 1 January 1982 (1982-01-01), pages 108-112, XP000573323, ISSN: 0091-3286

Description

Technical Field

The present invention relates to visual processing devices, in particular to visual processing devices that perform visual processing such as spatial processing or gradation processing of an image signal.

Background Art

EP 0 732 669 A1 is related to a method of processing a digital image (medical, radiograph) in order to enhance viewing of the image when it is presented for display on a display device (video monitor). An original medical image is digitized and precompensation applied to the digital values to optimize the information content and detail at a CRT, for example. The luminance dynamic range and the spatial frequency content of the original image are reduced to present the most usable image on a display device. The characteristics of the human visual system and the ambient light incident on a calibrated display are factors in the final precompensation of the image.

According to US 6,618,045 methods and arrangements are provided that automatically adjust various operating settings associated with a display device in response to detected lighting conditions. The methods and arrangements respond to dynamically changing light conditions in an effort to significantly maintain the output quality of the display as previously established by the user. Memory is provided and configured to store at least one user preference value. At least one display parameter controller unit operatively associated with the display device is also provided and configured to respond to a parameter setting. At least one sensor unit, which is responsive to light, is configured to output a detected light value to logic. The logic is operatively coupled to the memory, the display parameter controller unit and the sensor unit. The logic is configured to output the parameter setting to the parameter controller unit based on the user preference value and the detected light value. Thus, for example, the user can establish a preferred setting for the brightness, contrast, color, etc., for a given lighting condition. The logic can be further configured to output the parameter setting based on the preference value, detected light value, and specified curve-fitting data.

Spatial processing and gradation processing are known as techniques for visually processing image signals of an original image

Spatial processing involves using the pixels around a pixel to be filtered when processing that pixel. Further, the technique of using an image signal that has been subjected to spatial processing to perform contrast enhancement or dynamic range (DR) compression, for example, of an original image is known. With contrast enhancement, the difference between the original image and the blur signal (the sharp component of the image) is added to the original image, sharpening the image. With DR compression, a portion of the blur signal is subtracted from the original image, compressing the dynamic range.

Gradation processing is processing in which a lookup table (LUT) is used to transform a pixel value for each pixel being processed without regard for the pixels around the pixel being processed, and is also referred to as "gamma correction." For example, in the case of contrast enhancement, transformation of the pixel value is performed using a LUT that produces a gradation of gray levels that appear frequently (whose area is large) in the original image. Well-known examples of gradation processing using a LUT include gradation processing in which a single LUT is chosen and used for the entire original image (histogram equalization) and gradation processing in which the original image is partitioned into a plurality of image regions and a LUT is chosen and used for each image region (local histogram equalization) (for example, see JP 2000-57335A (pg. 3, Figs. 13 to 16)).

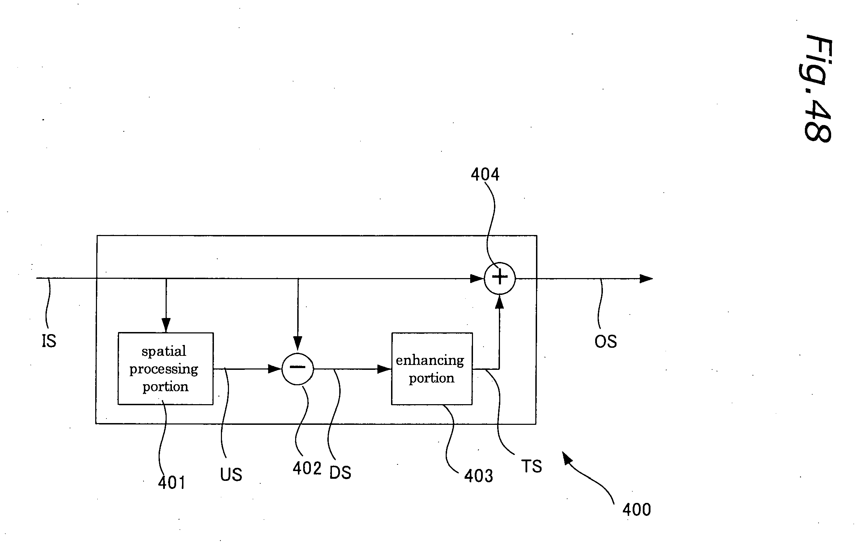

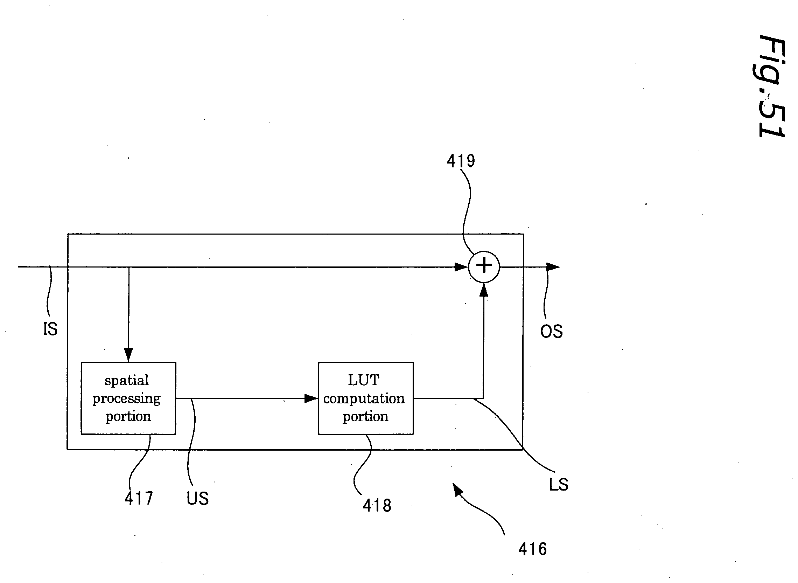

Visual processing that combines spatial processing and gradation processing also is known. Conventional visual processing that combines spatial processing and gradation processing is described below using Fig. 48 and Fig. 51.

Fig. 48 shows a visual processing device 400 that performs edge enhancement and contrast enhancement utilizing unsharp masking. The visual processing device 400 shown in Fig. 48 is provided with a spatial processing portion 401 that performs spatial processing with respect to the input signal IS and outputs an unsharp signal US, a subtracting portion 402 that subtracts the unsharp signal US from the input signal IS and outputs a difference signal DS, an enhancing portion 403 that performs enhancement of the difference signal DS and outputs an enhanced signal TS, and a summing portion 404 that takes the sum of the input signal IS and the enhanced signal TS and outputs an output signal OS.

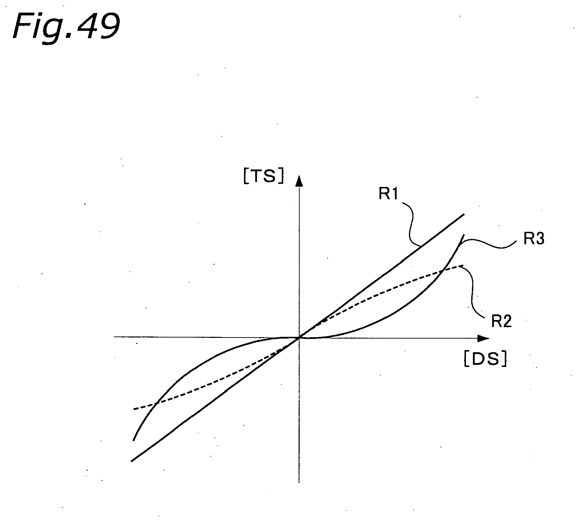

Here, enhancement processing is performed with respect to the difference signal DS using a linear or non-linear enhancement function. Fig. 49 shows the enhancement functions R1 to R3. The horizontal axis in Fig. 49 marks the difference signal DS and the vertical axis marks the enhanced signal TS. The enhancement function R1 is an enhancement function that is linear with respect to the difference signal DS. The enhancement function R1 is a gain adjustment function expressed for example by R1(x) = 0.5x (where x is the value of the difference signal DS). The enhancement function R2 is a non-linear enhancement function with respect to the difference signal DS, and is a function that inhibits extreme contrasts. In other words, a greater inhibitory effect (an inhibitory effect due to a larger inhibition rate) is exhibited with respect to an input x having a large absolute value (where x is the value of the difference signal DS). For example, the enhancement function R2 is expressed by a graph having a smaller slope the larger the absolute value of the input x. The enhancement function R3 is a non-linear enhancement function for the difference signal DS that inhibits the noise component in small amplitudes. That is, a greater inhibitory effect (an inhibitory effect due to a larger inhibition rate) is attained with respect to an input x having a small absolute value (where x is the value of the difference signal DS). For example, the enhancement function R3 is expressed by a graph having a larger slope the greater the absolute value of the input x. The enhancing portion 403 can use any of these enhancement functions R1 to R3.

The difference signal DS is the sharp component of the input signal IS. With the visual processing device 400, the intensity of the difference signal DS is transformed and added to the input signal IS. Thus, the output signal OS is the input signal IS in which the edges and the contrast have been enhanced.

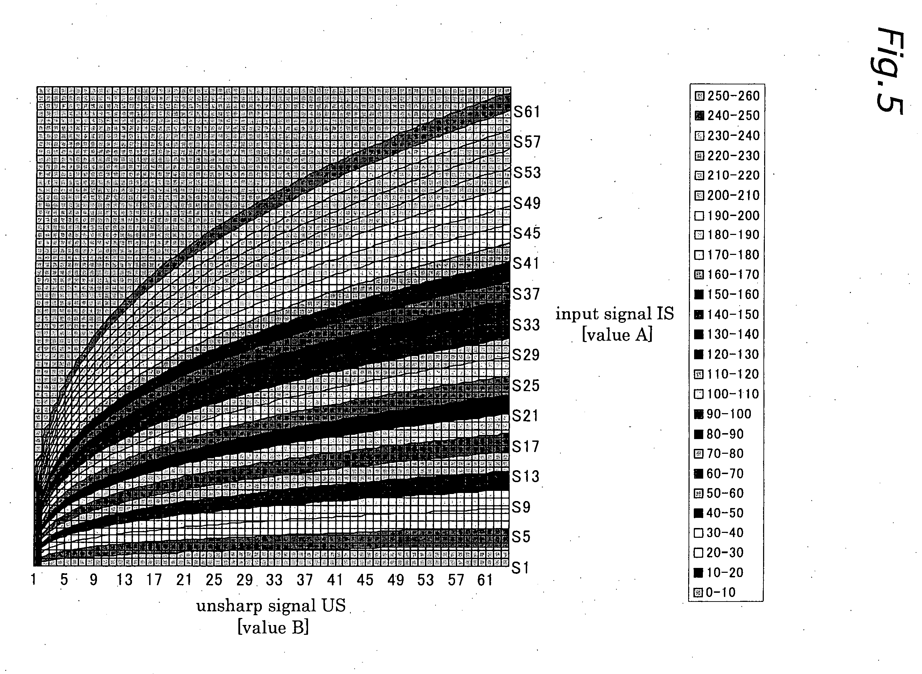

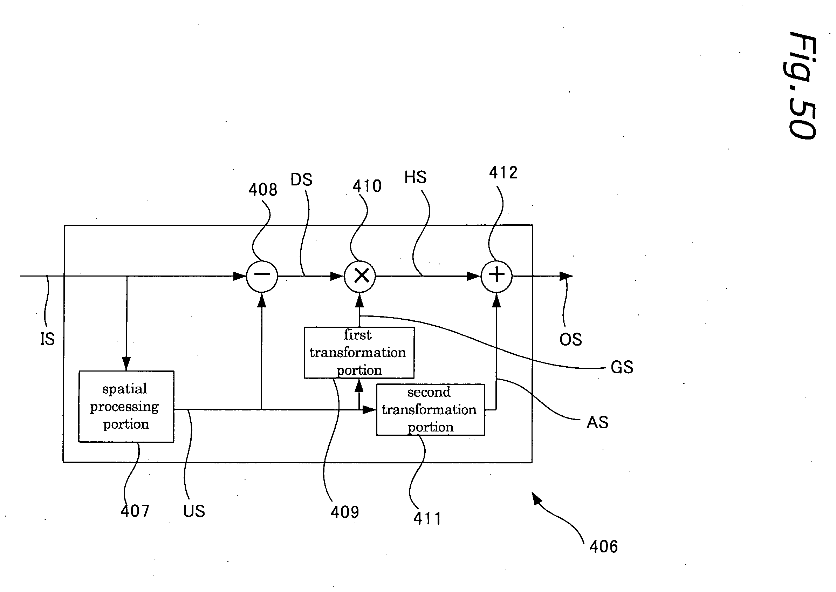

Fig. 50 shows a visual processing device 406 that improves the local contrast (intensity) (for example, see Japanese Patent JP 2832954 (pg. 2, Fig. 5)). The visual processing device 406 shown in Fig. 50 is provided with a spatial processing portion 407, a subtracting portion 408, a first transformation portion 409, a multiplying portion 410, a second transformation portion 411, and a summing portion 412. The spatial processing portion 407 performs spatial processing with respect to the input signal IS and outputs an unsharp signal US. The subtracting portion 408 subtracts the unsharp signal US from the input signal IS and outputs a difference signal DS. The first transformation portion 409 outputs an amplification coefficient signal GS for locally amplifying the difference signal DS based on the intensity of the unsharp signal US. The multiplying portion 410 takes the product of the difference signal DS and the amplification coefficient signal GS and outputs a contrast enhanced signal HS in which the difference signal DS has been locally amplified. The second transformation portion 411 locally corrects the intensity of the unsharp signal US and outputs a corrected unsharp signal AS. The summing portion 412 takes the sum of the contrast enhanced signal HS and the corrected unsharp signal AS and outputs an output signal OS.

The amplification coefficient signal GS is a non-linear weight coefficient that locally corrects the contrast in portions of the input signal IS where the contrast is unsuitable. For this reason, portions of the input signal IS having suitable contrast are output unchanged, and those portions with an unsuitable contrast are corrected and then output.

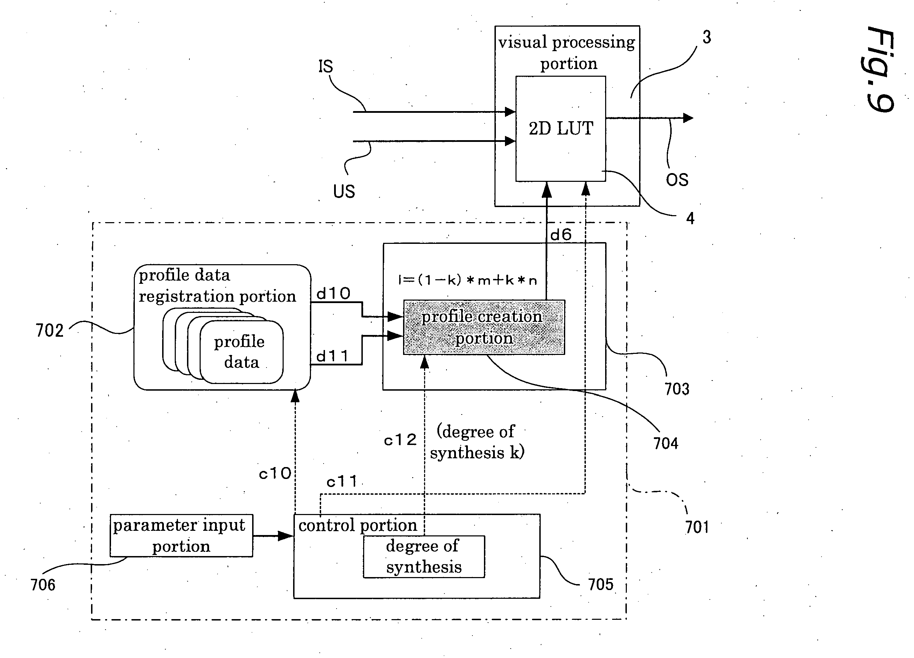

Fig. 51 shows a visual processing device 416 that performs compression of the dynamic range (for example, see JP 2001-298619A (pg. 3, Fig. 9)). The visual processing device 416 shown in Fig. 51 is provided with a spatial processing portion 417 that performs spatial processing with respect to the input signal IS and outputs an unsharp signal US, a LUT computation portion 418 that uses a LUT to perform an inverse transformation of the unsharp signal US to produce a LUT processed signal LS which it then outputs, and a summing portion 419 that takes the sum of the input signal IS and the LUT processed signal LS and outputs an output signal OS.

The LUT processed signal LS is added to the input signal IS to compress the dynamic range of low-frequency components of the input signal IS (frequency components lower than the cutoff frequency of the spatial processing portion 417). As a result, the dynamic range of the input signal IS is compressed while its high-frequency components are retained.

Disclosure of the Invention

In the above visual processing, there is a need to obtain an image that has a better visual effect for the person who will view the visually processed image. For example, if the visually processed image is to be displayed, then the display environment will have an effect on how the image that is displayed will be viewed.

Accordingly, a goal of the present invention is to obtain an image that has a better visual effect for the person that will view the visually processed image.

A visual processing device according to the invention is specified in claim 1. Specific embodiments of the visual processing device are specified in claims 2 to 10. A visual processing method according to the invention is specified in claim 11. Moreover, an integrated circuit that performs the visual processing method according to claim 11 is specified in claim 12 and a visual processing program that causes a computer to perform the visual processing method according to claim 11 is specified in claim 13.

Brief Description of Drawings

Fig. 1 is a block diagram describing the structure of the visual processing device 1 (first embodiment).
Fig. 2 is an example of the profile data (first embodiment).
Fig. 3 is a flowchart for describing the visual processing method (first embodiment).
Fig. 4 is a block diagram describing the structure of the visual processing portion 500 (first embodiment).
Fig. 5 is an example of the profile data (first embodiment).

Fig. 6 is a block diagram describing the structure of the visual processing device 520 (first embodiment).

Fig. 7 is a block diagram describing the structure of the visual processing device 525 (first embodiment).

Fig. 8 is a block diagram describing the structure of the visual processing device 530 (first embodiment).

Fig. 9 is a block diagram describing the structure of the profile data registration device 701 (first embodiment).

Fig. 10 is a flowchart explaining the visual processing profile creation method (first embodiment).

Fig. 11 is a block diagram describing the structure of the visual processing device 901 (first embodiment).

Fig. 12 is a graph showing the relationship between the input signal IS' and the output signal OS' after changing the extent change function fk(z) (first embodiment).

Fig. 13 is a graph showing the extent change functions f1(z) and f2(z) (first embodiment).

Fig. 14 is a block diagram describing the structure of the visual processing device 905 (first embodiment).

Fig. 15 is a block diagram describing the structure of the visual processing device 11 (first embodiment).

Fig. 16 is a block diagram describing the structure of the visual processing device 21 (first embodiment).

Fig. 17 is an explanatory diagram describing the dynamic range compression function F4 (first embodiment).

Fig. 18 is an explanatory diagram describing the enhancement function F5 (first embodiment).

Fig. 19 is a block diagram describing the structure of the visual processing device 31 (first embodiment).

Fig. 20 is a block diagram describing the structure of the visual processing device 41 (first embodiment).

Fig. 21 is a block diagram describing the structure of the visual processing device 51 (first embodiment).

Fig. 22 is a block diagram describing the structure of the visual processing device 61 (first embodiment).

Fig. 23 is a block diagram describing the structure of the visual processing device 71 (first embodiment).

Fig. 24 is a block diagram describing the structure of the visual processing device 600 (second embodiment).

Fig. 25 is a graph describing the transformation by Eq. M20 (second embodiment).

Fig. 26 is a graph describing the transformation by Eq. M2 (second embodiment).

Fig. 27 is a graph describing the transformation by Eq. M21 (second embodiment).

Fig. 28 is a flowchart describing the visual processing method (second embodiment).

Fig. 29 is a graph showing the trend of the function $\alpha 1(A)$ (second embodiment).

Fig. 30 is a graph showing the trend of the function $\alpha 2(A)$ (second embodiment).

Fig. 31 is a graph showing the trend of the function $\alpha 3(A)$ (second embodiment).

Fig. 32 is a graph showing the trend of the function $\alpha 4(A,B)$ (second embodiment).

Fig. 33 is a block diagram describing the structure of the actual contrast setting portion 605 as a modified example (second embodiment).

Fig. 34 is a block diagram describing the structure of the actual contrast setting portion 605 as a modified example (second embodiment).

Fig. 35 is a flowchart describing the operation of the control portion 605e (second embodiment).

Fig. 36 is a block diagram describing the structure of the visual processing device 600 provided with the color difference correcting portion 608 (second embodiment).

Fig. 37 is an explanatory diagram describing an overview of color difference correction (second embodiment).

Fig. 38 is a flowchart describing the estimation computation in the color difference correcting portion 608 (second embodiment).

Fig. 39 is a block diagram describing the structure of the visual processing device 600 as a modified example (second embodiment).

Fig. 40 is a block diagram describing the structure of the visual processing device 910 (third embodiment).

Fig. 41 is a block diagram describing the structure of the visual processing device 920 (third embodiment).

Fig. 42 is a block diagram describing the structure of the visual processing device 920' (third embodiment).

Fig. 43 is a block diagram describing the structure of the visual processing device 920" (third embodiment).

Fig. 44 is a block diagram describing the overall configuration of the content supply system (fourth embodiment).

Fig. 45 is an example of a portable telephone furnished with the visual processing device of the present invention (fourth embodiment).

Fig. 46 is a block diagram describing the configuration of the portable telephone (fourth embodiment).

Fig. 47 is an example of the system for digital broadcast (fourth embodiment).

Fig. 48 is a block diagram describing the structure of the visual processing device 400, which employs unsharp masking (background art).

Fig. 49 is an explanatory diagram describing the enhancement functions R1 to R3 (background art).

Fig. 50 is a block diagram describing the structure of the visual processing device 406, which performs an improvement of the local contrast (background art).

Fig. 51 is a block diagram describing the structure of the visual processing device 416, which performs a compression of the dynamic range (background art).

Best Mode for Carrying Out the Invention

Hereinafter, first through fourth embodiments serving as best modes for implementing the present invention will be described.

The first embodiment describes a visual processing device that employs a two-dimensional LUT.

The second embodiment describes a visual processing device that performs correction of the ambient light when ambient light is present in the environment in which the image is to be displayed.

The third embodiment describes applied examples of the first embodiment and the second embodiment.

The fourth embodiment describes applied examples of the first through third embodiments.

[First Embodiment]

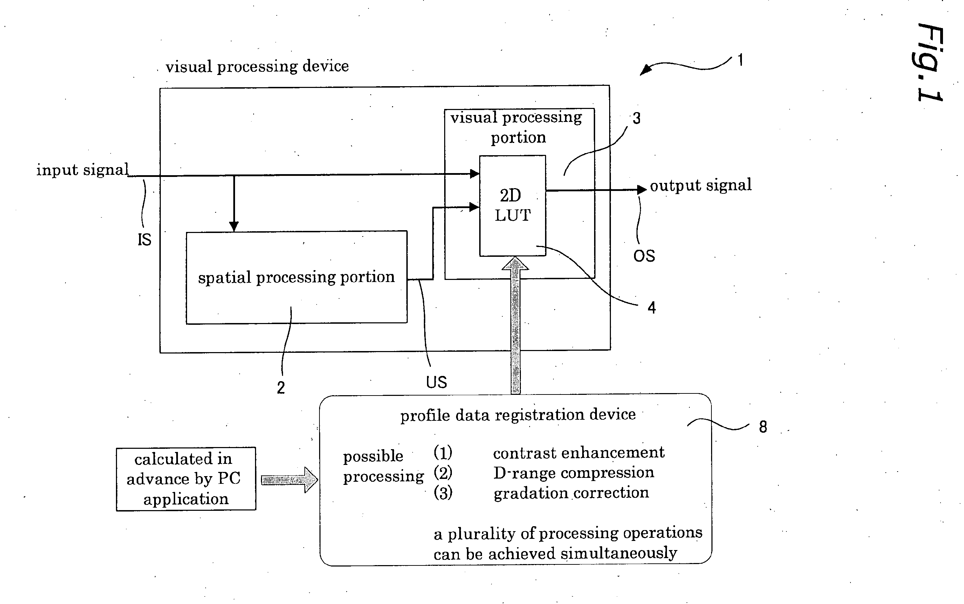

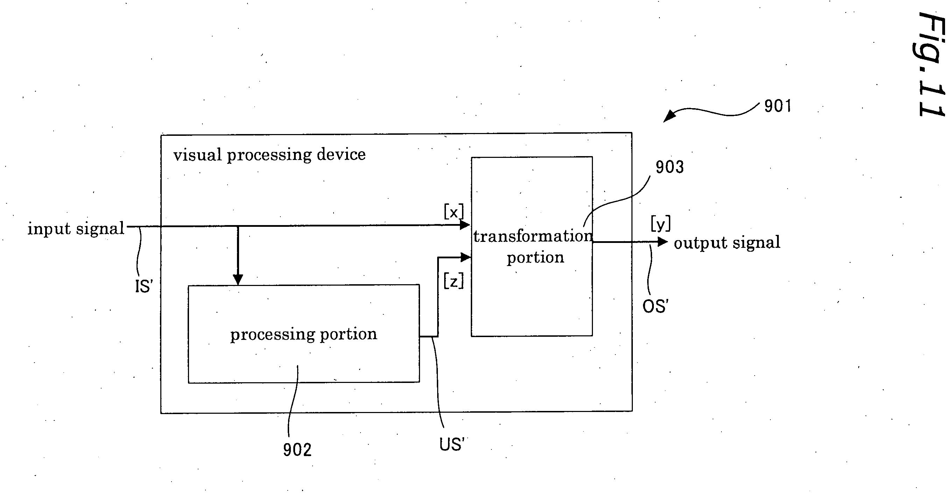

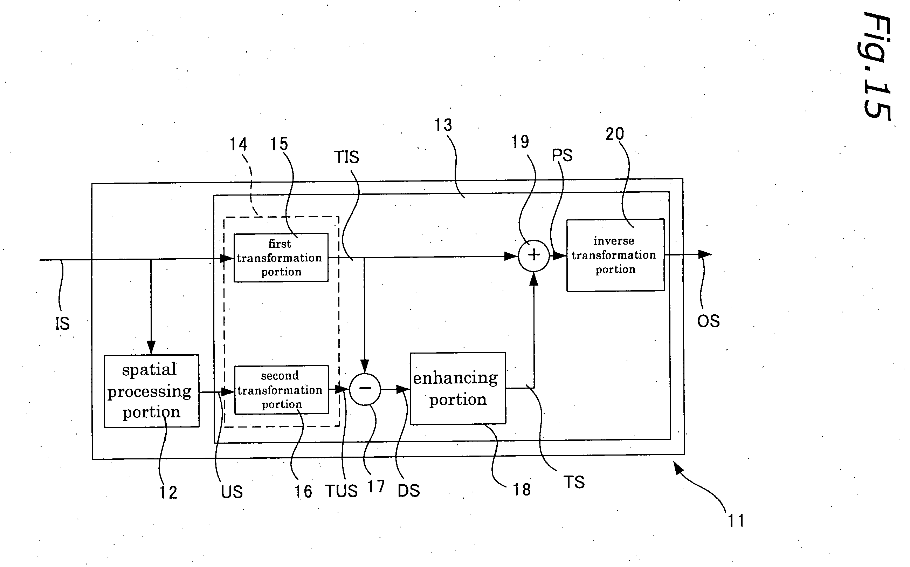

A visual processing device 1 that employs a two-dimensional LUT is described below as a first embodiment of the present invention using Figs. 1 to 10. A modified example of this visual processing device is described using Figs. 11 to 14. Further, a visual processing device that achieves visual processing that is equivalent to that of the visual processing device 1 is described using Figs. 15 to 23.

The visual processing device 1 is a device for performing visual processing such as spatial processing and gradation processing of an image signal. The visual processing device 1, together with a device that performs color processing of an image signal, constitutes an image processing device in a device that handles images, such as a computer, a television, a digital camera, a portable telephone, a PDA, a printer, or a scanner.

<Visual Processing Device 1>

Fig. 1 shows the basic structure of the visual processing device 1, which performs visual processing of an image signal (input signal IS) and outputs the result as a visually processed image (output signal OS). The visual processing device 1 is provided with a spatial processing portion 2 that performs spatial processing of the luminance value of each pixel of an original image that has been obtained as an input signal IS and outputs the result as an unsharp signal US, and a visual processing portion 3 that performs visual processing of the original image using the input signal IS and the unsharp signal US for the same pixel and outputs the result as an output signal OS.

The spatial processing portion 2 for example obtains the unsharp signal US with a low-pass spatial filter that permits the passage of only the low-frequency space of the input signal IS. As the low-pass spatial filter it is possible to use a FIR (Finite Impulse Response)-type low-pass spatial filter or an IIR (Infinite Impulse Response)-type low-pass spatial filter, which are commonly used to create unsharp signals.

The visual processing portion 3 has a two-dimensional LUT 4 that lists the relationship between the input signal IS and the unsharp signal US, and the output signal OS, and references the two-dimensional LUT 4 with the input signal IS and the unsharp signal US and outputs an output signal OS.

<Two-Dimensional LUT 4>

Matrix data referred to as profile data are registered to the two-dimensional LUT 4. The profile data has a row (or column) for each pixel value of the input signal IS and a column (or row) for each pixel value of the unsharp signal US, and the pixel values of the output signal OS that correspond to the combination of the input signal IS and the unsharp signal US are stored as elements of the rows and columns. The profile data are registered to the two-dimensional LUT 4 by a profile data registration device 8 that is provided in or connected to the visual processing device 1. The profile data registration device 8 stores data of a plurality of profiles that have been created in advance by a personal computer (PC) or the like. For example, it stores data of a plurality of profiles for achieving contrast enhancement, D-range compression, or gradation correction, for example (for a more detailed description, see the section <Profile Data> below). Thus, with the visual processing device 1, the profile data registration device 8 can be used to change the profile data registered to the two-dimensional LUT 4, and this allows a variety of types of visual processing to be achieved.

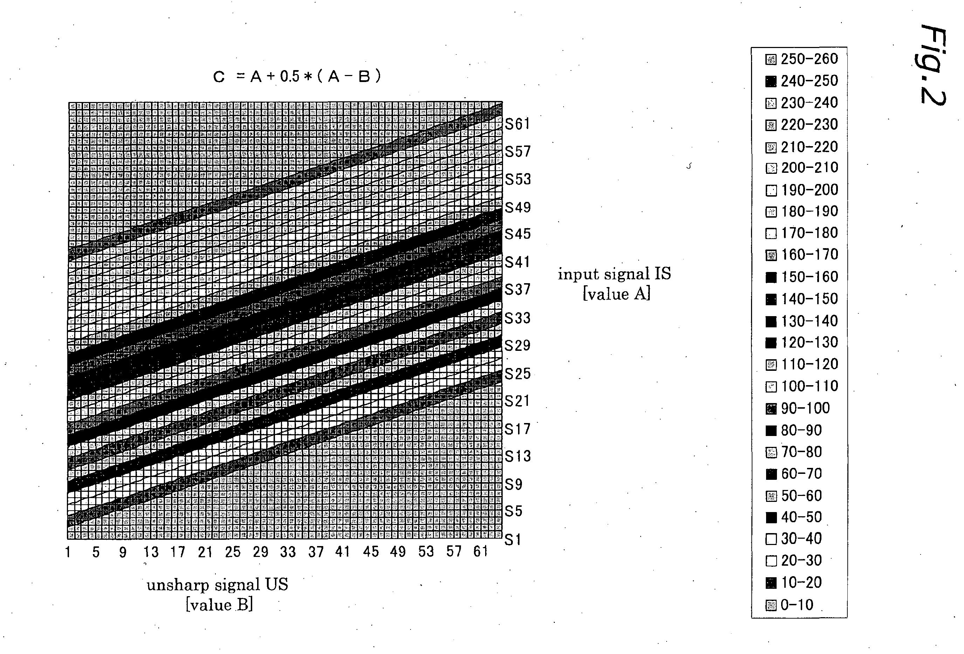

An example of the profile data is shown in Fig. 2. The profile data shown in Fig. 2 causes the visual processing device 1 to execute processing equivalent to that of the visual processing device 400 shown in Fig. 48. In Fig. 2, the profile data takes the form of a 64 x 64 matrix in which the values of the upper six bits of the luminance values of the 8-bit input signal IS are shown in the column direction (vertical direction) and the value of the upper six bits of the luminance value of the 8-bit unsharp signal US are shown in the row direction (horizontal direction). The value of the output signal OS is expressed in 8 bits value as the matrix element corresponding to the two luminance values.

The value C of each element of the profile data shown in Fig. 2 (the value of the output signal OS) is expressed as $C = A + 0.5*(A-B)$ (hereinafter, this is referred to as Equation M11), using the value A of the input signal IS (which is a value obtained by discarding the lower two bits of the 8 bit input signal IS) and the value B of the unsharp signal US (which is a value that is obtained by discarding the lower two bits of the 8-bit unsharp signal US). In other words, it can be seen that the visual processing device 1 performs processing equivalent to processing by the visual processing device 400 (see Fig. 48) using the enhancement function R1 (see Fig. 49).

It should be noted that depending on the combination of the value A of the input signal IS and the value B of the unsharp signal US, the value C obtained from Eq. M11 may be a negative value. In this case, the element of the profile data corresponding to the value A of the input signal IS and the value B of the unsharp signal US may be set to the value 0. Further, depending on the combination of the value A of the input signal IS and the value B of the unsharp signal US, the value C obtained from Eq. M11 may be saturated. That is, it, may exceed the maximum value of 255 that can be expressed with 8 bits. In this case, the element of the profile data corresponding to the value A of the input signal IS and the value B of the unsharp signal US may be set to the value 255. In Fig. 2, the elements of the profile data found in this manner are shown by contour line.

When using profile data in which the value C of the elements is expressed as $C = R6(B) + R5(B) * (A-B)$ (hereinafter, this is referred to as Equation M12), processing equal to that of the visual processing device 406 shown in Fig. 50 can be achieved. Here, the function R5 is that of the first transformation portion 409 outputting an amplification coefficient signal GS from the unsharp signal US, and the function R6 is that of the second transformation portion 411 outputting a corrected unsharp signal AS from the unsharp signal US.

When using profile data in which the values C of the elements are expressed by $C = A + R8(B)$ (hereinafter, this is referred to as Equation M13), processing equivalent to that of the visual processing device 416 shown in Fig. 51 can be achieved. Here, the function R8 is that of outputting a LUT processed signal LS from the unsharp signal US.

It should be noted that if the value C of a particular element of the profile data found through Eq. M12 or Eq. M13 is outside the range $0 \leq C \leq 255$, then the value C of that element can be regarded as 0 or 255.

<Visual Processing Method and Visual Processing Program>

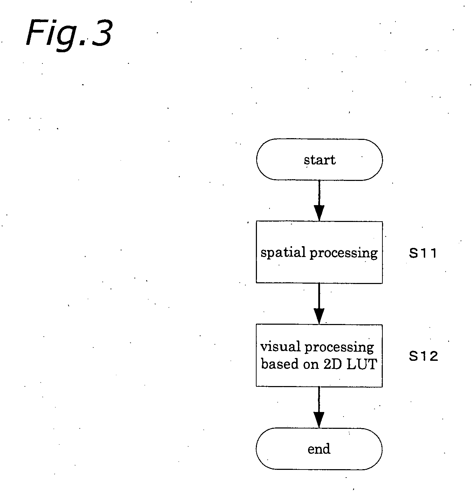

Fig. 3 shows a flowchart that describes the visual processing method of the visual processing device 1. The visual processing method shown in Fig. 3 is a method for performing visual processing of an input signal IS (see Fig. 1), and is achieved by the hardware in the visual processing device 1.

With the visual processing method shown in Fig. 3, an input signal IS is spatially processed by the low-pass spatial filter (step S11) to obtain an unsharp signal US. The value of the two-dimensional LUT 4 that corresponds to the input signal IS and the unsharp signal US is looked up and this value is output as the output signal OS (step S12). The above processing is performed for each pixel that is received as an input signal IS.

It should be noted that each step of the visual processing method shown in Fig. 3 can also be achieved on a computer, for example, as a visual processing program.

<Effects>

(1)

When visual processing is performed based on only the value A of the input signal IS (for example, in the case of performing a transformation based on a one-dimensional gradation transformation curve), if pixels having the same darkness are present at different areas in the image, then the two are transformed to the same brightness. More specifically, when brightening a dark area in the background of a person in an image, hair of that person having the same darkness will also be brightened.

In contrast to this, the visual processing device 1 performs visual processing using profile data that have created based on a two-dimensional function and correspond to the value A of an input signal IS and the value B of an unsharp signal US. For this reason, pixels having the same darkness that are present at different areas within the image are not transformed uniformly but instead can be made brighter or darker taking into account information on their surroundings, and this allows each region of the image to be adjusted to an ideal brightness. More specifically, a background that has the same darkness as the hair of a person in the image can be brightened without changing the darkness of the hair.

(2)

With the visual processing device 1, visual processing of the input signal IS is performed using the two-dimensional LUT 4. The visual processing device 1 has a hardware configuration that is independent of the visual processing effect that is to be achieved. That is, the visual processing device 1 can be constituted by generalized hardware, and this is useful for reducing hardware costs, for example.

(3)

The profile data that are registered to the two-dimensional LUT 4 can be changed by the profile data registration device 8. Thus, by changing the profile data it is possible for the visual processing device 1 to achieve various types of visual processing, without changing the hardware configuration of the visual processing device 1. More specifically, the visual processing device 1 is capable of simultaneously executing spatial processing and gradation processing.

(4)

The profile data that are registered to the two-dimensional LUT 4 can be calculated in advance. For profile data that have been created already, the amount of time required for visual processing using those data is the same regardless of the complexity of the processing. Thus, it is possible to increase the speed of visual processing by using the visual processing device 1 because the processing time does not depend on the complexity of the visual processing, even if the visual processing requires a complex structure when configured by hardware or software.

<Modified Examples>

(1)

Fig. 2 shows profile data in the form of a 64 x 64 matrix. Here, the effect of the present invention does not depend on the size of the profile data. For example, the two-dimensional LUT 4 can also have profile data that correspond to all the combinations of values possible from the input signal IS and the unsharp signal US. For example, if the input signal IS and the unsharp signal US are expressed with 8 bits, then the profile data can take the form of a $256 \times 256$ matrix.
In this case, although the memory capacity required for the two-dimensional LUT 4 increases, more accurate visual processing can be achieved.

(2)

In Fig. 2, the profile data have been explained as storing the values of the output signals OS for the values of the upper six bits of the luminance value of the 8-bit input signal IS and the values of the upper six bits of the luminance value of the 8-bit unsharp signal US. Here, it is also possible that the visual processing device 1 is further provided with an interpolation portion that performs linear interpolation of the value of the output signal OS based on the adjacent elements of the profile data and the size of the lower two bits of the input signal IS and the unsharp signal US.
In this case, more accurate visual processing can be achieved without increasing the memory capacity necessary for the two-dimensional LUT 4.
The interpolating portion may be provided in the visual processing portion 3 and may output as an output signal OS a value that is obtained by linearly interpolating the values stored in the two-dimensional LUT 4.

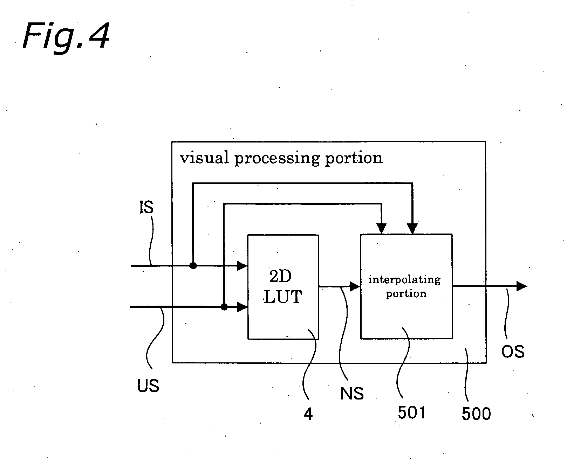

Fig. 4 shows a visual processing portion 500 provided with an interpolating portion 501, as a modified example of the visual processing portion 3. The visual processing portion 500 is provided with a two-dimensional LUT 4 that lists the relationship between an input signal IS and an unsharp signal US and a pre-interpolation output signal NS, and the interpolating portion 501, which receives the pre-interpolation output signal NS, the input signal IS and the unsharp signal US and outputs an output signal OS.
The two-dimensional LUT 4 stores the values of the pre-interpolation output signal NS for the values of the upper six bits of the luminance of the 8-bit input signal IS and the values of the upper six bits of the luminance of the 8-bit unsharp signal US. The values of the pre-interpolation output signal NS are for example stored as 8-bit values. When the two-dimensional LUT 4 receives the 8-bit value of the input signal IS and the 8-bit value of the unsharp signal US, it outputs the values of the four pre-interpolation output signals NS corresponding to the section including each of the values. The section including each of the values is the section surrounded by the four pre-interpolation output signals NS stored for the combinations of (the value of the upper six bits of the input signal IS, the value of the upper six bits of the unsharp signal US), (the smallest six-bit value that exceeds the value of the upper six bits of the input signal IS, the value of the upper six bits of the unsharp signal US), (the value of the upper six bits of the input signal IS, the smallest six-bit value that exceeds the value of the upper six bits of the unsharp signal US), and (the smallest six-bit value that exceeds the value of the upper six bits of the input signal IS, the smallest six-bit value that exceeds the value of the upper six bits of the unsharp signal US).
The value of the lower two bits of the input signal IS and the value of the lower two bits of the unsharp signal US are input to the interpolating portion 501, and using these values, the interpolating portion 501 performs linear interpolation of the values of the four pre-interpolation output signals NS output by the two-dimensional LUT 4. More specifically, the interpolating portion 501 uses the value of the lower two bits of the input signal IS and the value of the lower two bits of the unsharp signal US to calculate the weighted mean of the values of the four pre-interpolation output signals NS, and outputs this as the output signal OS.

Through the above, more accurate visual processing can be achieved without increasing the memory capacity required for the two-dimensional LUT 4.

It should be noted that it is also possible for the interpolating portion 501 to perform linear interpolation of only one of either the input signal IS or the unsharp signal US.

(3)

With the spatial processing performed by the spatial processing portion 2, as the unsharp signal US for the input signal IS of a pixel being processed it is also possible to output the mean value (simple mean or weighted mean), the maximum value, the minimum value, or the median value of the input signal IS of the pixel being processed and the pixels surrounding the pixel being processed. It is further possible to output the mean value (simple mean or weighted mean), the maximum value, the minimum value, or the median value of only the pixels surrounding the pixel being processed as the unsharp signal US.

(4)

In Fig. 2, the values C of the elements of the profile data are created based on the linear function M11 performed with respect to each of the value A of the input signal IS and the value B of the unsharp signal US. However, it is also possible to create the values C of the elements of the profile data based on a non-linear function with respect to the value A of the input signal IS.

In this case, it is possible to achieve visual processing that corresponds to the viewing properties or visual processing that is suited for the non-linear characteristics of a device that handles images, such as a computer, a television, a digital camera, a portable telephone, a PDA, a printer, or a scanner, that outputs an output signal OS.

It is also possible to create the value C of the each element of the profile data based on a non-linear function of the value A of the input signal IS and the value B of the unsharp signal US, that is, a two-dimensional non-linear function.

For example, when visual processing is performed based on only the value A of the input signal IS (for example, in the case of performing a transformation based on a one-dimensional gradation transformation curve), if pixels having the same darkness are present at different areas in the image, then the two are transformed to the same brightness. More specifically, when brightening a dark area in the background of a person in an image, hair of that person having the same darkness will also be brightened.

On the other hand, if visual processing is performed using profile data that have been created based on a two-dimensional non-linear function, pixels having the same darkness that are present at different areas within the image are not transformed uniformly but instead can be made brighter or darker taking into account surrounding information, and this allows each region of the image to be adjusted to an ideal brightness. More specifically, a background that has the same darkness as the hair of a person in the image can be brightened without changing the darkness of the hair. Moreover, it is also possible to perform visual processing in which the gradation is maintained, even for those image regions in which the pixel values become saturated after visual processing according to a linear function.

Fig. 5 shows an example of such profile data. ' The profile data shown in Fig. 5 are profile data with which the visual processing device 1 can perform contrast enhancement that is suited for the visual characteristics. In Fig. 5, the profile data are expressed as a $64 \times 64$ matrix, in which the value of the upper six bits of the luminance value of the 8-bit input signal IS is shown in the column direction (vertical direction) and the value of the upper six bits of the luminance value of the 8-bit unsharp signal US is shown in the row direction (horizontal direction). The output signal OS is expressed as an 8-bit value as the matrix element corresponding to the two luminance values.

The values C of the elements of the profile data shown in Fig. 5 (the values of the output signal OS) can be expressed by C = F2(F1(A)+F3(F1(A)-F1(B))) (hereinafter, this is referred to as Equation M14), using the value A of the input signal IS (which is a value obtained by discarding the lower two bits of the 8 bit input signal IS, for example), the value B of the unsharp signal US (which is a value that is obtained by discarding the lower two bits of the 8-bit unsharp signal US, for example), a transformation function F1, an inverse transformation function F2 of that transformation function, and an enhancement function F3. Here, the transformation function F1 is a common logarithmic function. The inverse transformation function F2 is an exponential function (antilog) that functions as the inverse function of the common logarithmic function. The enhancement function F3 is any of the enhancement functions R1 to R3 explained using Fig. 49.

These profile data allow visual processing using an input signal IS and an unsharp signal US that have been transformed to logarithmic space by the transformation function F1. Human visual performance is logarithmic, and visual processing that is suited for our visual performance is best achieved by performing processing after transforming to logarithmic space. Due to this, the visual processing device 1 performs contrast enhancement in logarithmic space.

It should be noted that depending on the combination of the value A of the input signal IS and the value B of the unsharp signal US, the value C obtained from Eq. M14 may be a negative value. In this case, the element of the profile data corresponding to the value A of the input signal IS and the value B of the unsharp signal US may be set to the value 0. Further, depending on the combination of the value A of the input signal IS and the value B of the unsharp signal US, the value C that is obtained from Eq. M14 may be saturated. That is, it may exceed the maximum value of 255 that can be expressed with 8 bits. In this case, the element of the profile data corresponding to the value A of the input signal IS and the value B of the unsharp signal US may be set to the value 255. In Fig. 5, each element of the profile data found in this manner is shown by a contour line.

Non-linear profile data are described in more specific detail in the section <Profile Data> below.

(5)

It is also possible for the profile data of the two-dimensional LUT 4 to include a plurality of gradation transformation curves (gamma curves) for correcting the gradation of the input signal IS.

Each gradation transformation curve is a monotonously increasing function such as a gamma function that has different gamma coefficients, and is associated with the value of the unsharp signal US. This association is performed such that gamma functions having large gamma coefficients are selected for the values of small unsharp signals US, for example. Thus, the unsharp signal US can function as a selection signal for selecting at least one gradation transformation curve from the gradation transformation curve group included in the profile data.

According to the above configuration, the gradation of the value A of the input signal IS is transformed using a gradation transformation curve that has been selected by the value B of the unsharp signal US.

It should be noted that it is also possible to interpolate the output of the two-dimensional LUT 4 as described in (2) above.

(6)

It was explained above that the profile data registration device 8 is provided in or connected to the visual processing device 1, stores data of a plurality of profiles created in advance by a PC or the like, and can be used to change the content registered to the two-dimensional LUT 4.

Here, the profile data stored in the profile data registration device 8 are created by a PC that is disposed outside of the visual processing device 1. The profile data registration device 8 obtains the profile data from the PC over a network or via a recording medium.

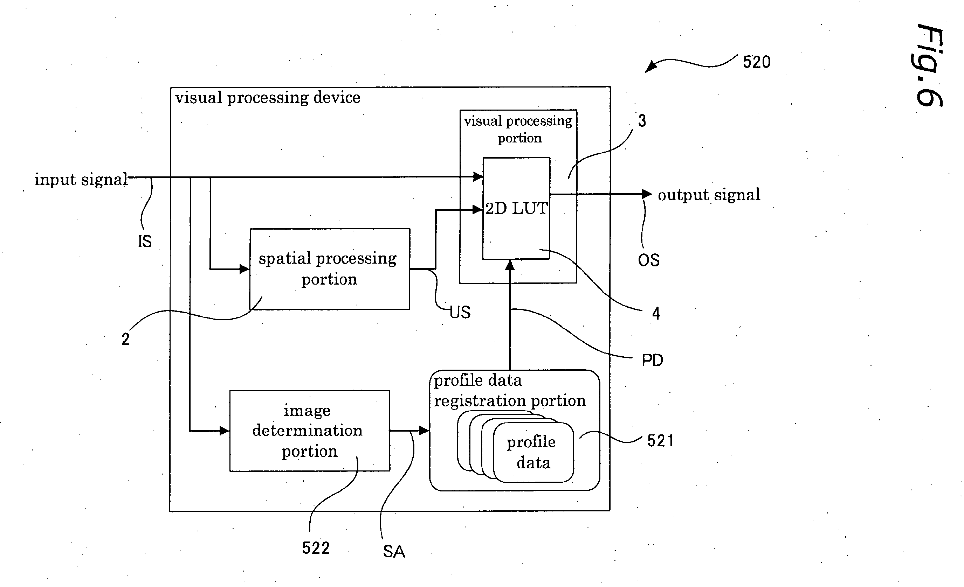

The profile data registration device 8 registers data of a plurality of profiles to be stored to the two-dimensional LUT 4 in accordance with a predetermined condition. This is described in greater detail using Figs. 6 to 8. It should be noted that portions having substantially the same function as in the visual processing device 1, which was described above using Fig. 1, are assigned identical reference numerals and further description thereof is omitted.

<<1>>

Fig. 6 is a block diagram of a visual processing device 520 that determines the image of an input signal IS, and based on the results of this determination, switches the profile data registered to the two-dimensional LUT 4.

The visual processing device 520, in addition to the same structural components as the visual processing device 1 shown in Fig. 1, also has a profile data registration portion 521 that has the same function as the profile data registration device 8. The visual processing device 520 is further provided with an image determination portion 522.

The image determination portion 522 receives an input signal IS and outputs determination results SA of the input signal IS. The profile data registration portion 521 receives the determination results SA and outputs profile data PD selected based on those determination results SA.

The image determination portion 522 determines the image of the input signal IS. In this determination of the image, the brightness of the input signal IS is determined by obtaining a pixel value such as the luminance or the brightness of the input signal IS.

The profile data registration portion 521 obtains the determination results SA, and based on these determination results SA, it switches the profile data PD and outputs the result. More specifically, if the input signal IS is determined to be bright, then profile data that compress the dynamic range, for example, are selected. By doing this, the contrast can be maintained even for images that are bright overall. Also, a profile with an output signal OS having a suitable dynamic range for the characteristics of the device that will display the output signal OS is selected.

Thus, the visual processing device 520 is capable of suitably visually processing an input signal IS.

It should be noted that it is also possible for the image determination portion 522 to determine an image characteristic, such as the spatial frequency, in addition to a pixel value such as the luminance or the brightness of the input signal IS.

In this case, it is possible to achieve more suitable visual processing, such as the selection of a profile that leads to a higher degree of sharpness enhancement with respect to an input signal IS whose spatial frequency is low.

<<2>>

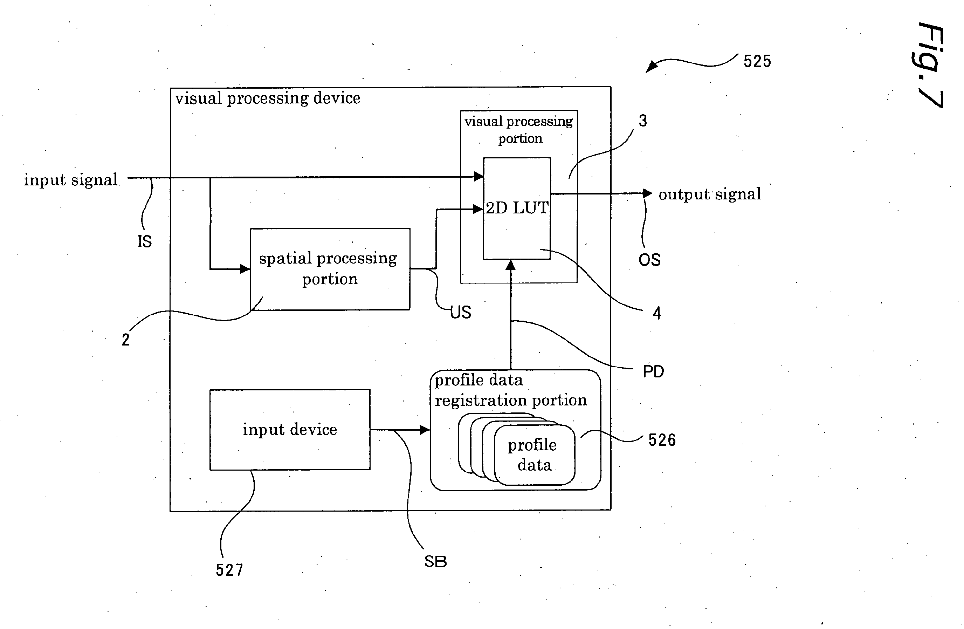

Fig. 7 is a block diagram of a visual processing device 525 that switches the profile data registered to the two-dimensional LUT 4 based on the results of an input from an input device for inputting conditions relating to the brightness.

The visual processing device 525, in addition to the same structural components as the visual processing device 1 shown in Fig. 1, also is provided with a profile data registration portion 526 that has the same function as the profile data registration device 8. The visual processing device 525 is provided with an input device 527 to which it is connected through a wired or a wireless connection. More specifically, the input device 527 can be achieved for example by an input button provided on, or remote control for, a device that handles images, such as a computer, a television, a digital camera, a portable telephone, a PDA, a printer, or a scanner, that outputs an output signal OS.

The input device 527 is an input device for inputting conditions related to the brightness, and for example is provided with switches such as "bright" and "dark." The input device 527 outputs the input results SB through control by a user.

The profile data registration portion 526 obtains the input results SB, and based on the input results SB switches the profile data PD and outputs the result. More specifically, for example if the user has input "bright," then a profile for compressing the dynamic range of the input signal IS, for example, is selected and this is output as the profile data PD. Thus, the contrast can be maintained even if the device for displaying the output signal OS has been placed in a "bright" environment.

Thus, with the visual processing device 525, it is possible to attain suitable visual processing that is in accordance with the input from the input device 527.

It should be noted that the conditions related to the brightness can be not only the conditions related to the brightness of the ambient light around the medium that will output the output signal, such as a computer, digital camera, portable telephone, or PDA, but also can be the conditions related to the brightness of the medium itself to which the output signal will be output, such as the printer paper. The conditions can also be related to the brightness of the medium by which the input signal is received, such as the scanner paper.

It is also possible for these conditions to be automatically input by a photo sensor, for example, instead of only being input through a switch or the like.

It should be noted that it is also possible for the input device 527 to be a device that directly causes the profile data registration portion 526 to change the profile rather than a device that simply inputs conditions related to brightness. In this case, the input device 527 can display a list of the profile data in addition to the conditions to the related to the brightness, and have the user make a selection from among these.

By doing this, the user can perform visual processing that suits his personal tastes.

It should be noted that the input device 527 can also be a device for authenticating the user. In this case, the input device 527 can be a device such as a camera that authenticates the user or a device through which the user inputs his or her user name.

For example, if the user indicates through the input device 527 that he or she is a child, then profile data for inhibiting extreme luminance changes, for example, are selected.

Visual processing that is suited for the user thus can be achieved.

<<3>>

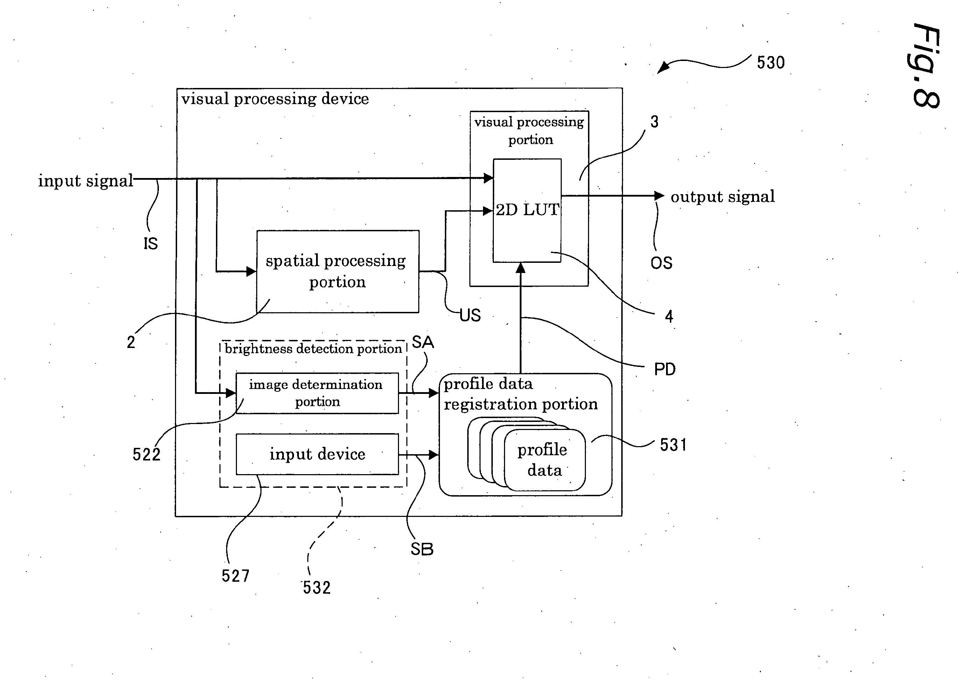

Fig. 8 is a block diagram of a visual processing device 530 that switches the profile data registered to the two-dimensional LUT 4 based on the detection results from a luminance detection portion for detecting two types of brightness.

The visual processing device 530, in addition to the same structural components as the visual processing device 1 shown in Fig. 1, also has a profile data registration portion 531 that has the same function as the profile data registration device 8. The visual processing device 530 is further provided with a brightness detection portion 532.

The brightness detection portion 532 comprises the image determination portion 522 and the input device 527. The image determination portion 522 and the input device 527 are the same as those described using Figs. 6 and 7. Thus, the brightness detection portion 532 receives the input signal IS as input, and outputs the determination results SA from the image determination portion 522 and the input results SB from the input device 527 as detection results.

The profile data registration portion 531 receives the determination results SA and the input results SB as input, and based on the determination results SA and the input results SB, switches the profile data PD and outputs the result. More specifically, for example if the ambient light is "bright" and it also has been determined that the input signal IS is bright, then a profile that compresses the dynamic range of the input signal IS, for example, is selected and this is output as the profile data PD. Thus, the contrast can be maintained when the output signal OS is displayed.

Thus, with the visual processing device 530, it is possible to achieve suitable visual processing.

<<4>>

In the visual processing devices of Figs. 6 to 8, it is not necessary to provide the profile data registration portion in a single unit with the visual processing device. More specifically, the profile data registration portions can be connected to the visual processing devices over a network as a server provided with a plurality of profile data sets or as a plurality of servers each provided with profile data. Here, the network is a wired or wireless connection means that is capable of communication, such as a dedicated telephone line, a public telephone line, the Internet, or a LAN. In this case, the determination results SA and the input results SB both are transferred from the visual processing device side to the profile data registration portion side over the same network.

(7)

In the above embodiment, it was explained that the profile data registration device 8 is provided with a plurality of profile data sets, and different visual processing was achieved by switching which of these is registered to the two-dimensional LUT 4.

Here, it is also possible for the visual processing device 1 to be provided with a plurality of two-dimensional LUT, each being provided with profile data for achieving a different visual processing. In this case, the visual processing device 1 achieves different visual processing by switching which of the two-dimensional LUTs receives the input or by switching which of the two-dimensional LUTs to receive the output from.

In this case, the memory capacity that must be secured for the two-dimensional LUT increases, but the time required for switching between the different visual processing types can be shortened.

It is also possible for the profile data registration device 8 to be provided with a device that creates new profile data based on data of a plurality of profiles and registers the profile data that are created to the two-dimensional LUT 4.

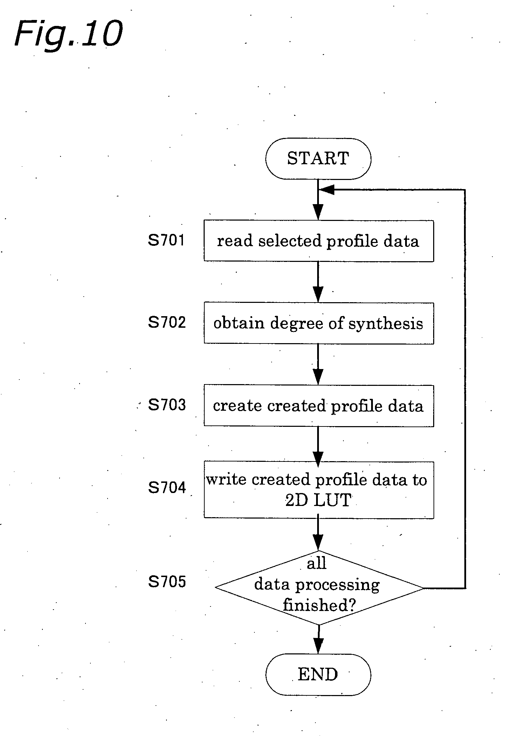

This implementation is described using Figs. 9 and 10.

Fig. 9 is a block diagram that primarily illustrates a profile data registration device 701, as a modified example of the profile data registration device 8. The profile data registration device 701 is a device for switching the profile data that are registered to the two-dimensional LUT 4 of the visual processing device 1.

The profile data registration device 701 comprises a profile data registration portion 702 to which a plurality of profile data sets are registered, a profile creation execution portion 703 that creates new profile data based on the data of a plurality of profiles, a parameter input portion 706 for inputting parameters with which to create new profile data, and a control portion 705 that controls these portions.

Data of a plurality of profiles are registered to the profile data registration portion 702 as in the profile data registration device 8 or the profile data registration portions shown in Fig. 6 to Fig. 8, and the profile data that have been selected through a control signal C10 from the control portion 705 are read out. Here, data of two selected profiles are read out from the profile data registration portion 702, namely first selected profile data d10 and second selected profile data d11.

The profile data that are read from the profile data registration portion 702 are determined based on input from the parameter input portion 706. The parameter input portion 706, either manually or automatically from a sensor or the like, receives the desired visual processing effect, the degree of that processing, or information relating to the viewing environment of the image to be processed, as a parameter. From the parameter input by the parameter input portion 706, the control portion 705 specifies the profile data to be read out with a control signal c10 and also specifies the value of the degree of synthesis of the respective profile data using a control signal c12.

The profile creation execution portion 703 is provided with a profile creation portion 704 that produces a created profile data d6, which are new profile data, from the first selected profile data d10 and the second selected profile data d11.

The profile creation portion 704 obtains the first selected profile data d10 and the second selected profile data d11 from the profile data registration portion 702. It also obtains the control signal c12, which specifies the degree of synthesis of the respective selected profile data, from the control portion 705.

The profile creation portion 704 then applies the value [k] of the degree of synthesis specified by the control signal c12 to a value [m] of the first selected profile data d10 and a value [n] of the second selected profile data d11 to create created profile data d6 having a value [1]. Here, the value [1] is calculated by [1] = (1-k)* [m]+k * [n]. It should be noted that if the value [k] is $0 \leq k \leq 1$, then the first selected profile data d10 and the second selected profile data d11 are interpolated, and if the value [k] is k<0 or k>1, then the first selected profile data d10 and the second selected profile data d11 are extrapolated.

The two-dimensional LUT 4 obtains the created profile data d6 created by the profile creation portion 704 and stores the obtained value in an address that is specified by a count signal c11 of the control portion 705. Here, the created profile data d6 are associated with the same image signal value as the selected profile data that were used to create the created profile data d6.

Thus, profile data that achieve different visual processing can be used to create new profile data that achieve yet different visual processing.

The visual processing profile creation method that is executed by the visual processing device provided with the profile data registration device 701 is described using Fig. 10.

The address of the profile data registration portion 702 is specified at a fixed count period by a count signal c10 from the control portion 705, and the image signal value that is stored in the specified address is read out (step S701). More specifically, the control portion 705 outputs a count signal c10 in correspondence with a parameter that has been input by the parameter input portion 706. The count signal c10 specifies the addresses of two profile data, each of which achieves different visual processing, in the profile data registration portion 702. From this signal, the first selected profile data d10 and the second selected profile data d11 are read from the profile data registration portion 702.

The profile creation portion 704 obtains the control signal c12, which specifies the degree of synthesis, from the control portion 705 (step S702).

The profile creation portion 704 then applies the value [k] of the degree of synthesis specified by the control signal c12 to the value [m] of the first selected profile data d10 and the value [n] of the second selected profile data d11 to create a created profile data d6 having the value [1] (step S703). Here, the value [1] is calculated by [1] = (1-k) ∗ [m]+k ∗ [n].

The created profile data d6 are written to the two-dimensional LUT 4 (step S704). The address to which the data are written is specified by a count signal c11 from the control portion 705 that is given to the two-dimensional LUT 4.

The control portion 705 determines whether or not processing has finished for all of the selected profile data (step S705), and repeats the processes of step S701 to step S705 until this processing is finished.

The new profile data stored in the two-dimensional LUT 4 in this manner are then used to execute visual processing.

«Effect of (7)»

With the visual processing device provided with the profile data registration device 701, profile data that achieve different visual processing can be used to create new profile data that achieve yet different visual processing, and this visual processing can be performed. That is, it is possible to achieve visual processing to any degree simply by providing the profile data registration portion 702 with a small number of profile data, and thus the memory capacity of the profile data registration portion 702 can be reduced.

It should be noted that the profile data registration device 701 can be provided not only in the visual processing device 1 shown in Fig. 1, but also in any of the visual processing devices of Figs. 6 to 8. In this case, the profile data registration portion 702 and the profile creation execution portion 703 are used in place of the profile data registration portions 521, 526, and 531 shown in Figs. 6 to 8, respectively, and the parameter input portion 706 and the control portion 705 are used in place of the image determination portion 522 of Fig. 6, the input device 527 of Fig. 7, and the brightness detection portion 532 of Fig. 8.

(8)

The visual processing device can also be a device that transforms the brightness of the input signal IS. A visual processing device 901 that transforms the brightness is described using Fig. 11.

«Configuration»

The visual processing device 901 is a device that transforms the brightness of an input signal IS', and includes a processing portion 902 that performs a predetermined processing with respect to the input signal IS' and outputs a processed signal US', and a transformation portion 903 that uses the input signal IS' and the processed signal US' to perform transformation of the input signal IS'.

The processing portion 902 operates in the same manner as the spatial processing portion 2 (see Fig. 1), and performs spatial processing of the input signal IS'. It should be noted that it can also perform spatial processing such as that discussed in the above <Modified Example> (3).

The transformation portion 903 is provided with a two-dimensional LUT like the visual processing portion 3 and outputs an output signal OS' (value [y]) based on the input signal IS' (value [x]) and the processed signal US' (value [z]).

Here, the values of the elements of the two-dimensional LUT of the transformation portion 903 are determined by applying the value [x] of the input signal IS' to gain or offset that has been determined in correspondence with the value of the function fk(z), which is related to the extent of change in brightness. The function fk(z) related to the extent of change in brightness is hereinafter referred to as the "extent change function."

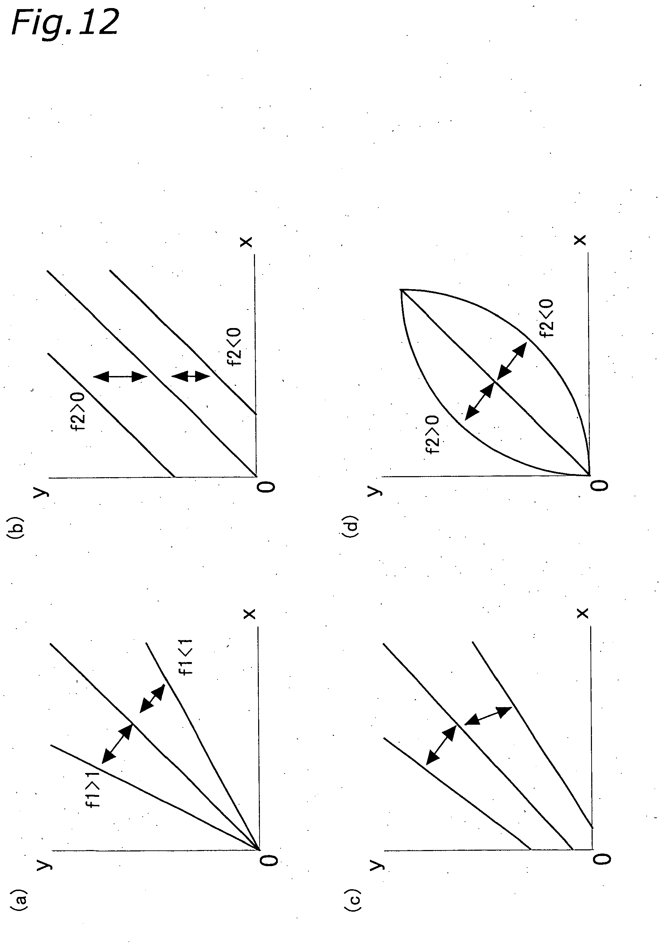

The value of each element of the two-dimensional LUT (=the value [y] of the output signal OS') is determined according to a function relating the value [x] of the input signal IS' and the value [z] of the processed signal US'. Hereinafter, this function is referred to as a "transformation function," and the transformation functions (a) to (d) are examples thereof. Figs. 12(a) to (d) show the relationship between the input signal IS' and the output signal OS' when the extent change function fk(z) has been changed.

«Regarding the Transformation Function (a)»

The transformation function (a) is expressed as [y] = f1(z) ∗ [x].
Here, the extent change function f1(z) acts as gain of the input signal IS'. Thus, the gain of the input signal IS' changes depending on the value of the extent change function f1(z), and this changes the value [y] of the output signal OS'.
Fig. 12(a) shows the change in the relationship between the input signal IS' and the output signal OS' for various values of the extent change function f1(z).
The value [y] of the output signal increases as the extent change function f1(z) becomes larger (f1(z)>1). That is, the image after transformation becomes brighter. On the other hand, the value [y] of the output signal decreases as the extent change function f1(z) becomes smaller (f1(z)<1). That is, the image after transformation becomes darker.
Here, the extent change function f1(z) is a function in which the smallest value in the defined domain of the value [z] does not become less than [0].
If due to the computation of the transformation function (a) the value [y] of the output signal is outside the valid range of values, then it may be clipped to the valid range of values. For example, if the value [y] of the output signal exceeds the value [1], then it is possible to clip it to the value [1], and if the value [y] of the output signal is below the value [0], then it can be clipped to the value [0]. This also applies to the other transformation functions (b) through (d) discussed below.

«Regarding the Transformation Function (b)»

The transformation function (b) is expressed as [y] = [x] + f2(z).
Here, the extent change function f2(z) acts as offset of the input signal IS'. Thus, the offset of the input signal IS' changes depending on the value of the extent change function f2(z), and this changes the value [y] of the output signal OS'.
Fig. 12(b) shows the change in the relationship between the input signal IS' and the output signal OS' when the value of the extent change function f2(z) is changed.
The value [y] of the output signal increases as the extent change function f2(z) becomes larger (f2(z)>0). That is, the image after transformation becomes brighter. On the other hand, the value [y] of the output signal decreases as the extent change function f2(z) becomes smaller (f2(z)<0). That is, the image after transformation becomes darker.

«Regarding the Transformation Function (c)»

The transformation function (c) is expressed as [y] = f1(z) ∗ [x] + f2(z).
Here, the extent change function f1(z) acts as gain of the input signal IS'. The extent change function f2(z) also acts as offset of the input signal IS'. Thus, the gain of the input signal IS' changes depending on the value of the extent change function f1(z), and the offset of the input signal IS' changes depending on the value of the extent change function f2(z), and this changes the value [y] of the output signal OS'.
Fig. 12(c) shows the change in the relationship between the input signal IS' and the output signal OS' when the values of the extent change function f1(z) and the extent change function f2(z) are changed.
The value [y] of the output signal increases as the extent change function f1(z) and the extent change function f2(z) become larger. That is, the image after transformation becomes brighter. On the other hand, the value [y] of the output signal decreases as the extent change function f1(z) and the extent change function f2(z) become smaller. That is, the image after transformation becomes darker.

<<Regarding the Transformation Function (d)>>

The transformation function (d) is expressed as [y] = [x] ^(1-f2(z)).
Here, the extent change function f2(z) determines the "power" of the "power function." Thus, the input signal IS' changes depending on the value of the extent change function f2(z), and this changes the value [y] of the output signal OS'.
Fig. 12(d) shows the change in the relationship between the input signal IS' and the output signal OS' when the value of the extent change function f2(z) is changed.

The value [y] of the output signal increases as the extent change function f2(z) becomes larger (f2(z)>0). That is, the image after transformation becomes brighter. On the other hand, the value [y] of the output signal decreases as the extent change function f2(z) becomes smaller (f2(z)<0). That is, the image after transformation becomes darker. If the extent change function f2(z) is the value [0], then transformation with respect to the input signal IS' is not performed.

It should be noted that the value [x] is a value obtained by normalizing the value of the input signal IS' to the range of [0] to [1].

<<Effect>>

(1)

With the visual processing device 901, visual processing of the input signal IS' is performed in accordance with a two-dimensional LUT that has elements that have been determined using one of the transformation functions (a) to (d) shown above. Each element of the two-dimensional LUT stores a value [y] with respect to a value [x] and a value [z]. Thus, it is possible to achieve viewing angle processing in which the brightness of the input signal IS' is transformed based on the input signal IS' and the processed signal US'.

(2)

Here, if the extent change function f1(z) and the extent change function f2(z) are both functions that decrease monotonically, then it is also possible to achieve the effect of backlight correction or to prevent blooming, for example. This is described in greater detail below.

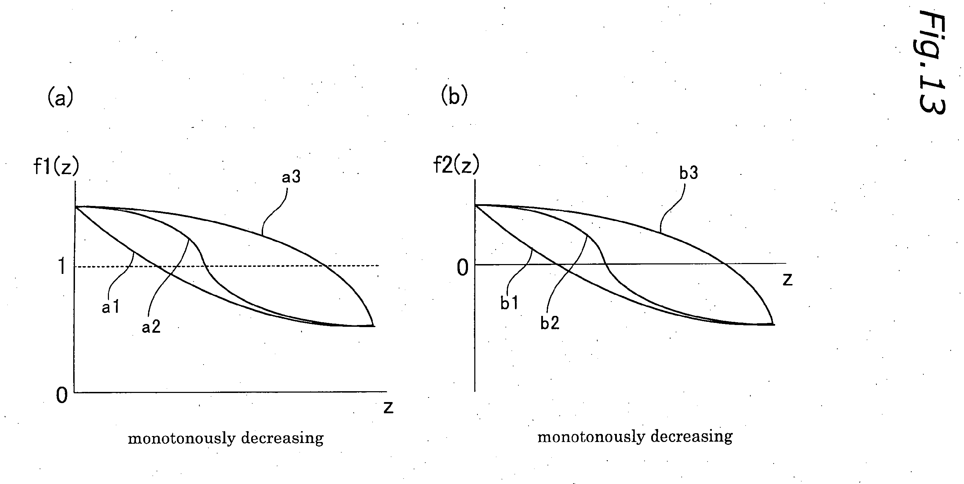

Figs. 13(a) and (b) show examples in which the extent change function f1(z) and the extent change function f2(z) both decrease monotonically. Each shows three graphs (al to a3, bl to b3), and each of these graphs is an example of a function that decreases monotonically.

The extent change function f1(z) is a function that has a value range that spans the value [1], and is a function in which the minimum value with respect to the defined range of the value [z] is not less than the value [0]. The extent change function f2(z) is a function that has a value range that spans the value [0].

For example, in portions in the image in which the area of darkness is large, the value [z] of the processed signal US' is small. The value of the extent change function for a small value [z] is large. That is, when a two-dimensional LUT that has been created based on a transformation function (a) through (d) is used, then portions in the image in which the area of darkness is large are made brighter. Thus, for example in an image that is captured with backlight, the dark portions are fixed in sections in which the area of darkness is large, and this improves the visual effect.

Also, for example in portions in the image in which the area of brightness is large, the value [z] of the processed signal US' is large. The value of the extent change function for a large value [z] is small. That is, when a two-dimensional LUT that has been created based on a transformation function (a) through (d) is used, portions in the image in which the area of brightness is large are made darker. Thus, for example in an image having bright portions such as the sky, blooming is fixed in the portions in which the area of brightness is large, and this improves the visual effect.

«<Modified Examples»>

(1)

The transformation functions described above are only examples, and any functions are possible as long as transformation having the same characteristics is achieved.

(2)

It is not absolutely necessary that the value of each element of the two-dimensional LUT is determined by a transformation function discussed above.

For example, if the value of the above transformation functions is outside the range of values that can be adopted as the output signal OS', then the two-dimensional LUT can store values that have been clipped to a range of values that can be adopted as the output signal OS'.

(3)

It is also possible to perform the same processing as discussed above without using a two-dimensional LUT. For example, it is also possible for the transformation portion 903 to execute the transformation functions (a) to (d) with respect to the input signal IS' and the processed signal US' and output the result as the output signal OS'.

(9)

It is also possible for the visual processing device to be provided with a plurality of spatial processing portions and for it to perform visual processing using a plurality of unsharp signals each spatially processed to a different degree.

«Configuration»

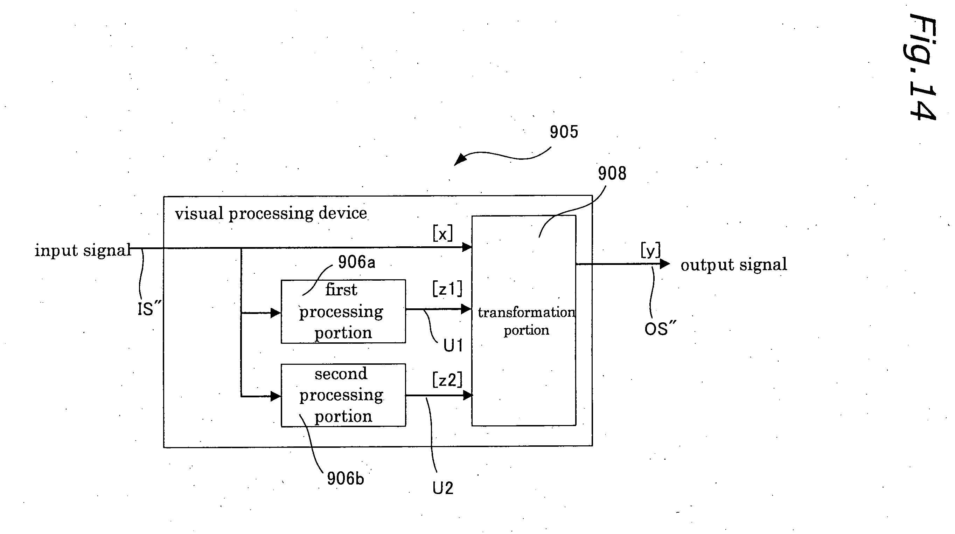

Fig. 14 shows the configuration of a visual processing device 905. The visual processing device 905 is a device that performs visual processing of an input signal IS", and comprises a first processing portion 906a that performs a first predetermined processing with respect to the input signal IS" and outputs a first processed signal U1, a second processing portion 906b that performs a second predetermined processing with respect to the input signal IS" and outputs a second processed signal U2, and a transformation portion 908 that uses the input signal IS", the first processed signal U1, and the second processed signal U2 to perform transformation of the input signal IS".

The first processing portion 906a and the second processing portion 906b both operate in the same manner as the spatial processing portion 2 (see Fig. 1), and perform spatial processing of the input signal IS". It should be noted that it is also possible for them to perform spatial processing such as that described in the <Modified Example> (3) above.

Here, the first processing portion 906a and the second processing portion 906b differ in the size of the region of the surrounding pixels that are used for the spatial processing.

More specifically, the first processing portion 906a uses the surrounding pixels that are included in a region of 30 pixels vertically by 30 pixels horizontally with the target pixel in the center (small unsharp signal), whereas the second processing portion 906b uses the surrounding pixels that are included in the region of 90 pixels vertically by 90 pixels horizontally with the target pixel in the center (large unsharp signal). It should be noted that the region of surrounding pixels that is described here is only one example, and there is no limitation to this. It is preferable that the unsharp signal is created from a fairly wide region in order to obtain a sufficient visual processing effect.

The transformation portion 908 is provided with a LUT, and outputs an output signal OS" (value [y]) based on the input signal IS" (value [x]), the first processed signal U1 (value [z1]), and the second processed signal U2 (value [z2]).

Here, the LUT that the transformation portion 903 is provided with is a three-dimensional LUT that stores values [y] of the output signal OS" with respect to the values [x] of the input signal IS", the values [z1] of the first processed signal U1, and the values [z2] of the second processed signal U2. The value of each element of this three-dimensional LUT (= the values [y] of the output signal OS") is determined based on a function of the value [x] of the input signal IS', the value [z1] of the first processed signal U1, and the value [z2] of the second processed signal U2.

This three-dimensional LUT is capable of achieving the processing discussed in the above-described and later-described embodiments, but here the three-dimensional LUT is described for the «Case of Transforming the Brightness of the Input Signal IS"» and the «Case of Enhancement Transformation of the Input Signal IS"». «Case of Transforming the Brightness of the Input Signal IS"»

The transformation portion 908 performs a transformation to brighten the input signal IS" if the value [z1] of the first processed signal U1 is small. However, the extent to which it is brightened is kept low if the value [z2] of the second processed signal US also is small.

As examples of this transformation, the value of each element of the three-dimensional LUT of the transformation portion 903 is determined based on the following transformation function (e) or (f).

(Regarding the Transformation Function (e))

The transformation function (e) is expressed by $[y] = [f11(z1)/f12(z2)] * [x]$.

Here, the extent change functions $f11(z1)$ and $f12(z2)$ are the same function as the extent change function $f1(z)$ described in <Modified Example> (8) above. The extent change function $f11(z1)$ and the extent change function $f12(z2)$ are different functions.

Thus, $[f11(z1)/f12(z2)]$ acts as the gain of the input signal IS", and the gain of the input signal IS" changes in accordance with the value of the first processed signal U1 and the value of the second processed signal U2, and this changes the value [y] of the output signal OS".

(Regarding the Transformation Function (f))

$$\text{The transformation function (f) is expressed by } [y] = [x] + f21(z1) - f22(z2).$$

Here, the extent change functions f21(z1) and f22(z2) are the same function as the extent change function f2(z) described in <Modified Example> (8) above. The extent change function f21(z1) and the extent change function f22(z2) are different functions.
Thus, [f21(z1) - f22(z2)] acts as the offset of the input signal IS", and the offset of the input signal IS" changes in accordance with the value of the first processed signal U1 and the value of the second processed signal U2, and this changes the value [y] of the output signal OS".

(Effect)

Through transformation using the transformation functions (e) and (f), it is possible to achieve the effect of brightening dark areas in regions having a small area of backlight while keeping the large dark area region of nighttime images from being brightened too much.

(Modified Example)

It should be noted that the processing by the transformation portion 908 is not limited to processing using a three-dimensional LUT, and it can also be processing in which the same computations as those of the transformation functions (e) or (f), for example, are performed.
Also, it is not absolutely necessary that the elements of the three-dimensional LUT are determined based on the transformation functions (e) or (f).

<<Case of Enhancement Transformation of the Input Signal IS">>

If the transformation by the transformation portion 908 is transformation that enhances the input signal IS", then it is possible to independently enhance a plurality of frequency components.
In the case of a transformation further enhancing the first processed signal U1, it is possible to enhance dark portions in which the frequency is relatively high, whereas in the case of a transformation further enhancing the second processed signal U2, it is possible to enhance dark portions in which the frequency is low.

<Profile Data>

The visual processing device 1 can also be provided with profile data for achieving various types of visual processing other than that described above. First through seventh profile data for achieving various types of visual processing are described below, for each showing the equation that characterizes the profile data and the structure of a visual processing device that achieves visual processing that is equivalent to the visual processing device 1 provided with those profile data.
Each set of profile data is determined based on a mathematical equation that includes a computation for enhancing the values calculated from the input signal IS and the unsharp signal US: Here, this computation for enhancing is a computation that is achieved by a non-linear enhancement function, for example.
Thus, with each set of profile data, it is possible to achieve enhancement that is suited for the visual characteristics of the input signal IS or enhancement that is suited for the non-linear characteristics of the device that will output the output signal OS.

(1)

<<First Profile Data>>

The first profile data are determined in accordance with a computation that includes a function for enhancing the difference between the respective transformed values that are obtained by performing a predetermined transformation with respect to the input signal IS and the unsharp signal US. By doing this, it becomes possible to enhance the respective differences after transforming the input signal IS and the unsharp signal US in separate spaces. Thus, it is possible to achieve enhancement that is suited for the visual characteristics, for example.

Hereinafter, this will be described in more detail.

The values C of the elements of the first profile data (the value of the output signal OS) are expressed by C = F2(F1(A)+F3(F1(A)-F1(B))) (hereinafter, this is referred to as Equation M1) using the value A of the input signal IS, the value B of the unsharp signal US, the transformation function F1, the inverse transformation function F2 of the transformation function, and an enhancement function F3.

Here, the transformation function F1 is a common logarithmic function. The inverse transformation function F2 is an exponential function (antilog) that functions as the inverse function of the common logarithmic function. The enhancement function F3 is any of the enhancement functions R1 to R3 explained using Fig. 49.

<<Equivalent Visual Processing Device 11>>

Fig. 15 shows a visual processing device 11 that is equivalent to the visual processing device 1 in which the first profile data have been registered to the two-dimensional LUT 4.

The visual processing device 11 is a device that outputs an output signal OS based on a computation that enhances the differences in the transformed values of the input signal IS and the unsharp signal US after the two have been subjected to a predetermined transformation. Thus, the input signal IS and the unsharp signal US are transformed to separate spaces and their respective differences are enhanced, and this allows for example enhancement that is suited for the visual characteristics to be achieved.

The visual processing device 11 shown in Fig. 15 is provided with a spatial processing portion 12 that performs spatial processing on the luminance of each pixel of an original image that it has obtained as an input signal IS and outputs an unsharp signal US, and a visual processing portion 13 that uses the input signal IS and the unsharp signal US to perform visual processing of the original image and outputs an output signal OS.

The spatial processing portion 12 performs the same operation as the spatial processing portion 2 of the visual processing device 1, and thus its further description is omitted.

The visual processing portion 13 is provided with a signal space transformation portion 14 that performs transformation of the signal space of the input signal IS and the unsharp signal US and outputs a transformed input signal TIS and a transformed unsharp signal TUS, a subtracting portion 17 that receives the transformed input signal TIS as a first input and the transformed unsharp signal TUS as a second input and outputs a difference signal DS of the difference between the two, an enhancing portion 18 that receives the difference signal DS as input and outputs an enhanced signal TS that has been enhanced, a summing portion 19 that receives the transformed input signal TIS as a first input and the enhanced signal TS as a second input and sums the two to obtain a summed signal PS that it then outputs, and an inverse transformation portion 20 that receives the summed signal PS as an input and outputs an output signal OS.

The signal space transformation portion 14 further includes a first transformation portion 15 that receives the input signal IS as input and outputs the transformed input signal TIS, and a second transformation portion 16 that receives the unsharp signal US as input and outputs the transformed unsharp signal TUS.

<<Action of the Equivalent Visual Processing Device 11>>

The operation of the visual processing portion 13 is described in further detail below.

The first transformation portion 15 uses the transformation function F1 to transform the input signal, which has the value A, to the transformed input signal TIS, which has the value F1(A). The second transformation portion 16 uses the transformation function F1 to transform the unsharp signal US, which has the value B, to the transformed unsharp signal TUS, which has the value F1(B). The subtracting portion 17 calculates the difference between the transformed input signal TIS having the value F1(A) and the transformed unsharp signal TUS having the value F1(B) and outputs a difference signal DS having the value F1(A) - F1(B). The enhancing portion 18 uses the enhancement function F3 to output an enhanced signal TS having a value F3(F1(A) - F1(B)) from the difference signal DS of the value F1(A) - F1(B). The summing portion 19 takes the sum of the transformed input signal TIS having the value F1(A) and the enhanced signal TS having the value F3(F1(A) - F1(B)) and outputs a summed signal PS that has a value F1(A)+ F3(F1(A) - F1(B)). The inverse transformation portion 20 uses the inverse transformation function F2 to perform inverse transformation of the summed signal PS having the value F1(A) + F3(F1(A) - F1(B)), and outputs an output signal OS having the value F2(F1(A) + F3(F1(A) - F1(B))).

It should be noted that the calculations using the transformation function F1, the inverse transformation function F2, and the enhancement function F3 each can be performed using a one-dimensional LUT for that function, or can be performed without using a LUT.

«Effects»

The visual processing device 11 and the visual processing device 1 provided with the first profile data attain the same visual processing effects.

(i)

Visual processing using the transformed input signal TIS and the transformed unsharp signal TUS, which were transformed to logarithmic space by the transformation function F1, is achieved. Human visual characteristics are logarithmic, and visual processing that is suited for our visual characteristics is achieved by performing processing after transforming to logarithmic space.

(ii)

With each of these visual processing devices, contrast enhancement in the logarithmic space is achieved.
The conventional visual processing device 400 shown in Fig. 48 is used for performing edge enhancement using the unsharp signal US, which generally has a small degree of blur. However, if the visual processing device 400 performs contrast enhancement using an unsharp signal US that has a large degree of blur, then bright portions in the original image are not enhanced enough and dark portions in the original image are enhanced too much, resulting in visual processing that is not suited for our visual characteristics. That is, the visual processing device 400 has a tendency for insufficient enhancement when correcting by increasing the brightness and too much enhancement when correcting by increasing the darkness.
On the other hand, if visual processing is performed using the visual processing device 1 or the visual processing device 11, it is possible to perform visual processing that is suited for our visual characteristics over a range that spans dark and light areas, and enhancement for increased brightness and enhancement for increased darkness can be performed with good balance.

(iii)

With the conventional visual processing device 400, there are cases where the output signal OS is negative after visual processing, and fails.
On the other hand, if the value C of a particular element of the profile data found with Eq. M1 is outside of the range 0≤C≤255, then the value of that element can be set to either 0 or 255 in order to prevent the pixel signals after correction from becoming negative and failing or becoming saturated and failing. This can be achieved regardless of the bit length for expressing the elements of the profile data.

«Modified Examples»

(i)

The transformation function F1 is not limited to a logarithmic function. For example, it is also possible for the transformation function F1 to achieve transformation that removes the gamma correction (for example, a gamma coefficient of "0.45") that is applied to the input signal IS, and for the inverse transformation function F2 to achieve transformation that applies the gamma correction that has been applied to the input signal IS.
The gamma correction that is applied to the input signal IS can thus be removed so as to perform processing under linear conditions. Thus, it is possible to correct optical blurring.

(ii)

With the visual processing device 11, it is also possible for the visual processing portion 13 to execute the computation of Eq. M1, without using the two-dimensional LUT 4, according to the input signal IS and the unsharp signal US. In this case, it is possible to use a one-dimensional LUT for the calculations of the functions F1 to F3.

(2)

«Second Profile Data»

The second profile data are determined by a computation that includes a function for enhancing the ratio between the input signal IS and the unsharp signal US. Thus, it is for example possible to achieve visual processing that enhances the sharp component.

Further, the second profile data are determined by a computation in which dynamic range compression is performed with respect to the ratio between the enhanced input signal IS and the unsharp signal US. Thus, it is for example possible to achieve visual processing in which the sharp component is enhanced while the dynamic range is compressed.

This is described in greater detail below.

The values C of the elements of the second profile data (the values of the output signal OS) are expressed by C = F4(A) * F5(A/B) (hereinafter, this is referred to as Equation M2) using the value A of the input signal IS, the value B of the unsharp signal US, a dynamic range compression function F4, and an enhancement function F5.

Here, the dynamic range compression function F4 is for example a monotonously increasing function such as a concave power function. For example, it is expressed by F4(x) = x^γ (0<γ<1). The enhancement function F5 is a power function. It is for example expressed by F5(x) = x^α (0<α≤1).

<<Equivalent Visual Processing Device 21>>

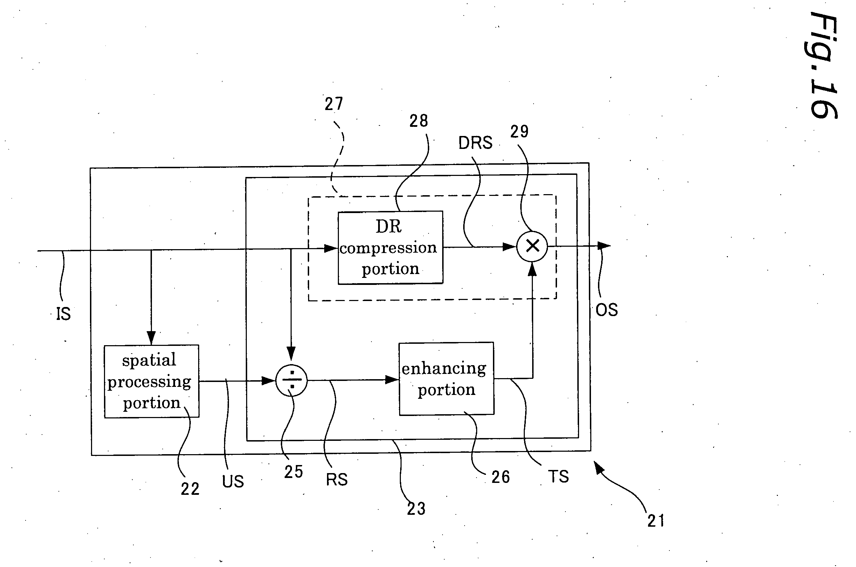

Fig. 16 shows a visual processing device 21 that is equivalent to the visual processing device 1 in which the second profile data have been registered to the two-dimensional LUT 4.

The visual processing device 21 is a device that outputs an output signal OS based on a computation that enhances the ratio between the input IS and the unsharp signal US. Thus, it is for example possible to achieve visual processing for enhancing the sharp component.

The visual processing device 21 also outputs an output signal OS based on a computation in which dynamic range compression is performed with respect to the ratio between the enhanced input signal IS and the unsharp signal US. Thus, it is for example possible to achieve visual processing in which the sharp component is enhanced while the dynamic range is compressed.

The visual processing device 21 shown in Fig. 16 is provided with a spatial processing portion 22 that executes spatial processing on the luminance value of each pixel of an original image that it has obtained as an input signal IS and outputs an unsharp signal US, and a visual processing portion 23 that uses the input signal IS and the unsharp signal US to perform visual processing of the original image and outputs an output signal OS.

The spatial processing portion 22 performs the same operation as the spatial processing portion 2 of the visual processing device 1, and thus it will not be described further.

The visual processing portion 23 is provided with a dividing portion 25 that takes the input signal IS as a first input and the unsharp signal US as a second input, and divides the input signal IS by the unsharp signal US to obtain a divided signal RS that it then outputs, an enhancing portion 26 that receives the divided signal RS as input and outputs an enhanced signal TS, and an output portion 27 that receives the input signal IS as a first input and the enhanced signal TS as a second input and outputs an output signal OS. The output portion 27 is provided with a DR compression portion 28 that receives the input signal IS as input and outputs a DR compressed signal DRS that has been subjected to dynamic range (DR) compression, and a multiplying portion 29 that receives the DR compressed signal DRS as a first input and the enhanced signal TS as a second input and outputs an output signal OS.

«Action of the Equivalent Visual Processing Device 21»

The operation of the visual processing portion 23 is described in further detail below.

The dividing portion 25 divides the input signal IS, which has the value A, by the unsharp signal US, which has the value B, and outputs a divided signal RS having the value A/B. The enhancing portion 26 uses the enhancement function F5 to output an enhanced signal TS having the value F5(A/B) from the divided signal RS having the value A/B. The DR compression portion 28 uses the dynamic range compression function F4 to output a DR compressed signal DRS having the value F4(A) from the input signal IS, whose value is A. The multiplying portion 29 multiplies the DR compressed signal DRS, whose value is F4(A), and the enhanced signal TS, whose value is F5(A/B), and outputs an output signal OS having the value F4(A) ∗ F5(A/B).

It should be noted that the calculations using the dynamic range compression function F4 and the enhancement function F5 can each be performed using a one-dimensional LUT for that function, or can be performed without using a LUT.

«Effects»

The visual processing device 21 and the visual processing device 1 provided with the second profile data achieve the same visual processing effects.

(i)

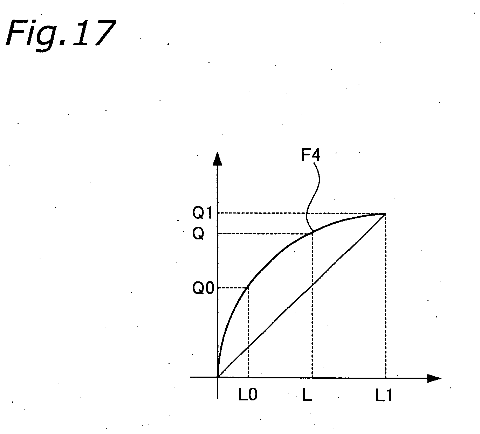

Conventionally, when compressing the overall dynamic range of an image, the dynamic range compression function F4 shown in Fig. 17 is used to compress the grey level from dark portions to highlights without causing saturation. That is, when L0 is the target black level to be reproduced in the image signal before compression and L1 is the maximum white level, then the dynamic range L1:L0 prior to compression is compressed to the dynamic range Q1:Q0 after compression. However, the contrast, which is the ratio of the image signal level, is lowered to $(Q1/Q0) * (L0/L1)$ times its value due to dynamic range compression. Here, the dynamic range compression function F4 is a concave power function, for example.

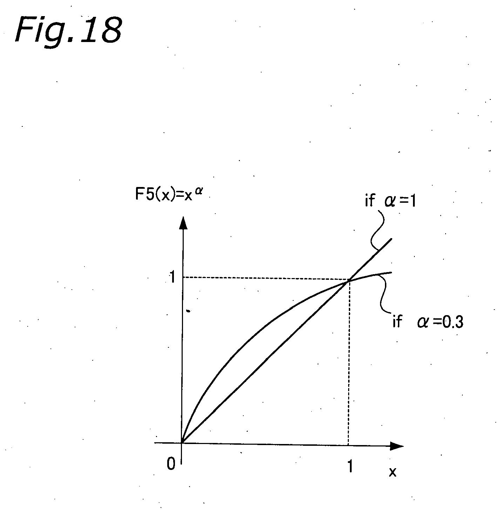

However, with the visual processing device 21 and the visual processing device 1 that has been provided with the second profile data, the divided signal RS having the value A/B, that is, the sharp signal enhanced by the enhancement function F5, is multiplied by the DR compressed signal DRS. The result is that local contrast is enhanced. Here, the enhancement function F5 is a power function such as that shown in Fig. 18 ($F5(x) = x^\alpha$), and leads to enhancement in the bright direction when the value of the divided signal RS is greater than 1 and to enhancement in the dark direction when it is less than 1.

In general, human vision has the characteristic that an image will be viewed at a same contrast as long as local contrast is maintained, even if there is a drop in the overall contrast. Thus, with the visual processing device 21 and the visual processing device 1 that has been provided with the second profile data, it is possible to achieve visual processing with which the dynamic range is compressed but the visual contrast is not lowered.

(ii)

The effects of the present invention are described in further detailed below.

The dynamic range compression function F4 shall be $F4(x) = x^\gamma$ ($\gamma=0.6$). The enhancement function F5 shall be $F5(x) = x^\alpha$ ($\alpha=0.4$). Further, if the maximum white level of the input signal is normalized to 1, then the target black level to be reproduced shall be the value 1/300. That is, the dynamic range of the input signal IS shall be 300:1.

If the dynamic range of this input signal IS is compressed using the dynamic range compression function F4, then the dynamic range after compression becomes F4(1):F4(1/300) = 30:1. That is, the dynamic range is compressed by 1/10 due to the dynamic range compression function F4.

On the other hand, the value C of the output signal OS is expressed by the above equation M2, where C = $(A^{0.6}) * \{(A/B)^{0.4}\}$, that is, $C = A/(B^{0.4})$. Here, in a local range the value of B is regarded as constant and thus C is proportional to A. That is, ratio of the amount of change of the value C and the amount of change of the value A is 1, and the local contrast does not change between the input signal IS and the output signal OS.

As mentioned above, human vision has the characteristic that as long as local contrast is maintained, an object will be viewed at the same contrast even if there is a drop in the overall contrast. Thus, with the visual processing device 21 and the visual processing device 1 that has been provided with the second profile data, it is possible to achieve visual processing with which the dynamic range is compressed but visually the contrast is not lowered.

It should be noted that if the power multiplier $\alpha$ of the enhancement function F5 shown in Fig. 18 is larger than 0.4, then it is possible to raise, the visible contrast of the output signal OS over the input signal IS while performing compression of the dynamic range.

(iii)

Because the above effects can be achieved with the present invention, the invention is particularly useful in the following conditions. That is, it is possible to reproduce a high contrast image on a display having a narrow physical dynamic range without squashing the dark and light areas. It is also possible for example to display high contrast video on a television projector in a bright environment and to obtain a high contrast print using thin inks (on a printer that can print light colors only).

«Modified Examples»

(i)

With the visual processing device 21, it is also possible for the visual processing portion 23 to perform the calculation of Eq. M2 based on the input signal IS and the unsharp signal US without using the two-dimensional LUT 4. In this case, it is possible to use a one-dimensional LUT for the calculation of each of the functions F4 and F5.

(ii)

It should be noted that if the value C of a particular element of the profile data obtained by the Eq. M2 is C>255, then the value C of that element can be regarded as 255.

(3)

«Third Profile Data»

The third profile data are determined based on a computation that includes a function for enhancing the ratio between the input signal IS and the unsharp signal US. Thus, it is for example possible to achieve visual processing that enhances the sharp component.
This is described in further detail below.
In Eq. M2 of the second profile data, it is also possible for the dynamic range compression function F4 to be a direct proportion function of a proportional coefficient 1. In this case, the value C of each element of the third profile data (the value of the output signal OS) is expressed by C = A * F5(A/B) (hereinafter, this is referred to as Equation M3) using the value A of the input signal IS, the value B of the unsharp signal US, and the enhancement function F5.

«Equivalent Visual Processing Device 31»

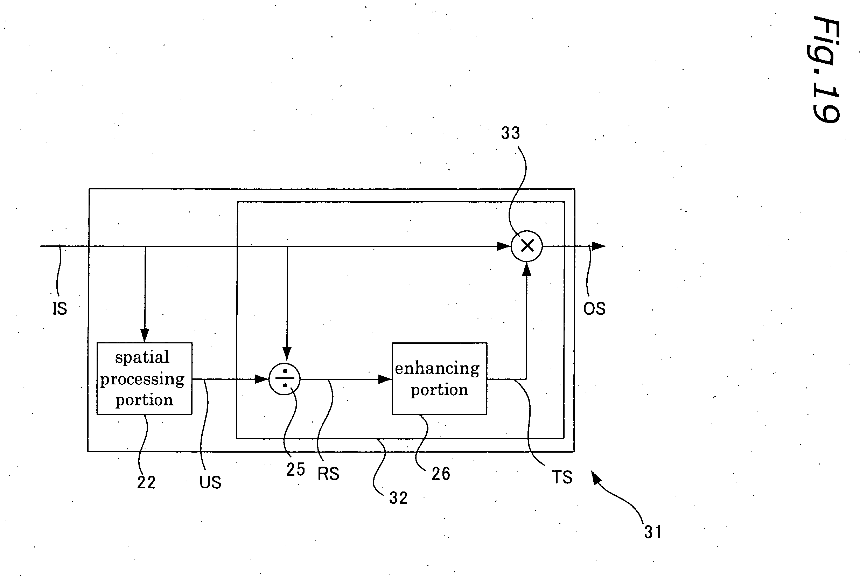

Fig. 19 shows a visual processing device 31 that is equivalent to the visual processing device 1 in which the third profile data have been registered to the two-dimensional LUT 4.
The visual processing device 31 is a device that outputs an output signal OS based on a computation that enhances the ratio between the input IS and the unsharp signal US. Thus, it is for example possible to achieve visual processing for enhancing the sharp component.
The visual processing device 31 shown in Fig. 19 differs from the visual processing device 21 shown in Fig. 16 in that it is not provided with the DR compression portion 28. The visual processing device 31 shown in Fig. 19 is described below, assigning the same reference numerals to and omitting description of portions that perform the same operations as those of the visual processing portion 21 shown in Fig. 16.
The visual processing device 31 is provided with a spatial processing portion 22 that performs spatial processing of the luminance value of each pixel of an original image that it has obtained as an input signal IS and outputs an unsharp signal US, and a visual processing portion 32 that uses the input signal IS and the unsharp signal US to perform visual processing of the original image and outputs an output signal OS.
The spatial processing portion 22 performs the same operation as the spatial processing portion 2 of the visual processing device 1, and thus it will not be described further.
The visual processing portion 32 is provided with a dividing portion 25 that takes an input signal IS as a first input and an unsharp signal US as a second input, and divides the input signal IS by the unsharp signal US to obtain a divided signal RS that it then outputs, an enhancing portion 26 that receives the divided signal RS as input and outputs an enhanced signal TS, and a multiplying portion 33 that receives the input signal IS as a first input and the enhanced signal TS as a second input and outputs an output signal OS.

<<Action of the Equivalent Visual Processing Device 31>>

The operation of the visual processing portion 32 is described in further detail below.
The dividing portion 25 and the enhancing portion 26 perform the same operations as described with regard to the visual processing device 21 shown in Fig. 16.
The multiplying portion 33 multiplies the input signal IS, whose value is A, and the enhanced signal TS, whose value is value F5(A/B), and outputs an output signal OS having the value A * F5(A/B). Here, the enhancement function F5 is the same as that shown in Fig. 18.
It should be noted that the calculation using the enhancement function F5, as described with regard to the visual processing device 21 shown in Fig. 16, can be performed using a one-dimensional LUT for that function, or can be performed without using a LUT.

<Effects>

The visual processing device 31 and the visual processing device 1 that has been provided with the third profile data achieve the same visual processing effect.

(i)

With the enhancing portion 26, enhancement of the sharp signal (divided signal RS), which is expressed as the ratio of the input signal IS to the unsharp signal US, is performed, and the enhanced sharp signal and the input signal IS are multiplied. Enhancement of the sharp signal, which is expressed as the ratio of the input signal IS to the unsharp signal US, is equivalent to calculating the difference between the input signal IS and the unsharp signal US in logarithmic space. That is, visual processing that is suited to the logarithmic visual characteristics of humans is achieved.

(ii)

The amount of enhancement by the enhancement function F5 is large if the input signal IS is large (if it is bright) and is small if the input signal IS is small (if it is dark). Also, the amount of enhancement toward increased brightness is greater than the amount of enhancement toward increased darkness. Thus, it is possible to achieve visual processing that is suited for our visual characteristics, and visual processing that is balanced and natural is achieved.

(iii)

It should be noted that if the value C of a particular element of the profile data obtained by Eq. M3 is C>255, then the value C of that element can be regarded as 255.

(iv)

With the processing employing the equation M3, although compression of the dynamic range is not performed with respect to the input signal IS, local contrast can be enhanced and the dynamic range can be visually compressed and expanded.

(4)

«Fourth Profile Data»

The fourth profile data are determined based on a computation that includes a function for enhancing the difference between the input signal IS and the unsharp signal US in accordance with the value of the input signal IS. Due to this, it is for example possible to enhance the sharp component of the input signal IS, for example, in accordance with the value of the input signal IS. Thus, enhancement of the input signal IS can be performed suitably over a range including dark areas and light areas.

Further, the fourth profile data are determined based on a computation that adds to the enhanced value the value that is obtained by compressing the dynamic range of the input signal IS. Thus, it is possible to enhance the sharp component of the input signal IS, for example, in accordance with the value of the input signal IS while performing compression of the dynamic range.

This is described in further detail below.

The values C of the elements of the fourth profile data (the values of the output signal OS) are expressed by $C = F8(A) + F6(A) * F7(A-B)$ (hereinafter, this is referred to as Equation M4) using the value A of the input signal IS, the value B of the unsharp signal US, an enhancement amount adjustment function F6, an enhancement function F7, and a dynamic range compression function F8.

Here, the enhancement amount adjustment function F6 is a function that monotonically increases with respect to the value of the input signal IS. That is, when the value A of the input signal IS is small, the value of the enhancement amount adjustment function F6 also is small, and when the value A of the input signal IS is large, then the value of the enhancement amount adjustment function F6 also is large. The enhancement function F7 is any one of the enhancement functions R1 to R3 that were described using Fig. 49. The dynamic range compression function F8 is the power function described using Fig. 17, and is expressed by $F8(x) = x^{\gamma}$ $(0<\gamma<1)$.

<<Equivalent Visual Processing Device 41>>

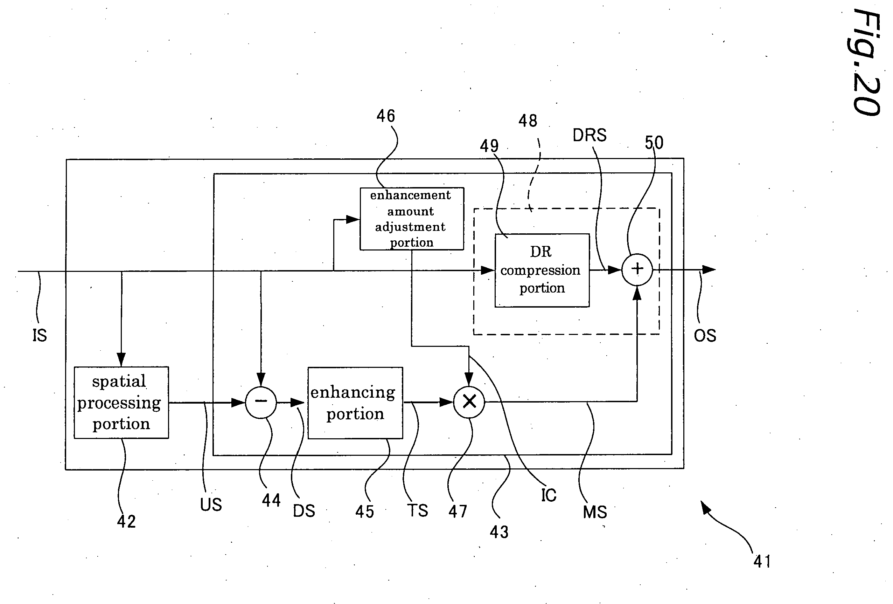

Fig. 20 shows a visual processing device 41 that is equivalent to the visual processing device 1 in which the fourth profile data have been registered to the two-dimensional LUT 4.

The visual processing device 41 is a device that outputs an output signal OS based on a computation for enhancing the difference between the input signal IS and the unsharp signal US in accordance with the value of the input signal IS. Due to this, it is for example possible to enhance the sharp component of the input signal IS, for example, in accordance with the value of the input signal IS. Thus, enhancement can be suitably performed from dark areas through light areas of the input signal IS.

Further, the visual processing device 41 outputs an output signal OS based on a computation that adds to the enhanced value, the value that is obtained by compressing the dynamic range of the input signal IS. Thus, it is possible to enhance the sharp component of the input signal IS, for example, in accordance with the value of the input signal IS while performing compression of the dynamic range.

The visual processing device 41 shown in Fig. 20 is provided with a spatial processing portion 42 that performs spatial processing of the luminance value of each pixel of an original image that it has obtained as an input signal IS and outputs an unsharp signal US, and a visual processing portion 43 that uses the input signal IS and the unsharp signal US to perform visual processing of the original image and outputs an output signal OS.

The spatial processing portion 42 performs the same operation as the spatial processing portion 2 of the visual processing device 1, and thus it will not be described further.

The visual processing portion 43 is provided with a subtracting portion 44 that receives an input signal IS as a first input and an unsharp signal US as a second input and then outputs a difference signal DS of the difference between the two, an enhancing portion 45 that receives the difference signal DS as an input and outputs an enhanced signal TS, an enhancement amount adjustment portion 46 that receives the input signal IS as input and outputs an enhancement amount adjusted signal IC, a multiplying portion 47 that receives the enhancement amount adjusted signal IC as a first input and the enhanced signal TS as a second input and multiplies the enhancement amount adjusted signal IC and the enhanced signal TS to obtain a multiplied signal MS that it then outputs, and an output portion 48 that receives the input signal IS as a first input and the multiplied signal MS as a second input and outputs an output signal OS. The output portion 48 is provided with a DR compression portion 49 that receives the input signal IS as input and outputs a DR compressed signal DRS that has been subjected to dynamic range (DR) compression, and a summing portion 50 that receives the DR compressed signal DRS as a first input and the multiplied signal MS as a second input and outputs an output signal OS.

«Action of the Equivalent Visual Processing Device 41»

The operation of visual processing portion 43 is described in further detail below.

The subtracting portion 44 calculates the difference between the input signal IS, which has the value A, and the unsharp signal US, which has the value B, and outputs a difference signal DS having the value A-B. The enhancing portion 45 uses the enhancement function F7 to output an enhanced signal TS having the value F7(A-B) from the difference signal DS, which has the value A-B. The enhancement amount adjustment portion 46 uses the enhancement amount adjustment function F6 to output an enhancement amount adjusted signal IC having the value F6(A) from the input signal IS, which has the value A. The multiplying portion 47 multiplies the enhancement amount adjusted signal IC, which has the value F6(A), and the enhanced signal TS, which has the value F7(A-B), and outputs the result as a multiplied signal MS having the value $F6(A) * F7(A-B)$. The DR compression portion 49 uses the dynamic range compression function F8 to output a DR compressed signal DRS having the value F8(A) from the input signal IS, which has the value A. The summing portion 50 takes the sum of the DR compressed signal DRS and the multiplied signal MS, which has the value $F6(A) * F7(A-B)$, and outputs an output signal OS having the value $F8(A) + F6(A) * F7(A-B)$.

It should be noted that the calculations using the enhancement amount adjustment function F6, the enhancement function F7, and the dynamic range compression function F8 can each be performed using a one-dimensional LUT for that function, or can be performed without using a LUT.

«Effects»

The visual processing device 41 and the visual processing device 1 provided with the fourth profile data achieve the same visual processing effects.

(i)

Adjustment of the enhancement amount of the difference signal DS is performed based on the value A of the input signal IS. Thus, it is possible to perform dynamic range compression while maintaining local contrast over dark areas to light areas.

(ii)

The enhancement amount adjustment function F6 is a function in which the values increases monotonically, and thus it can be a function with which the amount of increase in the values of the function decreases as the value A of the input signal IS increases. In this case, the value of the output signal OS is kept from becoming saturated.

(iii)

If the enhancement function F7 is the enhancement function R2 that was described using Fig. 49, then it is possible to inhibit the amount of enhancement when the absolute value of the difference signal DS is large. Thus, the enhancement value in high-sharpness areas is kept from becoming saturated, and this allows visual processing that leads to a visually natural image to be executed.

<<Modified Examples>>

(i)

With the visual processing device 41, the visual processing portion 43 can also perform the computation of Eq. M4 based on the input signal IS and the unsharp signal US without using the two-dimensional LUT 4. In this case, it can also use a one-dimensional LUT in the calculations of any of the functions F6 to F8.

(ii)

If the enhancement function F7 is a direct proportion function of a proportion coefficient 1, then there is no particular need to provide the enhancing portion 45.

(iii)

It should be noted that if the value C of a particular element of the profile data found through Eq. M4 is outside the range $0 \leq C \leq 255$, then the value C of that element can be regarded as 0 or 255.

(5)

<Fifth Profile Data>

The fifth profile data are determined based on a computation that includes a function for enhancing the difference between the input signal IS and the unsharp signal US in accordance with the value of the input signal IS. Due to this, it is for example possible to enhance the sharp component of the input signal IS, for example, in accordance with the value of the input signal IS. Thus, enhancement of the input signal IS can be performed suitably across dark areas to light areas.

This is described in further detail below.

It is also possible that in Eq. M4 of the fourth profile data, the dynamic range compression function F8 is a direct proportion function of a proportion coefficient 1. In this case, the values C of the elements of the fifth profile data (the values of the output signal OS) are expressed by $C = A + F6(A) * F7(A-B)$ (hereinafter, this is referred to as Equation M5) using the value A of the input signal IS, the value B of the unsharp signal US, the enhancement amount adjustment function F6, and the enhancement function F7.

<<Equivalent Visual Processing Device 51>>

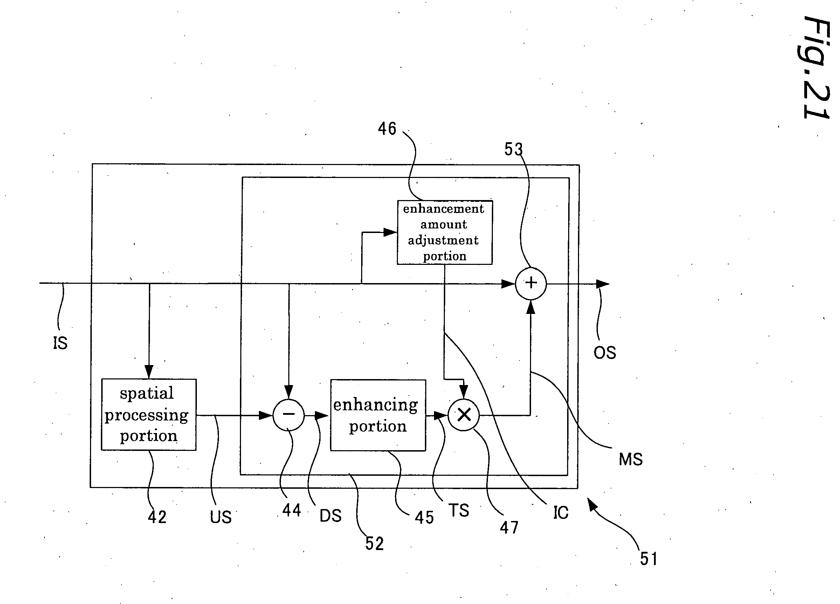

Fig. 21 shows a visual processing device 51 that is equivalent to the visual processing device 1 in which the fifth profile data have been registered to the two-dimensional LUT 4.

The visual processing device 51 is a device that outputs an output signal OS based on a computation for enhancing the difference between the input signal IS and the unsharp signal US in accordance with the value of the input signal IS. Due to this, it is for example possible to enhance the sharp component of the input signal IS, for example, in accordance with the value of the input signal IS. Thus, enhancement of the input signal IS can be suitably performed over a range that spans dark areas and light areas.

The visual processing device 51 shown in Fig. 21 differs from the visual processing device 41 shown in Fig. 20 in that it is not provided with the DR compression portion 49. The visual processing device 51 shown in Fig. 21 is described below, assigning the same reference numerals to portions that perform the same operations as those of the visual processing portion 41 shown in Fig. 20, and detailed description thereof is omitted.

The visual processing device 51 is provided with a spatial processing portion 42 that executes spatial processing of the brightness value of each pixel of an original image that it has obtained as an input signal IS and outputs the result as an unsharp signal US, and a visual processing portion 52 that uses the input signal IS and the unsharp signal US to perform visual processing of the original image and outputs the result as an output signal OS.

The spatial processing portion 42 performs the same operation as the spatial processing portion 2 of the visual processing device 1, and thus it will not be described further.

The visual processing portion 52 is provided with a subtracting portion 44 that receives an input signal IS as a first input and an unsharp signal US as a second input and then outputs a difference signal DS of the difference between the two, an enhancing portion 45 that receives the difference signal DS as input and outputs an enhanced signal TS, an enhancement amount adjustment portion 46 that receives the input signal IS as input and outputs an enhancement amount adjusted signal IC, a multiplying portion 47 that receives the enhancement amount adjusted signal IC as a first input and the enhanced signal TS as a second input and multiplies the enhancement amount adjusted signal IC and the enhanced signal TS to obtain a multiplied signal MS that it then outputs, and a summing portion 53 that receives the input signal IS as a first input and the multiplied signal MS as a second input and outputs an output signal OS.

<<Action of the Equivalent Visual Processing Device 51>>

The operation of the visual processing portion 52 is described in further detail below.

The subtracting portion 44, the enhancing portion 45, the enhancement amount adjustment portion 46, and the multiplying portion 47 perform the same operations as those described with regard to the visual processing device 41 shown in Fig. 20.

The summing portion 53 takes the sum of the input signal IS, which has the value A, and the multiplied signal MS, which has the value F6(A) $*$ F7(A-B), and outputs an output signal OS having the value A + F6(A) $*$ F7(A-B).

It should be noted that as described with respect to the visual processing device 41 shown in Fig. 20, the calculations using the enhancement amount adjustment function F6 and the enhancement function F7 can each be performed using a one-dimensional LUT for that function, or can be performed without using a LUT.

<<Effects>>

The visual processing device 51 and the visual processing device 1 provided with the fifth profile data achieve the same visual processing effects. Moreover, they achieve substantially the same visual processing effects as those attained by the visual processing device 41 and the visual processing device 1 provided with the fourth profile data.

(i)

The adjustment of the enhancement amount of the difference signal DS is performed based on the value A of the input signal IS. Thus, it is possible to attain a uniform amount of contrast enhancement from dark areas up to light areas.

<<Modified Examples>>

(i)

If the enhancement function F7 is a direct proportion function of a proportion coefficient 1, then it is not particularly necessary to provide the enhancing portion 45.

(ii)

It should be noted that if the value C of a particular element of the profile data found through Eq. M5 is outside the range $0 \leq C \leq 255$, then the value C of that element can be taken as 0 or 255.

(6)

<Sixth Profile Data>>

The sixth profile data are determined based on a computation that corrects the gradation of a value that is obtained by adding the value of the input signal IS to a value obtained by enhancing the difference between the input signal IS and the unsharp signal US. Thus, it is for example possible to achieve visual processing in which gradation correction is performed with respect to an input signal IS whose sharp component has been enhanced.
This is described in further detail below.
The values C of the elements of the sixth profile data (the values of the output signal OS) are expressed by C = F10(A + F9(A-B)) (hereinafter, this is referred to as Equation M6) using the value A of the input signal IS, the value B of the unsharp signal US, an enhancement function F9, and a gradation correction function F10.
Here, the enhancement function F9 is any one of the enhancement functions R1 to R3 that were described using Fig. 49. The gradation correction function F10 is a function that is used in ordinary gradation correction, and for example is a gamma correction function, an S-shaped gradation correction function, or an inverted S-shaped gradation correction function.

<<Equivalent Visual Processing Device 61>>

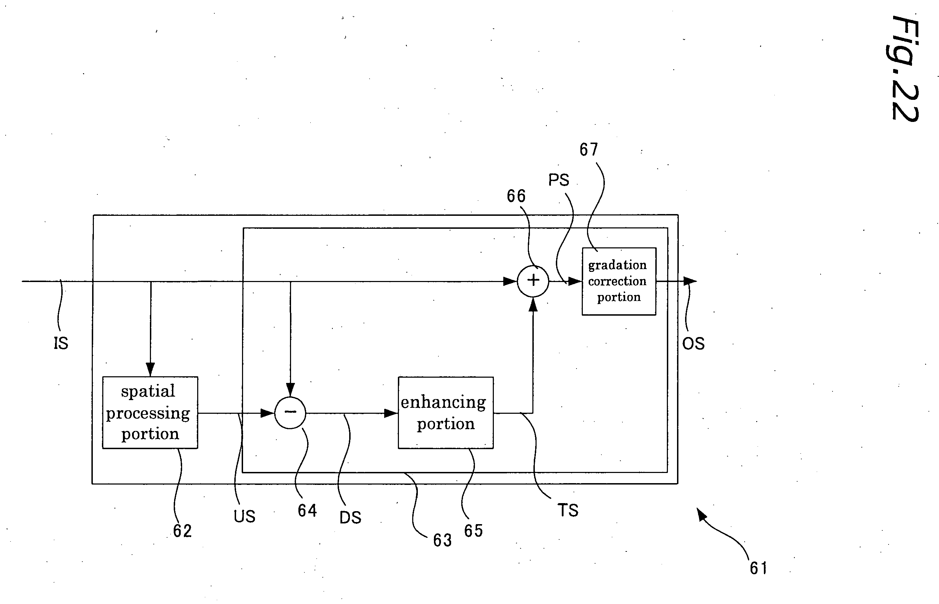

Fig. 22 shows a visual processing device 61 that is equivalent to the visual processing device 1 in which the sixth profile data have been registered to the two-dimensional LUT 4.
The visual processing device 61 is a device that outputs an output signal OS based on a computation that corrects the gradation of the value obtained by adding the value of the input signal IS to a value that is obtained by enhancing the difference between the input signal IS and the unsharp signal US. Thus, it is for example possible to achieve visual processing in which gradation correction is performed with respect to an input signal IS whose sharp component has been enhanced.
The visual processing device 61 shown in Fig. 22 is provided with a spatial processing portion 62 that performs spatial processing of the luminance value of each pixel of an original image that it has obtained as an input signal IS and outputs an unsharp signal US, and a visual processing portion 63 that uses the input signal IS and the unsharp signal US to perform visual processing of the original image and outputs an output signal OS.
The spatial processing portion 62 performs the same operation as the spatial processing portion 2 of the visual processing device 1, and thus it will not be described further.
The visual processing portion 63 is provided with a subtracting portion 64 that receives an input signal IS as a first input and an unsharp signal US as a second input and then outputs a difference signal DS of the difference between the two, an enhancing portion 65 that receives the difference signal DS as input and outputs an enhanced signal TS that has been enhanced, a summing portion 66 that receives the input signal IS as a first input and the enhanced signal TS as a second input and outputs a summed signal PS that is the sum of the two, and a gradation correction portion 67 that receives the summed signal PS as input and outputs an output signal OS.

<<Action of the Equivalent Visual Processing Device 61>>

The operation of the visual processing portion 63 is described in further detail below.
The subtracting portion 64 calculates the difference between the input signal IS, which has the value A, and the unsharp signal US, which has the signal B, and outputs a difference signal DS having the value A-B. The enhancing portion 65 uses the enhancement function F9 to output an enhanced signal TS having the value F9(A-B) from the difference signal DS, which has the value A-B. The summing portion 66 takes the sum of the input signal IS, which has the value A, and the enhanced signal TS, which has the value F9(A-B), and outputs a summed signal PS having the value A + F9(A-B). The gradation correction portion 67 uses the gradation correction function F10 to output an output signal OS having the value F10(A + F9(A-B)) from the summed signal PS, which has the value A + F9(A-B).
It should be noted that the calculations using the enhancement function F9 and the gradation correction function F10 can each be performed using a one-dimensional LUT for that function, or can be performed without using a LUT.

<<Effects>>

The visual processing device 61 and the visual processing device 1 furnished with the sixth profile data achieve the same visual processing effects.

(i)

The difference signal DS is enhanced by the enhancement function F9 and is added to the input signal IS. Thus, it becomes possible to enhance the contrast of the input signal IS. Moreover, the gradation correction portion 67 corrects the gradation of the summed signal PS. Thus, it is for example possible to further enhance the contrast at intermediate tones, which frequently appear in original images. It is also possible to brighten the entire summed signal PS, for example. Thus, spatial processing and gradation processing can be simultaneously achieved together.

<<Modified Examples>>

(i)

With the visual processing device 61, the visual processing portion 63 can also perform the computation of Eq. M6 based on the input signal IS and the unsharp signal US without using the two-dimensional LUT 4. In this case, it is also possible to use a one-dimensional LUT for each of the calculations of the functions F9 and F10.

(ii)

It should be noted that if the value C of a particular element of the profile data found through Eq. M6 is outside the range $0 \leq C \leq 255$, then the value C of that element can be regarded as 0 or 255.

(7)

<<Seventh Profile Data>>

The seventh profile data are determined based on a computation that adds a value that is obtained by correcting the gradation of the input signal IS to a value that is obtained by enhancing the difference between the input signal IS and the unsharp signal US. Here, enhancement of the sharp component and gradation correction of the input signal IS are performed independently. Thus, it is possible to perform a fixed enhancement of the sharp component, regardless of the amount of gradation correction of the input signal IS.
This is described in further detail below.
The values C of the elements of the seventh profile data (the values of the output signal OS) are expressed by C = F12(A) + F11(A-B) (hereinafter, this is referred to as Equation M7) using the value A of the input signal IS, the value B of the unsharp signal US, an enhancement function F11, and a gradation correction function F12.
Here, the enhancement function F11 is any one of the enhancement functions R1 to R3 described using Fig. 49. The gradation correction function F12 is for example a gamma correction function, an S-shaped gradation correction function, or an inverted S-shaped gradation correction function.

<<Equivalent Visual Processing Device 71>>

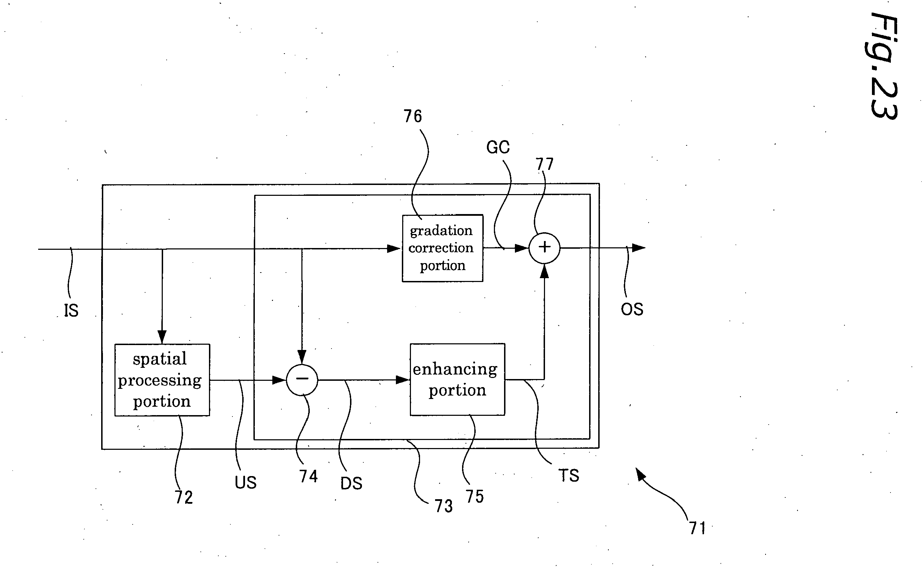

Fig. 23 shows a visual processing device 71 that is equivalent to the visual processing device 1 in which the seventh profile data have been registered to the two-dimensional LUT 4.
The visual processing device 71 is a device that outputs an output signal OS based on a computation that adds a value that is obtained by correcting the gradation of the input signal IS to a value that is obtained by enhancing the difference between the input signal IS and the unsharp signal US. Here, enhancement of the sharp component and gradation correction of the input signal IS are performed independently. Thus, it is possible to perform a fixed enhancement of the sharp component, regardless of the amount of gradation correction of the input signal IS.
The visual processing device 71 shown in Fig. 23 is provided with a spatial processing portion 72 that performs spatial processing of the luminance value of each pixel of an original image that it has obtained as an input signal IS and outputs an unsharp signal US, and a visual processing portion 73 that uses the input signal IS and the unsharp signal US to perform visual processing of the original image and outputs an output signal OS.
The spatial processing portion 72 performs the same operation as the spatial processing portion 2 of the visual processing device 1, and thus it will not be described further.
The visual processing portion 73 is provided with a subtracting portion 74 that receives the input signal IS as a first input and the unsharp signal US as a second input and then outputs a difference signal DS of the difference between the two, an enhancing portion 75 that receives the difference signal DS as input and outputs an enhanced signal TS that has been enhanced, a gradation correction portion 76 that receives the input signal IS as input and outputs a gradation corrected signal GC whose gradation has been corrected, and a summing portion 77 that receives the gradation corrected signal GC as a first input and the enhanced signal TS as a second input and outputs an output signal OS.

<<Action of the Equivalent Visual Processing Device 71>>

The operation of the visual processing portion 73 is described in further detail below.

The subtracting portion 74 calculates the difference between the input signal IS, which has the value A, and the unsharp signal US, which has the signal B, and outputs a difference signal DS having the value A-B. The enhancing portion 75 uses the enhancement function F11 to output an enhanced signal TS having the value F11(A-B) from the difference signal DS, which has the value A-B. The gradation correction portion 76 uses the gradation correction function F12 to output a gradation corrected signal GC having the value F12(A) from the input signal IS having the value A. The summing portion 77 takes the sum of the gradation corrected signal GC, which has the value F12(A), and the enhanced signal TS, which has the value F11(A-B), and outputs an output signal OS having the value F12(A) + F11(A-B).

It should be noted that the calculations using the enhancement function F11 and the gradation correction function F12 can each be performed using a one-dimensional LUT for that function, or can be performed without using a LUT.

<<Effects>>

The visual processing device 71 and the visual processing device 1 furnished with the seventh profile data achieve the same visual processing effects.

(i)

After the input signal IS has been subjected to gradation correction by the gradation correction portion 76, it is added to the enhanced signal TS. Thus, by adding that input signal IS to the enhanced signal TS, it is possible to emphasize local contrast even in regions where there has been little change in the gradation by the gradation correction function F12, that is, regions in which the contrast is lowered.

<<Modified Examples>>

(i)

With the visual processing device 71, the visual processing portion 73 can also perform the computation of Eq. M7 based on the input signal IS and the unsharp signal US without using the two-dimensional LUT 4. In this case, it is also possible to use a one-dimensional LUT in the calculations of the functions F11 and F12.

(ii)

It should be noted that if the value C of a particular element of the profile data found through Eq. M7 is outside the range $0 \leq C \leq 255$, then the value C of that element can be regarded as 0 or 255.

(8)

<<Modified Examples of the First through Seventh Profile Data>>

(i)

In (1) through (7) above, each element of the first through seventh profile data was described as storing a value that has been calculated based on an equation M1 through M7. It was also explained that the value of an element in the profile data that has been calculated by an equation M1 through M7 can be clipped if the value is outside of the range of values that can be stored as profile data.

Moreover, some of the values of the profile data can be any value. For example, if the value of the input signal IS is large but the value of the unsharp signal US is small, such as small bright areas in a dark nighttime setting (such as areas of neon in a nighttime setting), then the value of the input signal IS that has been subjected to visual processing will have little effect on the picture quality. Thus, for portions where the value after visual processing will have little effect on the picture quality, the values stored in the profile data can be approximate values of the value calculated by the equations M1 through M7, or can be arbitrary values.

Even if the values stored in the profile data are approximate values of the value calculated by the equations M1 through M7, or are arbitrary values, it is preferable that the values stored for the same values of the input signal IS and the unsharp signal US maintain the monotonically increasing, or monotonically decreasing, relationship with respect to the values of the input signal IS and the unsharp signal US. In the profile data created based on the equations M1 to M7, the values stored by the profile data with respect to the same values for the input signal IS arid the unsharp signal US show an overview of the characteristics of the profile data. Thus, to maintain the characteristics of the two-dimensional LUT, it is preferable that the above relationship is maintained when tuning the profile data.

[Second Embodiment]

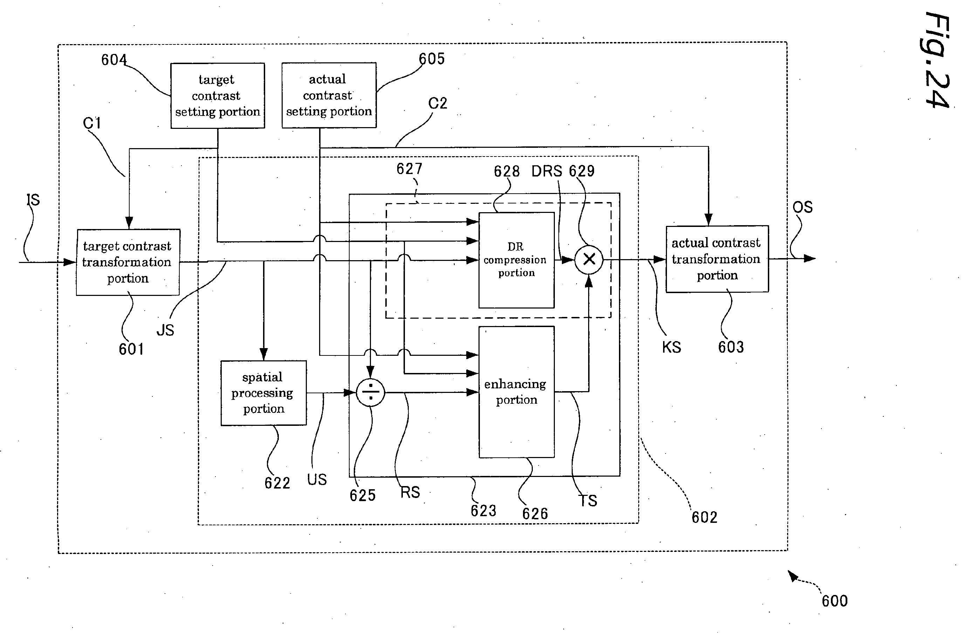

A visual processing device 600 serving as a second embodiment of the present invention is described using Figs. 24 through 39.

The visual processing device 600 is a visual processing device for performing visual processing of an image signal (input signal IS) and outputting a visually processed image (output signal OS), and it performs visual processing that is in accordance with the environment in which a display device (not shown) for displaying the output signal OS is located (hereinafter, this is referred to as the display environment).

More specifically, the visual processing device 600 is a device that fixes drops in the "visual contrast" of the display image due to the effect of ambient light of the display environment by performing visual processing that utilizes our visual characteristics.

The visual processing device 600, together with a device that performs color processing of an image signal, constitutes an image processing device in a machine that handles images, such as a computer, a television, a digital camera, a portable telephone, a PDA, a printer, or a scanner.

<Visual Processing Device 600>

Fig. 24 shows the basic structure of the visual processing device 600.

The visual processing device 600 comprises a target contrast transformation portion 601, a transformed signal processing portion 602, an actual contrast transformation portion 603, a target contrast setting portion 604, and an actual contrast setting portion 605.

The target contrast transformation portion 601 receives the input signal IS as a first input and a target contrast C1 that has been set by the target contrast setting portion 604 as a second input, and outputs a target contrast signal JS. It should be noted that the target contrast C1 will be defined later.

The transformed signal processing portion 602 receives the target contrast signal JS as a first input, the target contrast C1 as a second input, and the actual contrast C2 that has been set by the actual contrast setting portion 605 as a third input, and outputs a visually processed signal KS, which is the target contrast signal JS after being subjected to visual processing. It should be noted that the actual contrast C2 will be defined later.

The actual contrast transformation portion 603 receives the visually processed signal KS as a first input and the actual contrast C2 as a second input, and outputs an output signal OS.

The user is allowed to set the values of the target contrast C1 and the actual contrast C2 with the target contrast setting portion 604 and the actual contrast setting portion 605 via an input interface, for example.

These portions are described in greater detail below.

<Target Contrast Transformation Portion 601>

The target contrast transformation portion 601 transforms the input signal IS that has been input to the visual processing portion 600 into a target contrast signal JS that is suited for contrast expression. Here, the input signal IS is expressed by a gradation in which the luminance of the image that has been input to the visual processing portion 600 is from [0.1 to 1.0].

The target contrast transformation portion 601 uses a target contrast C1 (value [m]) to transform the input signal IS (value [P]) through "Eq. M20" and outputs the target contrast signal JS (value [A]). Here, Eq. M20 is $A = \{(m-1)/m\} * P + 1/m$.

The value [m] of the target contrast C1 is set as the contrast value at which the displayed image that is displayed by the display device can be seen at the best contrast.

Here, the contrast value is a value that is expressed as the brightness ratio of the white level to the black level of the image, and indicates the luminance value of the white level in a case where the black level has been set to 1 (black level : white level = 1:m).

The value [m] of the target contrast C1 is preferably set to approximately 100 to 1000 (black level : white level = 1:100 to 1:1000), but this can also be determined based on the brightness ratio of the white level to the black level that can be displayed by the display device.

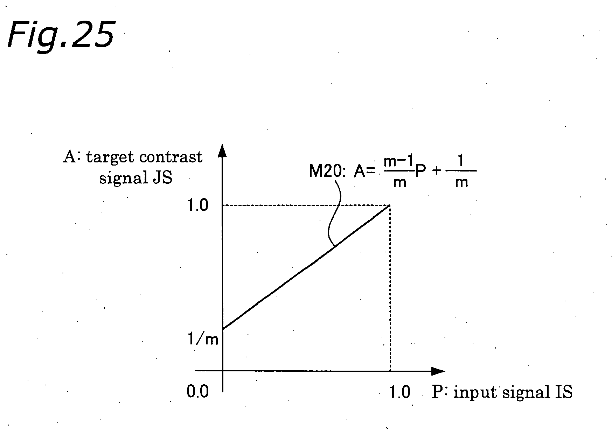

Transformation by Equation M20 is described in further detail using Fig. 25. Fig. 25 is a graph that shows the relationship between the value of the input signal IS (horizontal axis) and the value of the target contrast signal JS (vertical axis). As shown in Fig. 25, an input signal IS whose value is in the range of [0.0 to 1.0] is transformed into a target contrast signal JS having a value in the range of [1/m to 1.0] by the target contrast transformation portion 601.

<Transformed Signal Processing Portion 602>

Using Fig. 24, the transformed signal processing portion 602 is described in greater detail below.

The transformed signal processing portion 602 compresses the dynamic range while maintaining local contrast in the target contrast signal JS that is input, and outputs a visually processed signal KS. More specifically, the transformed signal processing portion 602 has the same structure, action, and effect as if in the visual processing device 21 described in the first embodiment the input signal IS (see Fig. 16) is regarded as the target contrast signal JS and the output signal OS (see Fig. 16) is regarded as the visually processed signal KS.

The transformed signal processing portion 602 outputs the visually processed signal KS based on a computation that enhances the ratio between the target contrast signal JS and the unsharp signal US. Thus, it is for example possible to achieve the visual processing for enhancing the sharp component.

Further, the transformed signal processing portion 602 outputs the visually processed signal KS based on a computation for compressing the dynamic range of the ratio between the target contrast signal JS that has been enhanced and the unsharp signal US. Thus, it is possible to achieve visual processing in which the sharp component is enhanced while the dynamic range is compressed, for example.

«Structure of the Transformed Signal Processing Portion 602»

The transformed signal processing portion 602 is provided with a spatial processing portion 622 that performs spatial processing on the luminance value of each pixel in the target contrast signal JS and outputs an unsharp signal US, and a visual processing portion 623 that uses the target contrast signal JS and the unsharp signal US to perform visual processing of the target contrast signal JS and outputs a visually processed signal KS.

The spatial processing portion 622 performs the same operation as the spatial processing portion 2 of the visual processing device 1 (see Fig. 1), and thus detailed description thereof is omitted.

The visual processing portion 623 is provided with a dividing portion 625, an enhancing portion 626, and an output portion 627 that has a DR compression portion 628 and a multiplying portion 629.

The dividing portion 625 receives the target contrast signal JS as a first input and the unsharp signal US as a second input and divides the target contrast signal JS by the unsharp signal US to obtain a divided signal RS that it then outputs. The enhancing portion 626 receives the divided signal RS as a first input, the target contrast C1 as a second input, and the actual contrast C2 as a third input, and outputs an enhanced signal TS.

The output portion 627 receives the target contrast signal JS as a first input, the enhanced signal TS as a second input, the target contrast C1 as a third input, and the actual contrast C2 as a fourth input, and outputs a visually processed signal KS. The DR compression portion 628 receives the target contrast signal JS as a first input, the target contrast C1 as a second input, and the actual contrast C2 as a third input, and outputs a DR compressed signal DRS whose dynamic range (DR) has been compressed. The multiplying portion 629 receives the DR compressed signal DRS as a first input and the enhanced signal TS as a second input, and outputs the visually processed signal KS.

«Action of the Transformed Signal Processing Portion 602»

The transformed signal processing portion 602 uses the target contrast C1 (value [m]) and the actual contrast C2 (value [n]) to transform the target contrast signal JS (value [A]) through "Eq. M2" and outputs the result as a visually processed signal KS (value [C]). Here, Eq. M2 is expressed as $C = F4(A) * F5(A/B)$ using the dynamic range compression function F4 and the enhancement function F5. It should be noted that the value [B] is the value of the unsharp signal US obtained by subjecting the target contrast signal JS to spatial processing.

The dynamic range compression function F4 is a "power function" that is a concave monotously increasing function, and is expressed by $F4(x) = x^\gamma$. The exponent $\gamma$ of the dynamic range compression function F4 is expressed using normal logarithms by $\gamma = \log(n)/\log(m)$. The enhancement function F5 is a power function, and is expressed by $F5(x) = x^{(1-\gamma)}$.

The relationship between Eq. M2 and the operations of the various portions of the transformed signal processing portion 602 is described in further detail below.

The spatial processing portion 622 performs spatial processing with respect to the target contrast signal JS, which has the value [A], and outputs the result as an unsharp signal US having the value [B].

The dividing portion 625 divides the target contrast signal JS, which has the value [A], by the unsharp signal US, which has the value [B], and outputs the result as the divided signal RS, which has the value [A/B]. The enhancing portion 626 uses the enhancement function F5 to obtain an enhanced signal TS having the value [F5(A/B)] from the divided signal RS, which has the value [A/B], and outputs this enhanced signal TS. The DR compression portion 628 uses the dynamic range compression function F4 to obtain a DR compressed signal DRS having the value [F4(A)] from the target contrast signal JS, which has the value [A], and outputs the DR compressed signal DRS. The multiplying portion 629 multiplies the DR compressed signal DRS, which has the value [F4(A)], by the enhanced signal TS, which has the value [F5(A/B)], and outputs the result as a visually processed signal KS having the value [F4(A) * F5(A/B)].

It should be noted that the calculations using the dynamic range compression function F4 and the enhancement function F5 can each be performed using a one-dimensional LUT for that function, or can be performed without using a LUT.

<<Effect of the Transformed Signal Processing Portion 602>>

The visual dynamic range in the visually processed signal KS is determined by the value of the dynamic range compression function F4.

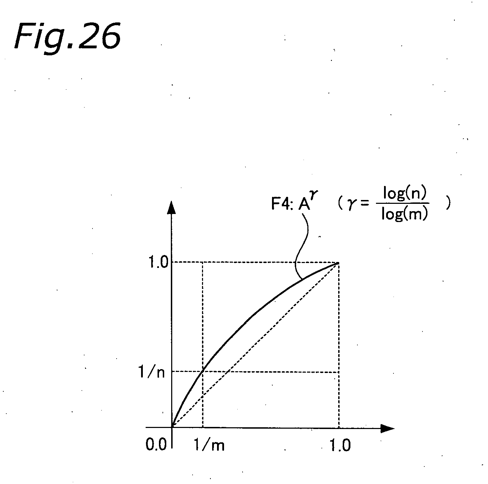

The transformation by Eq. M2 is described in more specific detail using Fig. 26. Fig. 26 is a graph showing the relationship between the value of the target contrast signal JS (horizontal axis) and the value obtained by applying the dynamic range compression function F4 to the target contrast signal JS (vertical axis). As shown in Fig. 26, the dynamic range of the target contrast signal JS is compressed by the dynamic range compression function F4. More specifically, a target contrast signal JS in the value range of [1/m to 1.0] is transformed by the dynamic range compression function F4 to a value range of [1/n to 1.0]. As a result, the viewable dynamic range of the visually processed signal KS is compressed to 1/n (minimum value : maximum value = 1:n).

The actual contrast C2 shall be described here. The value [n] of the actual contrast C2 is set as the viewable contrast value of the displayed image under the circumstances of the ambient light of the display environment. That is, the value [n] of the actual contrast C2 can be determined to be the value obtained by lowering the value [m] of the target contrast C1 by an amount that corresponds to the impact of the luminance of the ambient light of the display environment.

As the result of using the value [n] of the actual contrast C2 that has been set in this way, the dynamic range of the target contrast signal JS following from Eq. M2 is compressed to between 1:m and 1:n. It should be noted that here "dynamic range" means the ratio between the minimum value and the maximum value of the signal.

On the other hand, the change in the local contrast in the visually processed signal KS is expressed as the ratio of the change amount before and after transformation between the value [A] of the target contrast signal JS and the value [C] of the visually processed signal KS. Here, the value [B] of the unsharp signal US in a local, that is, narrow range is regarded as constant. Thus, the ratio between the amount of change in the value [C] and the amount of change in the value [A] in Eq. M2 is 1, meaning that the local contrast does not change between the target contrast signal JS and the visually processed signal KS.

Human vision has the characteristic that as long as local contrast is maintained, an image will be viewed at the same contrast even if there is a drop in the overall contrast. Thus, with the transformed signal processing portion 602, it is possible to achieve visual processing with which the dynamic range of the target contrast signal JS is compressed but the viewable contrast is not lowered.

<Actual Contrast Transformation Portion 603>

The actual contrast transformation portion 603 is described in detail using Fig. 24.

The actual contrast transformation portion 603 transforms the visually processed signal KS into image data of a range that can be input to a display device (not shown). The image data of a range that can be input to a display device are image data in which the luminance values of the image are expressed in a gray scale value range of [0.0 to 1.0].

The actual contrast transformation portion 603 uses the actual contrast C2 (value [n]) to transform the visually processed signal KS (value [C]) with "Equation M21," and outputs the result as an output signal OS (value [Q]). Here, Eq. M21 is Q = {n/(n-1)} * C - {1/(n-1)}.

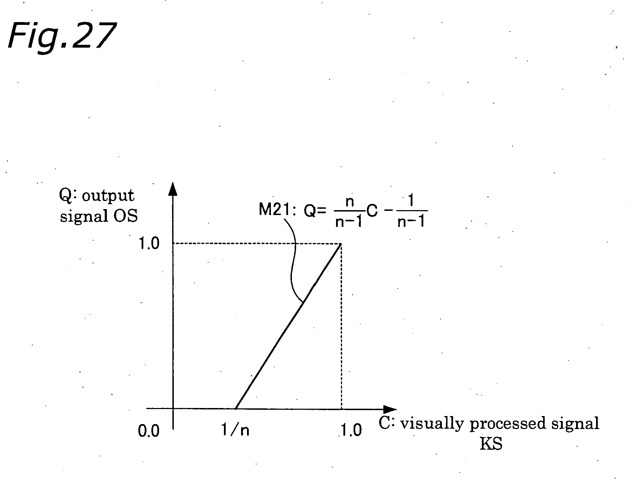

This transformation following from Eq. M21 is described in greater detail using Fig. 27. Fig. 27 is a graph showing the relationship between the value of the visually processed signal KS (horizontal axis) and the value of the output signal OS (vertical axis). As shown in Fig. 27, the actual contrast transformation portion 603 transforms a visually processed signal KS, which is in the range of [1/n to 1.0], into an output signal OS that has a range of [0.0 to 1.0]. Here, the value of the output signal OS decreases with respect to the value of the visually processed signal KS. The amount of this decrease corresponds to the impact of the ambient light on the luminance values of the display image.

It should be noted that if a visually processed signal KS having a value less than [1/n] is input, then the actual contrast transformation portion 603 transforms the output signal OS to the value [0]. Further, if a visually processed signal KS having a value greater than [1] is input, then the actual contrast transformation portion 603 transforms the output signal OS to the value [1].

<Effects of the Visual Processing Device 600>

The visual processing device 600 attains the same effects as the visual processing device 21 described in the first embodiment. Those characteristic effects of the visual processing device 600 are discussed below.

(i)

When there is ambient light in the display environment in which the visual processing device 600 displays the output signal OS, the ambient light affects how the output signal OS is viewed. However, the output signal OS is a signal in which processing to correct the impact of ambient light has been executed by the actual contrast transformation portion 603. That is, in a display environment where there is ambient light, the output signal OS that is displayed by the display device is viewed as a display image having the characteristics of the visually processed signal KS.
As for the characteristics of the visually processed signal KS, like for example the output signal OS of the visual processing device 21 described in the first embodiment (see Fig. 16), the local contrast is maintained while compressing the dynamic range of the entire image. That is, the visually processed signal KS is a signal in which the target contrast C1 at which locally the display image is displayed most suitably is maintained while the dynamic range is compressed to a dynamic range that can be displayed in the presence of the ambient light (this corresponds to the actual contrast C2).
Thus, with the visual processing device 600, it is possible to correct the contrast, which drops due to the presence of ambient light, while maintaining the visual contrast through processing that exploits the viewing characteristics.

<Visual Processing Method>

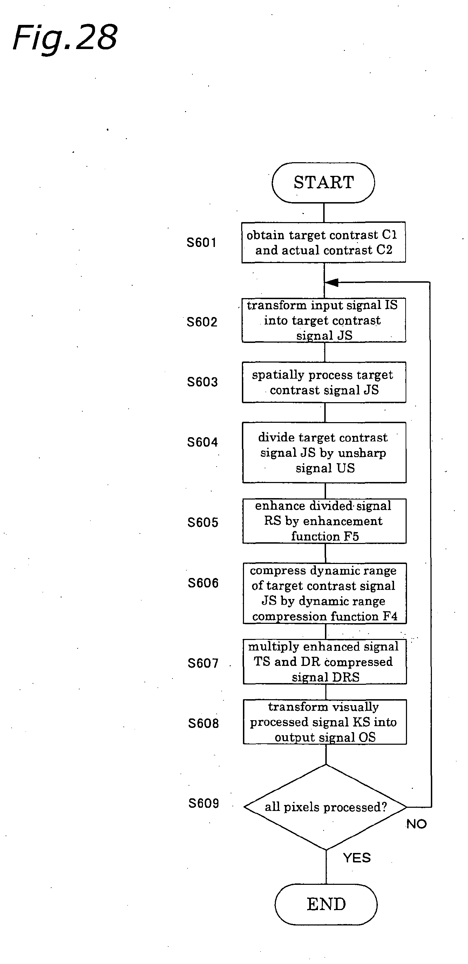

The visual processing method for achieving the same effects as the visual processing device 600 is described below using Fig. 28. It should be noted that the specific processing of each step is the same as that in the visual processing device 600, and thus description thereof will be omitted.
With the visual processing method shown in Fig. 28, first the target contrast C1 that has been set and the actual contrast C2 are obtained (S601). Next, the target contrast C1 that has been obtained is used to transform the input signal IS (step S602), and the result is output as a target contrast signal JS. The target contrast signal JS is then subjected to spatial processing (step S603) and the result is output as an unsharp signal US. The target contrast signal JS is then divided by the unsharp signal US (step S604) and the result is output as a divided signal RS. The divided signal RS is enhanced by the enhancement function F5, which is a "power function" whose exponent is determined by the target contrast C1 and the actual contrast C2 (step S605), and the result is output as an enhanced signal TS. On the other hand, the dynamic range of the target contrast signal JS is compressed by the dynamic range compression function F4, which is a "power function" whose exponent is determined by the target contrast C1 and the actual contrast C2 (step S606), and the result is output as a DR compressed signal DRS. Next, the enhanced signal TS output in step S605 and the DR compressed signal DRS output in step S606 are multiplied (step S607), and the result is output as a visually processed signal KS. Next, the actual contrast C2 is used to transform the visually processed signal KS (step S608), and the result is output as an output signal OS. The processes of steps S602 through S608 are repeated for every pixel of the input signal IS (step S609).
The steps of the visual processing method shown in Fig. 28 can also be achieved as a visual processing program in the visual processing device 600 or another computer, for example. It is also possible for all the processes of steps S604 to S607 to be executed at one time by performing the calculation of Eq. M2.

<Modified Examples>

The present invention is not limited to the foregoing embodiment, and various modifications and improvements thereof are possible without departing from the gist of the invention.

(i) Eq. M2 - A Case in Which the Enhancement Function F5 Is Not Provided -

In the foregoing embodiment, the transformed signal processing portion 602 was described as outputting a visually processed signal KS based on Eq. M2. Here, it is also possible for the transformed signal processing portion 602 to output a visually processed signal KS based only on the dynamic range enhancement function F4. In this case, it is not necessary for the transformed signal processing portion 602 of this modified example to be provided with the spatial processing portion 622, the dividing portion 625, the enhancing portion 626, or the multiplying portion 629, and it is only necessary that it is provided with the DR compression portion 628.

With the transformed signal processing portion 602 of this modified example, it is possible to output a visually processed signal KS that has been compressed to a dynamic range that can be displayed under the conditions of ambient light.

(ii) Enhancement Function F5 - Exponents and Other Modified Examples -

In the foregoing embodiment, the enhancement function F5 is a "power function" and expressed as $F5(x) = x^{(1-\gamma)}$. Here, the exponent of the enhancement function F5 can be a function of the value [A] of the target contrast signal JS or the value [B] of the unsharp signal US.

Specific Examples <<1>> to <<6>> are described below.

<<1>>

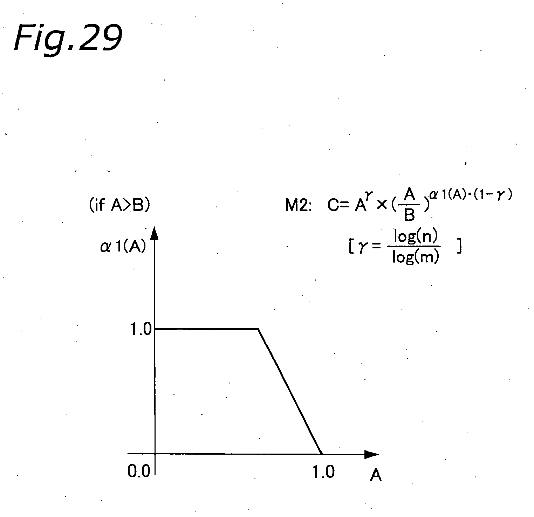

If the exponent of the enhancement function F5 is a function of the value [A] of the target contrast signal JS, and the value [A] of the target contrast signal JS is larger than the value [B] of the unsharp signal US, then the enhancement function F5 is a function that monotonically decreases. More specifically, the exponent of the enhancement function F5 is expressed as $\alpha1(A) * (1-\gamma)$, where the function $\alpha1(A)$ is a function that monotonically decreases with respect to the value [A] of the target contrast signal JS as shown in Fig. 29. It should be noted that the maximum value of the function $\alpha1(A)$ is [1.0].

In this case, there is little enhancement of the local contrast of high luminance portions by the enhancement function F5. For this reason, if the luminance of a target pixel is higher than the luminance of the surrounding pixels, then the local contrast of the high luminance portion is kept from being over-enhanced. That is, the luminance of the target pixel is kept from becoming saturated at the high luminance, resulting in "blooming."

<<2>>

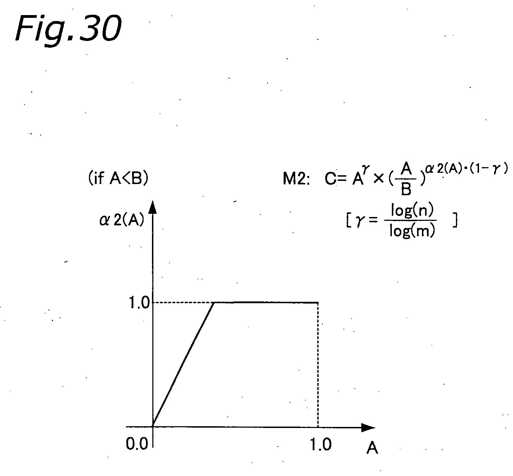

If the exponent of the enhancement function F5 is a function of the value [A] of the target contrast signal JS, and the value [A] of the target contrast signal JS is smaller than the value [B] of the unsharp signal US, then the enhancement function F5 is a function that monotonically increases. More specifically, the exponent of the enhancement function F5 is expressed as $\alpha2(A) * (1-\gamma)$, where the function $\alpha2(A)$ is a function that monotonically increases with respect to the value [A] of the target contrast signal JS is shown in Fig. 30. It should be noted that the maximum value of the function $\alpha2(A)$ is [1.0].

In this case, there is little enhancement of the local contrast of low luminance portions by the enhancement function F5. For this reason, if the luminance of a target pixel is lower than the luminance of the surrounding pixels, then the local contrast of the low luminance portion is kept from being over-enhanced. That is, the luminance of the target pixel is kept from being saturated at the low luminance and resulting in black squashing.

<<3>>

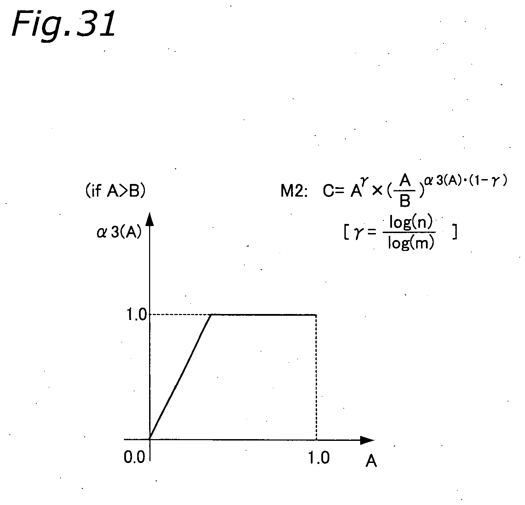

If the exponent of the enhancement function F5 is a function of the value [A] of the target contrast signal JS, and the value [A] of the target contrast signal JS is larger than the value [B] of the unsharp signal US, then the enhancement function F5 is a function that monotonically increases. More specifically, the exponent of the enhancement function F5 is expressed as $\alpha3(A) * (1-\gamma)$, where the function $\alpha3(A)$ is a function that monotonically increases with respect to the value [A] of the target contrast signal JS as shown in Fig. 31. It should be noted that the maximum value of the function $\alpha3(A)$ is [1.0].

In this case, there is little enhancement of the local contrast of low luminance portions by the enhancement function F5. For this reason, if the luminance of a target pixel is higher than the luminance of the surrounding pixels, then the local contrast of the low luminance portion is kept from being over-enhanced. The low luminance portions in the image have a small signal level, and thus the ratio to noise is relatively high, but by performing this processing it is possible to keep the SN ratio from becoming worse.

<<4>>

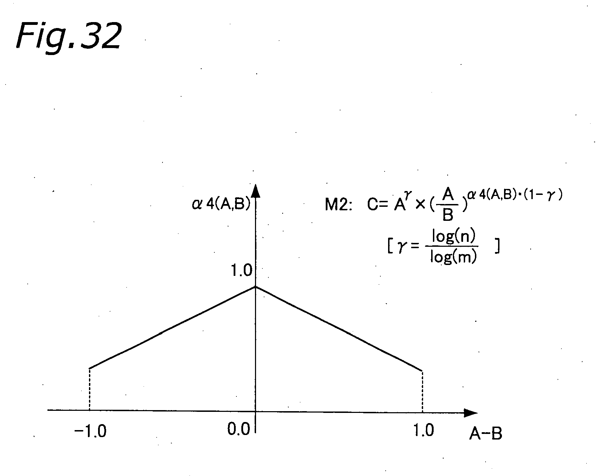

The exponent of the enhancement function F5 is a function of the value [A] of the target contrast signal JS and the value [B] of the unsharp signal US, and monotonically decreases with respect to the absolute value of the difference between the value [A] and the value [B]. In other words, the exponent of the enhancement function F5 could be said to be a function that increases the closer the ratio of the value [A] to the value [B] is to 1. More specifically, the exponent of the enhancement function F5 is expressed as $\alpha 4(A,B) * (1-\gamma)$, where the function $\alpha 4(A,B)$ is a function that monotonically decreases with respect to the absolute value of the value [A-B] as shown in Fig. 32.

In this case, it is possible to particularly enhance the local contrast in target pixels whose difference in brightness with respect to the surrounding pixels is small, and to inhibit the enhancement of the local contrast in target pixels whose difference in brightness with respect to the surrounding pixels is large.

<<5>>

It is also possible to set an upper limit or a lower limit to the result of the computation of the enhancement function F5 in <<1>> though <<4>> above. More specifically, if the value [F5(A/B)] is greater than a predetermined upper limit value, then the predetermined upper limit value can be adopted as the result of the computation of the enhancement function F5. Likewise, if the value [F5(A/B)] is lower than a predetermined lower limit value, then the predetermined lower limit value can be adopted as the result of the computation of the enhancement function F5.

In this case, it is possible to restrict the amount that the local contrast is enhanced by the enhancement function F5 to a suitable range, and this inhibits over- or under-enhancement of the contrast.

<<6>>

It should be noted that <<1>> through <<5>> discussed above can be similarly adopted in a case where a computation that employs the enhancement function F5 is performed in the first embodiment (for example, in <Profile Data> (2) or (3) in the first embodiment). It should be noted that in the first embodiment the value [A] is the value of the input signal IS, and the value [B] is the value of the unsharp signal US that is obtained by spatially processing the input signal IS.

(iii) Equation M2 - Case in which Dynamic Range Compression is not Performed -

In the foregoing embodiment, the transformed signal processing portion 602 was described as having the same configuration as the visual processing device 21 shown in the first embodiment. Here, as a modified example of the transformed signal processing portion 602 it is possible for it to have the same configuration as the visual processing device 31 shown in the first embodiment (see Fig. 19). More specifically, it is possible to achieve a modified example of the transformed signal processing portion 602 by taking the visual processing device 31 and regarding the input signal IS as the target contrast signal JS and regarding the output signal OS as the visually processed signal KS.

In this case, with the transformed signal processing portion 602 of this modified example, the visually processed signal KS (value [C]) is output based on "Equation M3" with respect to the target contrast signal JS (value [A]) and the unsharp signal US (value [B]). Here, Eq. M3 is expressed as $C = A * F5(A/B)$, using the enhancement function F5.

With the processing using Eq. M3, the dynamic range of the input signal IS is not compressed, but it is possible to enhance the local contrast. Due to the effect of enhancing the local contrast, it is possible to give the impression of a "visually" compressed or expanded dynamic range.

It should be noted that <Modified Examples> (ii) <<1>> to <5>> discussed above can be similarly adopted in this modified example as well. That is, in this modified example, the enhancement function F5 is a "power function" whose exponent has the same trend as a function $\alpha 1(A)$, $\alpha 2(A)$, $\alpha 3(A)$, and $\alpha 4(A,B)$ discussed in the above <Modified Examples> (ii) <<1>> to <4>>. As discussed in the above <Modified Example> (ii) <<5>>, it is also possible to establish an upper limit or a lower limit for the result of the computation of the enhancement function F5.

(iv) Automatic Setting of Parameters

In the foregoing embodiment, the target contrast setting portion 604 and the actual contrast setting portion 605 were described as allowing the user to set the values of the target contrast C1 and the actual contrast C2 through an input interface, for example. It is also possible for the target contrast setting portion 604 and the actual contrast setting portion 605 to automatically set the values of the target contrast C1 and the actual contrast C2.

<<1>> Display

An actual contrast setting portion 605 that automatically sets the value of the actual contrast C2 will be described below with regard to a case in which the display device for displaying the output signal OS is a display such as a PDP, LCD, or CRT, and the white luminance (white level) and black luminance (black level) that can be displayed under conditions in which there is no ambient light are known already.

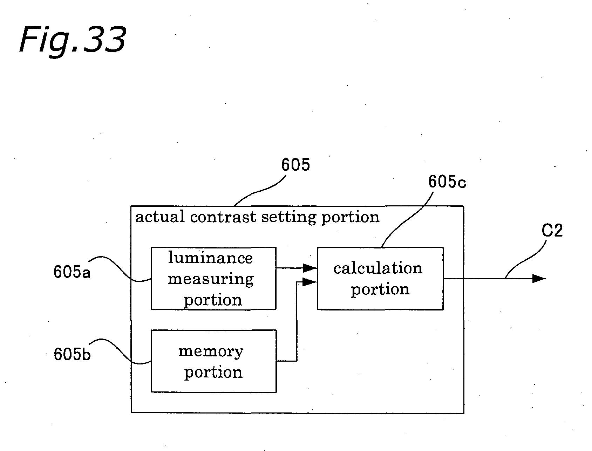

Fig. 33 shows the actual contrast setting portion 605 that automatically sets the value of the actual contrast C2. The actual contrast setting portion 605 is provided with a luminance measuring portion 605a, a memory portion 605b, and a calculation portion 605c.

The luminance measuring portion 605a is a luminance sensor that measures the luminance value of the ambient light in the display environment of the display that will display the output signal OS. The memory portion 605b stores the white luminance (white level) and black luminance (black level) that can be displayed under the condition of no ambient light by the display for displaying the output signal OS. The calculation portion 605c obtains values from the luminance measuring portion 605a and the memory portion 605b and uses these to calculate the value of the actual contrast C2.

An example of the calculation of the calculation portion 605c is described below. The calculation portion 605c adds the luminance value of the ambient light that it obtains from the luminance measuring portion 605a to each of the luminance value of the black level and the luminance value of the white level stored in the memory portion 605b. The calculation portion 605c then divides the result obtained by this addition to the luminance value of the white level by the result obtained by this addition to the luminance value of the black level, and outputs the value that is obtained as the value [n] of the actual contrast C2. Thus, the value [n] of the actual contrast C2 indicates the contrast value that is displayed by the display in a display environment in which there is ambient light.

It is also possible for the memory portion 605b shown in Fig. 33 to store the ratio of the white luminance (white level) and black luminance (black level) that can be displayed by the display under the condition of no ambient light as the value [m] of the target contrast C1. In this case, the actual contrast setting portion 605 simultaneously also functions as the target contrast setting portion 604 for automatically setting the target contrast C1. It should be noted that it is also possible for the memory portion 605b to not store this ratio and instead for this ratio to be calculated by the calculation portion 605c.

<<2>> Projector

An actual contrast setting portion 605 that automatically sets the value of the actual contrast C2 will be described below with regard to a case in which the display device for displaying the output signal OS is a projector, for example, and the white luminance (white level) and black luminance (black level) that can be displayed under the conditions of no ambient light depend on the distance to the screen.

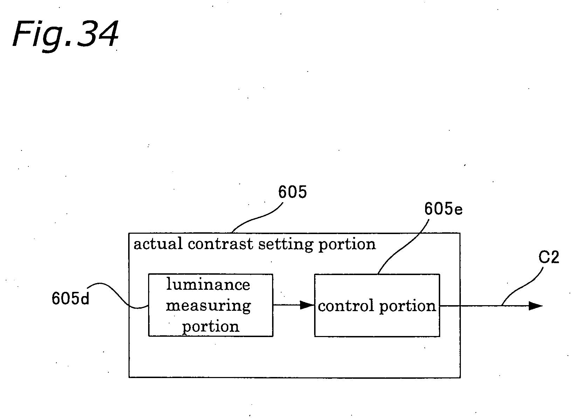

Fig. 34 shows an actual contrast setting portion 605 for automatically setting the value of the actual contrast C2. The actual contrast setting portion 605 is provided with a luminance measuring portion 605d and a control portion 605e.

The luminance measuring portion 605d is a luminance sensor that measures the luminance value in the display environment of the output signal OS that is displayed by the projector. The control portion 605e causes the projector to perform a display of the white level and the black level. It also obtains the luminance values when those levels are displayed from the luminance measuring portion 605d and calculates the value of the actual contrast C2.

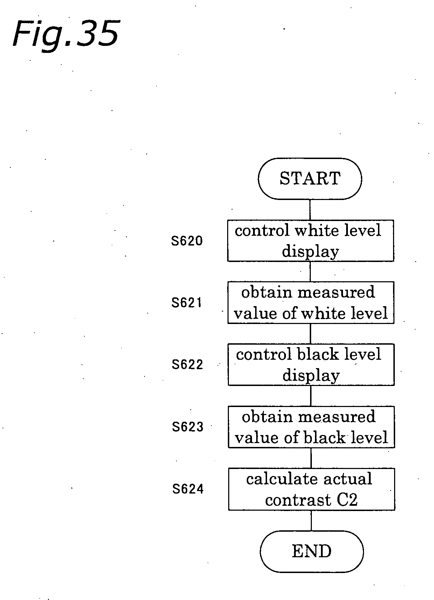

An example of the operation of the control portion 605e is described using Fig. 35. First, the control portion 605e operates the projector in a display environment in which ambient light is present and causes it to perform a display of the white level (step S620). The control portion 605e obtains the luminance value of the white level that has been measured from the luminance measuring portion 605d (step S621). Next, the control portion 605e operates the projector in a display environment in which ambient light is present and causes it to perform a display of the black level (step S622). The control portion 605e obtains the luminance value of the black level that has been measured from the luminance measuring portion 605d (step S623). The control portion 605e then calculates the ratio between the luminance value of the white level and the luminance value of the black level that have been obtained, and outputs the result as the value of the actual contrast C2. The result of this is that the value [n] of the actual contrast C2 indicates the contrast value that is displayed by the projector in a display environment in which ambient light is present.

In the same manner as described above, it is also possible to derive the value [m] of the target contrast C1 by calculating the ratio of the white level to the black level in a display environment in which no ambient light is present. In this case, the actual contrast setting portion 605 ends up simultaneously also achieving the function of the target contrast setting portion 604 for automatically setting the target contrast C1.

(v) Other Signal Space

In the foregoing embodiment, the processing in the visual processing device 600 was described as being performed with respect to the luminance of the input signal IS. Here, the present invention is not limited to being useful for only a case in which the input signal IS is represented by a YCbCr color space. It is also possible for the input signal IS to be represented in YUV color space, Lab color space, Luv color space, YIQ color space, XYZ color space, or YPbPr color space, for example. In the case of these, it is possible to execute the processing described in the foregoing embodiment with respect to the luminance or brightness of that color space.

Also, if the input signal IS is represented in RGB color space, then the processing by the visual processing portion 600 can also be performed independently for each RGB component. That is, processing by the target contrast transformation portion 601 is performed independently for the RGB components of the input signal IS, and the RGB components of the target contrast signal JS are output. Also, processing by the transformed signal processing portion 602 is performed independently for each of the RGB components of the target contrast signal JS, and the RGB components of the visually processed signal KS are output. Further, processing by the actual contrast transformation portion 603 is performed independently for the RGB components of the visually processed signal KS, and the RGB components of the output signal OS are output. Here, the same value for the target contrast C1 and for the actual contrast C2 can be used to process each of the RGB components.

(vi) Color Difference Correction

The visual processing device 600 can be further provided with a color difference correcting portion in order to prevent the hue of the output signal OS from differing from the hue of the input signal IS due to the impact of the luminance component that has been processed by the transformed signal processing portion 602.

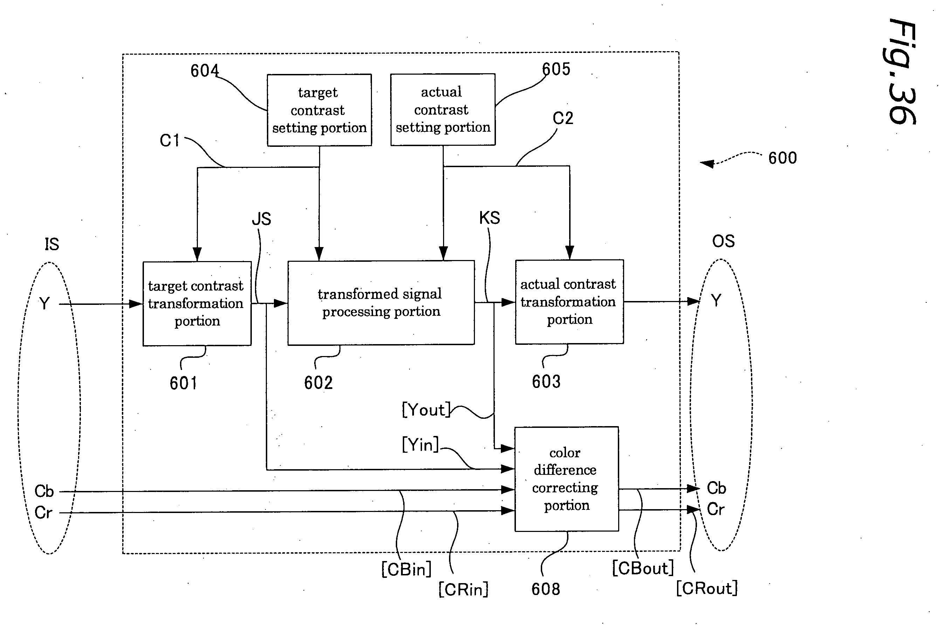

Fig. 36 shows the visual processing device 600 provided with a color difference correcting portion 608. It should be noted that the structural components that are the same as those of the visual processing device 600 shown in Fig. 24 are assigned the same reference numerals. The input signal IS shall have a YCbCr color space, in which the Y component is subjected to the same processing as described in the above embodiment. The color difference, correcting portion 608 is described below.

The color difference correcting portion 608 receives the target contrast signal JS as a first input (value [Yin]), the visually processed signal KS as a second input (value [Yout]), the Cb component of the input signal IS as a third input (value [CBin]), and the Cr component of the input signal IS as a fourth input (value [CRin]), and outputs the Cb component after color difference correction as a first output (value [CBout]), and the Cr component after color difference correction as a second output (value [CRout]).

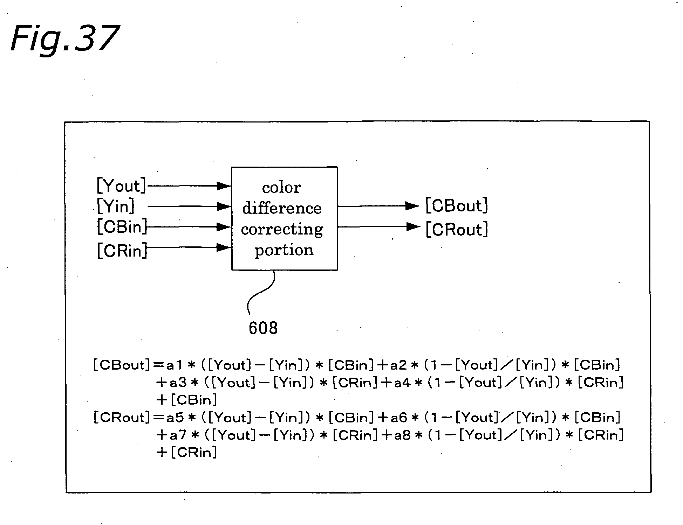

Fig. 37 shows an overview of color difference correction. The color difference correcting portion 608 has four inputs [Yin], [Yout], [CBin], and [CRin], and by performing computations with these four inputs, obtains two outputs [CBout] and [CRout].

[CBout] and [CRout] are derived based on the following equations for correcting [CBin] and [CRin] based on the difference and the ratio between [Yin] and [Yout].

[CBout] is derived based on a1 * ([Yout]-[Yin]) ∗ [CBin] + a2 ∗ (1-[Yout]/[Yin]) ∗ [CBin] + a3 ∗ ((Yout)-[Yin]) ∗ [CRin] + a4 ∗ (1-[Yout]/[Yin]) ∗ [CRin] + [CBin] (hereinafter, referred to as the CB equation).

[CRout] is derived based on a5 ∗ ([Yout]-[Yin]) ∗ [CBin] + a6 ∗ (1-[Yout]/[Yin]) ∗ [CBin] + a7 ∗ ([Yout]-[Yin]) ∗ [CRin] + a8 ∗ (1-[Yout]/[Yin]) ∗ [CRin] + [CRin] (hereinafter, referred to as the CR equation).

The values that are used for the coefficients a1 to a8 in the CB equation and the CR equation are determined by a calculating device outside the visual processing device 600, for example, in advance by an estimation computation that is described below.

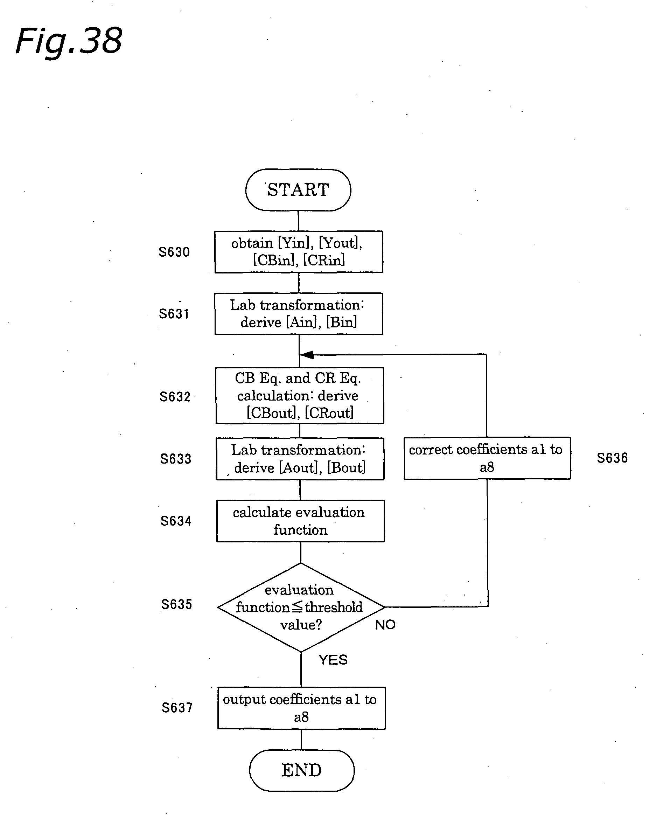

The computation for estimating the coefficients a1 to a8 with a calculating device or the like is described below using Fig. 38.

First, the four inputs of [Yin], [Yout], [CBin], and [CRin] are obtained (step S630). The value of each of these inputs is data that has been prepared in advance to determine the coefficients a1 to a8. For example, [Yin], [CBin], and [CRin] can each be a value that is obtained by decimating all of the obtainable values at a predetermined interval. As [Yout], it is possible to use a value that is obtained by decimation at a predetermined interval of the values that can be output when the value of [Yin] has been input to the transformed signal processing portion 602. The data that has been prepared in this manner are obtained as the four inputs.

The [Yin], [CBin], and [CRin] that are obtained are transformed into a Lab color space and the chromaticity values [Ain] and [Bin] in the transformed Lab color space are calculated (step S631).

Next, default coefficients a1 to a8 are used to perform the calculations of the "CB equation" and the "CR equation," from these obtaining values for [CBout] and [CRout] (step S632). These obtained values and [Yout] are transformed into Lab color space, and the chromaticity values [Aout] and [Bout] in the transformed Lab color space are calculated (step S633).

Next, the chromaticity values [Ain], [Bin], [Aout], and [Bout] that have been calculated are used to perform calculation of an evaluation function (step S634), and then it is determined whether or not the value of the evaluation function is equal to or less than a predetermined threshold value. Here, the evaluation function is a function whose value is small if the hue change is small between [Ain] and [Bin] and between [Aout] and [Bout], and for example it is the squared-sum of the deviation between each of these components. More specifically, it can be ([Ain]-[Aout])^2 + ([Bin]-[Bout])^2.

If the value of the evaluation function is greater than the predetermined threshold value (step S635), then the coefficients a1 to a8 are corrected (step S636), and the computations of the steps S632 to S635 are repeated using the new coefficients.

If the value of the evaluation function is less than the predetermined threshold value (step S635), then the coefficients a1 to a8 that have been used for calculating the evaluation function are output as the results of the estimation computation (step S637).

It should be noted that in the estimation calculation, any one of the combinations of the four inputs [Yin], [Yout], [CBin], and [CRin], which are prepared in advance, can be used to estimate the coefficients a1 through a8, but it is also possible to use a plurality of combinations to perform the above processing and then output the coefficients a1 through a8 having the smallest evaluation function as the outcome of the estimation calculation.

[Modified Examples of Color Difference Correction]

<<1>>

With the color difference correcting portion 608, [Yin] is taken as the value of the target contrast signal JS, [Yout] is taken as the value of the visually processed signal KS, [CBin] is taken as the value of the Cb component of the input signal IS, [CRin] is taken as the value of the Cr component of the input signal IS, [CBout] is taken as the value of the Cb component of the output signal OS, and [CRout] is taken as the value of the Cr component of the output signal OS. Here, it is also possible for [Yin], [Yout], [CBin], [CRin], [CBout], and [CRout] to represent other signal values.

For example, if the input signal IS is in RGB color space, then the target contrast transformation portion 601 (see Fig. 24) performs processing with respect to each of these components of the input signal IS. In this case, the processed RGB color space signal can be transformed into a YCbCr color space signal in which [Yin] is the value of the Y component, [CBin] is the value for the Cb component, and [CRin] is the value of the Cr component.

Further, if the output signal OS is a signal in RGB color space, then derived values for [Yout], [CBout], and [CRout] are transformed into an RGB color space, and each of these components is transformed by the actual contrast transformation portion 603 to produce the output signal OS.

<<2>>

It is also possible for the color difference correcting portion 608 to use the ratio of the signal values before and after processing by the transformed signal processing portion 602 to correct each of the R, G, and B components that are input to the color difference correcting portion 608.

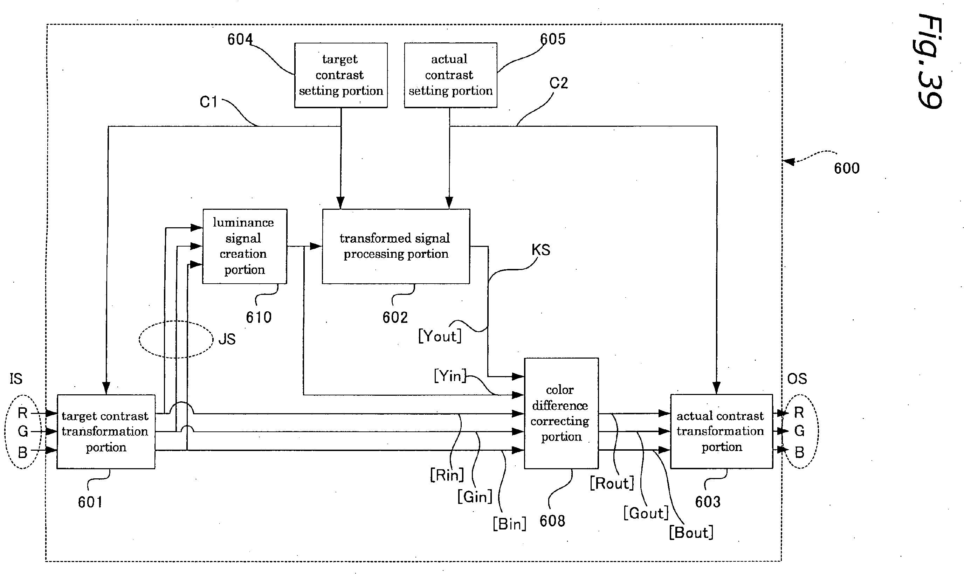

A modified example of the structure of the visual processing device 600 is described using Fig. 39. It should be noted that portions that attain substantially the same function as those of the visual processing device 600 shown in Fig. 36 are assigned identical reference numerals and shall not be described here. A feature of the configuration of the visual processing device 600 of this modified example is that it is provided with a luminance signal creation portion 610.

Each component of the input signal IS, which is a signal in RGB color space, is transformed to a target contrast signal JS, which is a signal in RGB color space, in the target contrast transformation portion 601. This process is described in detail above and thus will not be described here. Here, [Rin], [Gin], and [Bin] serve as the values of the respective components of the target contrast signal JS.

The luminance signal creation portion 610 creates a luminance signal having the value [Yin] from the various components of the target contrast signal JS. The luminance signal is found by taking the sum of the values of the R, G, and B components in a particular proportion. For example, the value [Yin] can be found by the equation [Yin] = 0.299*[Rin] + 0.587*[Gin] + 0.114*[Bin].

The transformed signal processing portion 602 processes the luminance signal having the value [Yin] and outputs the result as a visually processed signal KS having the value [Yout]. More specifically, this processing is the same as the processing by the transformed signal processing portion 602 (see Fig. 36), which outputs the visually processed signal KS from the target contrast signal JS, and thus will not be described here further.

The color difference correcting portion 608 uses the luminance signal (value [Yin]), the visually processed signal KS (value [Yout]), and the target contrast signal JS (value [Rin], [Gin], and [Bin]) to output a color difference correction signal (value [Rout], [Gout], [Bout]), which is a signal in RGB color space.

More specifically, the color difference correcting portion 608 calculates the value [Yin] to value [Yout] ratio (the value [[Yout]/[Yin]]). The calculated ratio is multiplied to each component of the target contrast signal JS (values [Rin], [Gin], and [Bin]) as a color difference correction coefficient. Accordingly, a color difference correction signal (values [Rout], [Gout], and [Bout]) is output.

The actual contrast transformation portion 603 transforms each component of the color difference correction signal, which is a signal in RGB color space, transforming it into an output signal OS, which is a signal in RGB color space. The details for this processing have been discussed before, and this will not be described here.

With the visual processing device 600 of this modified example, the transformed signal processing portion 602 performs processing only with respect to the luminance signal, and thus it is not necessary to process each RGB component. Thus, the visual processing burden per input signal IS in RGB color space is reduced.

<<3>>

The "CB equation" and "CR equation" are only examples, and other equations can also be used.

(vii) Visual Processing Portion 623

The visual processing portion 623 shown in Fig. 24 can also be constituted by a two-dimensional LUT.

In this case, the two-dimensional LUT stores the values of the visually processed signal KS with respect to the values of the target contrast signal JS and the values of the unsharp signal US. More specifically, the values of the visual processing signal KS are determined based on "Eq. M2," which was described in [First Embodiment] <Profile Data> (2) «Second Profile Data». It should be noted that in the "Eq. M2" the value of the target contrast signal JS serves as the A value and the value of the unsharp signal US is used as the value B.

The visual processing device 600 is provided with a plurality of such two-dimensional LUTs in a memory device (not shown). Here, the memory device can be internally provided in the visual processing device 600, or it can be connected to an external portion thereof through a wired or wireless connection. Each two-dimensional LUT stored on the memory device is correlated to the values of the target contrast C1 and the values of the actual contrast C2. That is, the same computation as that described above in [Second Embodiment] <Transformed Signal Processing Portion 602> «Action of Transformation Signal Processing Portion 602» is performed with respect to each combination of the value of the target contrast C1 and the value of the actual contrast C2, and stores the result as a two-dimensional LUT.

When the visual processing portion 623 obtains the values of the target contrast C1 and the actual contrast C2, the two-dimensional LUT that corresponds to those values that have been obtained from among the two-dimensional LUTs stored on the memory device is read out. Then, the visual processing portion 623 uses the two-dimensional LUT that has been read out and performs visual processing. More specifically, the visual processing portion 623 obtains the value of the target contrast signal JS and the value of the unsharp signal US, and reads the value of the visually processed signal KS corresponding to those obtained values from the two-dimensional LUT and outputs the visually processed signal KS.

[Third Embodiment]

<1>

Applied examples of the visual processing devices, visual processing methods, and visual processing programs described above in the first and second embodiments, and a system using the same, are described below as a third embodiment of the present invention.

The visual processing device is a device for processing images that is provided in or connected to a machine that handles images, such as a computer, a television, a digital camera, a portable telephone, a PDA, a printer, or a scanner, and is achieved by an integrated circuit such as an LSI.

More specifically, each functional block of the foregoing embodiments can each be separately achieved as single chips, or can be achieved by a single chip that incorporates some or all of those functions. It should be noted that here reference is made to LSIs, but depending on the degree of integration, these may also be referred to as ICs, system LSIs, super LSIs, or ultra LSIs.

Further, the manner in which the circiuit integration is achieved is not limited to LSIs, and it is also possible to use a dedicated circuit or a general purpose processor. After LSI manufacturing, it is also possible to employ a programmable FPGA (Field Programmable Gate Array) or a reconfigurable processor in which the connections and settings of the circuit cells within the LSI can be reconfigured.

Further, if other technologies that improve upon or are derived from semiconductor technology enable integration technology to replace LSIs, then naturally it is also possible to integrate the functional blocks using that technology. Biotechnology applications are one such foreseeable example.

The various blocks of the visual processing devices described above in the first and second embodiments are for example processed by a central processing unit (CPU) provided in the visual processing device. Also, a program for performing those processes is stored on a memory device such as a hard disk or a ROM, and this program is run on the ROM, or read to and run on a RAM.

The two-dimensional LUT 4 in the visual processing device 1 of Fig. 1 is stored on a memory device such as a hard disk or ROM, and is referenced when necessary. Further, the visual processing device 3 receives profile data that are provided to it from the profile data registration device 8, which is connected to the visual processing device 1 directly or indirectly over a network, and these are registered as the two-dimensional LUT 4.

The visual processing device can also be a device that performs gradation processing of the images of each frame (each field) that is provided in or is connected to a device that handles moving images.

The visual processing method described in the first embodiment is executed on the visual processing device 1.

The visual processing program is a program for executing visual processing of images, and is stored on a memory device such as a hard disk or ROM in a device provided in or connected to a machine that handles images, such as a computer, a television, a digital camera, a portable telephone, a PDA, a printer, or a scanner. The program is for example provided via a storage medium such as a CD-ROM or via a network.

<2>

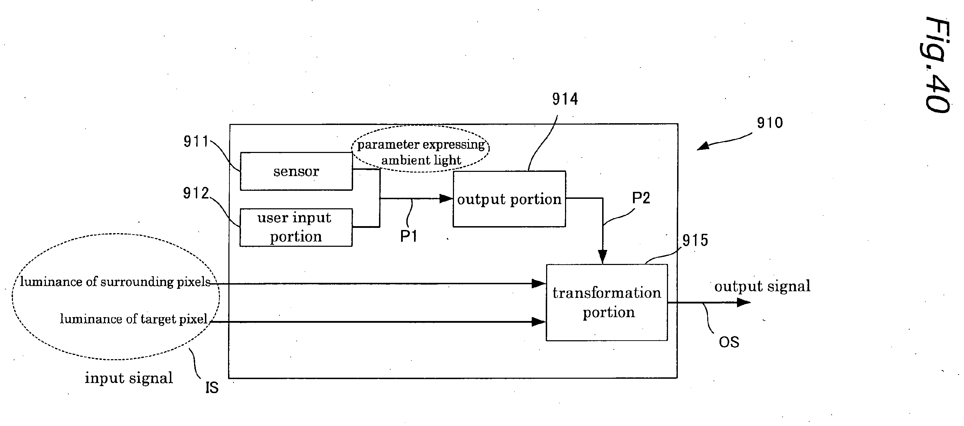

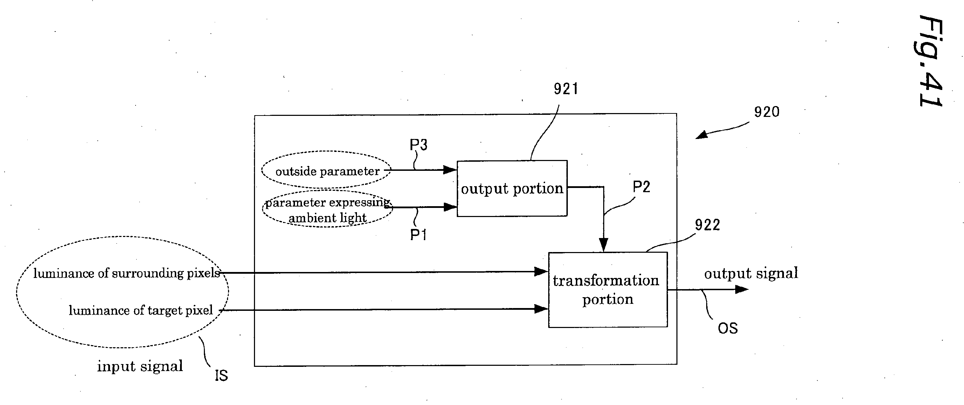

It is also possible for the visual processing devices described above in the first and second embodiments to be expressed by the configurations shown in Fig. 40 and Fig. 41.

(1)

«Configuration»

Fig. 40 is a block diagram that shows the configuration of a visual processing device 910 that achieves the same functions as the visual processing device 525 shown using Fig. 7 for example.

In the visual processing device 910, a sensor 911 and a user input portion 912 have the same functions as the input device 527 (see Fig. 7). More specifically, the sensor 911 is a sensor that detects the ambient light in the environment in which the visual processing device 910 has been placed, or in the environment in which the output signal OS from the visual processing device 910 is displayed, and outputs the detected value as a parameter P1 that expresses the ambient light. The user input portion 912 is a device through which the user can set the intensity of the ambient light in a stepwise manner, such as "strong, medium, weak," or in a non-stepwise manner (i.e. in a continuous manner), and outputs the value that is set as a parameter P1 that expresses the ambient light.

An output portion 914 has the same function as the profile data registration portion 526 (see Fig. 7). More specifically, the output portion 914 is provided with data of a plurality of profiles corresponding to the values of the parameter P1, which expresses the ambient light. Here, the profile data are data in a table format that give a value of an output signal OS with respect to the input signal IS and the signal obtained by spatially processing the input signal IS. Further, the output portion 914 outputs profile data corresponding to the value of the parameter P1, which expresses the ambient light, that has been obtained to a transformation portion 915 as a luminance adjustment parameter P2.

The transformation portion 915 has the same function as the spatial processing portion 2 and the visual processing portion 3 (see Fig. 7). The transformation portion 915 receives the luminance of the pixel in question (target pixel) to be subjected to visual processing, the luminance of the surrounding pixels positioned around the target pixel, and the luminance adjustment parameter P2 as input, transforms the luminance of the target pixel, and outputs the result as the output signal OS.

More specifically, the transformation portion 915 spatially processes the target pixel and the surrounding pixels. The transformation portion 915 also reads the value of the output signal OS corresponding to the pixel being processed and the result of the spatial processing from the values of the luminance adjustment parameter P2, which are in a table format, and outputs this as the output signal OS.

<<Modified Examples>>

(1)

In the above configuration, the luminance adjustment parameter P2 is not limited to the above-described profile data. For example, it is also possible for the luminance adjustment parameter P2 to be coefficient matrix data used when computing the value of the output signal OS from the luminance of the pixel being processed and the luminance of the surrounding pixels. Here, coefficient matrix data are data storing the coefficient portion of the function used when computing the value of the output signal OS from the luminance of the pixel being processed and the luminance of the surrounding pixels.

(2)

It is not necessary for the output portion 914 to be provided with profile data or coefficient matrix data for all the values of the parameter P1, which expresses the ambient light. In this case, it is also possible to suitably interpolate or extrapolate the profile data e.g. that have been provided in correspondence with the parameter P1, which expresses the ambient light, that has been obtained, so as to create appropriate profile data e.g.

(2)

<<Configuration>>

Fig. 41 is a block diagram that shows the configuration of a visual processing device 920 that has the same functions as the visual processing device 600 shown using Fig. 24.

With the visual processing device 920, the output portion 921 further obtains an outside parameter P3 in addition to the parameter P1, which expresses the ambient light, and outputs the luminance adjustment parameter P2 based on the parameter P1, which expresses the ambient light, and the outside parameter P3.

Here, the parameter P1 that expresses the ambient light is the same as that described in (1) above.

The outside parameter P3 is a parameter expressing e.g. the visual effect desired by the user who will view the output signal OS. More specifically, it is a value such as the contrast desired by the user who will view the image (target contrast). Here, the outside parameter P3 is set by the target contrast setting portion 604 (see Fig. 24). Alternatively, it is set using a default value stored on the output portion 921 in advance.

The output portion 921 calculates the value of the actual contrast through the configuration shown in Fig. 33 and Fig. 34 from the parameter P1, which expresses the ambient light, and outputs the result as the luminance adjustment parameter P2. The output portion 921 outputs the outside parameter P3 (target contrast) as the luminance adjustment parameter P2. The output portion 921 also stores data of a plurality of profiles stored in the two-dimensional LUT described in [Second Embodiment] <Modified Example> (vii), and selects profile data based on the actual contrast that has been calculated from the outside parameter P3 and the parameter P1, which expresses the ambient light, and outputs this data, which is in the form of a table, as the luminance adjustment parameter P2.

A transformation portion 922 has the same function as the target contrast transformation portion 601, the transformed signal processing portion 602, and the actual contrast transformation portion 603 (for these, see Fig. 24). More specifically, the transformation portion 922 receives the input signal IS (luminance of the pixel being processed and luminance of the surrounding pixels) and the luminance adjustment parameter P2 as input, and outputs an output signal OS. For example, the input signal IS is transformed into the target contrast signal JS (see Fig. 24) using the target contrast obtained as the luminance adjustment parameter P2. It then spatially processes the target contrast signal JS, thus deriving the unsharp signal US (see Fig. 24).

The transformation portion 922 is provided with the visual processing portion 623 of the modified example described in [Second Embodiment] <Modified Example> (vii), and outputs the visually processed signal KS (see Fig. 24) from the profile data obtained as the luminance adjustment parameter P2, the target contrast signal JS, and the unsharp signal US. The visually processed signal KS is then transformed into the output signal OS using the actual contrast that is obtained as the luminance adjustment parameter P2.

With the visual processing device 920, it is possible to select the profile data to be used for visual processing based on the outside parameter P3 and the parameter P1, which expresses the ambient light, and also, it is possible to compensate for the effect of the ambient light to improve the local contrast, even in an environment where ambient light is present, bringing the contrast closer to the contrast desired by the user who will view the output signal OS.

«Modified Examples»

It should be noted that it is possible to perform the same modifications as those discussed in (1) with this configuration as well.

Where necessary, it is also possible to switch the configuration described in (1) and the configuration described in (2). This switching can be performed using a switch signal from the outside. It is also possible to determine which of the configurations to use based on whether or not the outside parameter P3 is present.

Although the actual contrast was described as being calculated by the output portion 921, it is also possible to adopt a configuration in which the value of the actual contrast is directly input to the output portion 921.

(3)

With the configuration shown in Fig. 41, it is further possible to adopt means for keeping the input from the output portion 921 to the transformation portion 922 from changing abruptly.

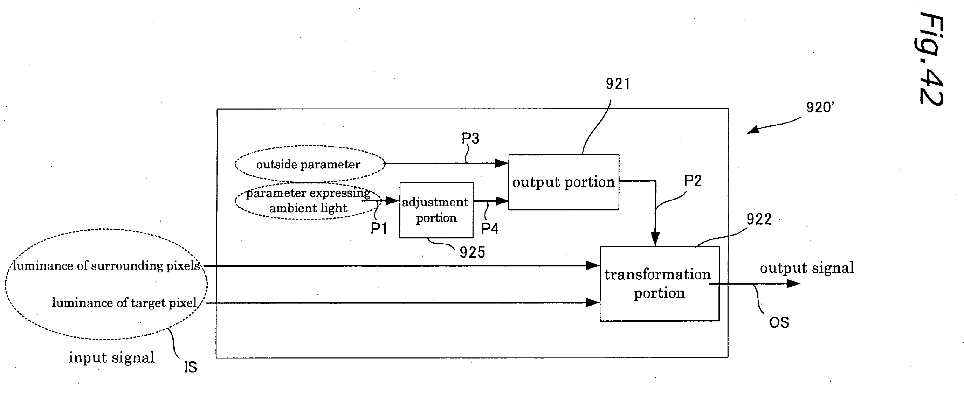

A visual processing device 920' shown in Fig. 42 differs from the visual processing device 920 shown in Fig. 41 in that it is further provided with an adjustment portion 925 that eases the change over time in the parameter P1, which expresses the ambient light. The adjustment portion 925 receives the parameter P1 expressing the ambient light as input and outputs a post-adjustment output P4.

By doing this, it becomes possible for the output portion 921 to obtain a parameter P1 that expresses the ambient light that does not change abruptly, and as a result, the change in the output of the output portion 921 over time also becomes gentle.

The adjustment portion 925 is achieved by an IIR filter, for example. Here, with an IIR filter, the value [P4] of the output P4 of the adjustment portion 925 is calculated by [P4] = k1∗[P4]' + k2∗[P1]. In the equation, k1 and k2 are each parameters that take a positive value, [P1] is the value of the parameter P1, which expresses the ambient light, and [P4]' is the value of the delay output (for example, the previous output) of the output P4 of the adjustment portion 925. It should be noted that the processing in the adjustment portion 925 can also be performed using a component other than an IIR filter.

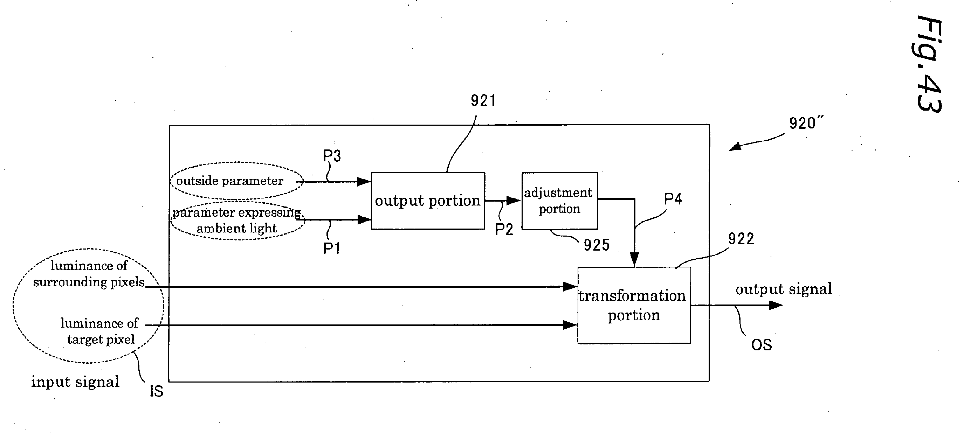

Further, it is also possible for the adjustment portion 925 to be means that directly smoothes the change in the luminance adjustment parameter P2 over time that is provided on the output side of the output portion 921, as in the visual processing device 920'' shown in Fig. 43.

Here, the operation of the adjustment portion 925 is the same as that described above. More specifically, the value [P4] of the output P4 of the adjustment portion 925 is calculated by [P4] = k3*[P4]' + k4*[P2]. In the equation, k3 and k4 are each parameters that take a positive value, [P2] is the value of the luminance adjustment parameter P2, and [P4]' is the value of the delay output (for example, the previous output) of the output P4 of the adjustment portion 925. It should be noted that the processing in the adjustment portion 925 can also be performed using a component other than an IIR filter.

With the configuration shown in Figs. 42 and 43, for example, it is possible to control the change over time of the parameter P1 expressing the ambient light or the luminance adjustment parameter P2. Thus, it is possible to inhibit sudden parameter fluctuations, even if the sensor 911 for detecting the ambient light responds to a person who has moved in front of the sensor and for a brief moment the parameters significantly change. As a result, flickering in the display screen can be inhibited.

[Fourth Embodiment]

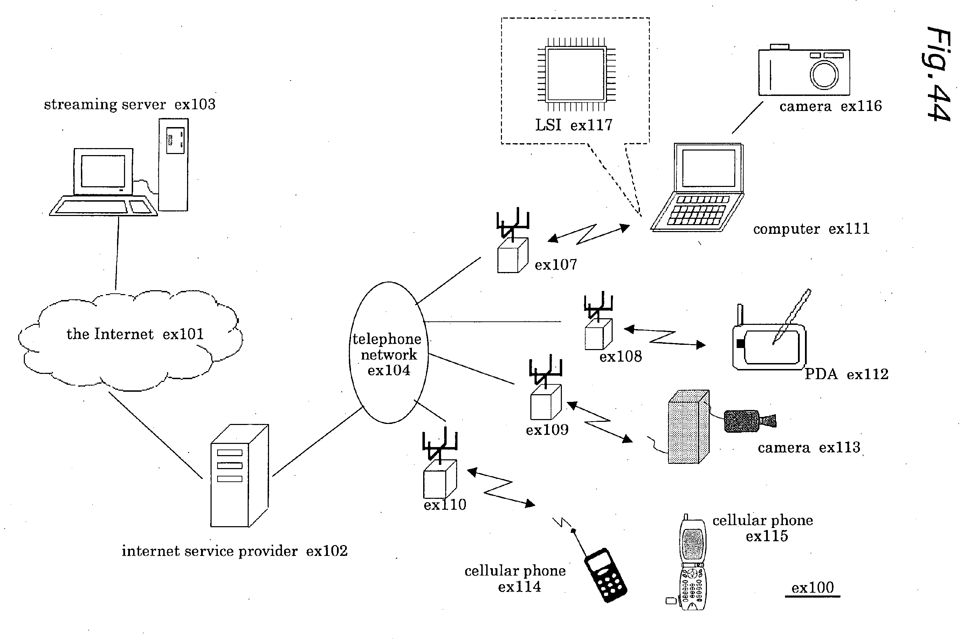

An example of the application of the visual processing devices, the visual processing methods and the visual processing programs, as well as a system using the same according to a fourth example of the present invention are described with reference to Figs. 44 to 47.

Fig. 44 is a block diagram showing an overall structure of a content providing system ex100 that realizes a content delivering service. An area where a communication service is provided is divided into cells of a desired size, and base stations ex107-ex110 that are fixed radio stations are provided in the cells.

This content providing system ex100 includes a computer ex111, a personal digital assistant (PDA) ex112, a camera ex113, a cellular phone ex114, a cellular phone with camera ex115 and other equipment that are connected to the Internet ex101 for example via an internet service provider ex102, a telephone network ex104 and base stations ex107-ex110.

However, the content providing system ex100 can adopt any combination for connection without being limited to the combination shown in Fig. 44. In addition, each of the devices can be connected directly to the telephone network ex104 without the base stations ex107-ex110 that are fixed radio stations.

The camera ex113 is a device such as a digital video camera that can obtain a moving image. In addition, the cellular phone may be any type of PDC (Personal Digital Communications) method, CDMA (Code Division Multiple Access) method, W-CDMA (Wideband-Code Division Multiple Access) method, or GSM (Global System for Mobile Communications) method, or a cellular phone of PHS (Personal Handyphone System).

In addition, the streaming server ex103 is connected to the camera ex113 via the base station ex109 and the telephone network ex104, so that live delivery can be performed on the basis of coded data transmitted by a user of the camera ex113. The coding process of the obtained data may be performed by the camera ex113 or by a server for transmitting data. In addition, the moving image data obtained by the camera ex116 may be transmitted to the streaming server ex103 via the computer ex111. The camera ex116 is a device that can take a still image like a digital camera and a moving image. In this case, coding of the moving image data may be performed by the camera ex116 or by the computer ex111. In addition, the coding process may be performed by an LSI ex117 in the computer ex111 or the camera ex116. Note that it is possible to incorporate software for coding and decoding images into a storage medium (a CD-ROM, a flexible disk, a hard disk or the like) that is a recording medium readable by the computer ex111. Furthermore, the cellular phone with camera ex115 may transmit the moving image data. In this case, the moving image data is coded by the LSI in the cellular phone ex115.

In this content providing system ex100, content (for example, a moving image of a music concert) that the user is recording with the camera ex113 or the camera ex116 are coded as shown in the above-described embodiments and transmitted to the streaming server ex103, while the streaming server ex103 delivers a stream of the content data to a client who made a request. The client may be the computer ex111, the PDA ex112, the camera ex113, the cellular phone ex114 or the like that can decode the coded data. Thus, in the content providing system ex100, the client can receive and reproduce the coded data. The system can realize personal broadcasting when the client receives, decodes and reproduces the stream in real time.

To display the content, the visual processing devices, the visual processing methods and the visual processing programs may be used. For example, the computer ex111, the PDA ex112, the camera ex113, the cellular phone ex114 or the like may be provided with the visual processing devices and execute the the visual processing methods and the visual processing programs.

The streaming server ex103 may be a device which provides the visual processing device with the profile data through the Internet ex101. Moreover, a plurality of the streaming servers ex103 may be exist and each of the streaming servers ex103 may provide different profile datas. Furthermore, the streaming server ex103 may produce the profile data. If the visual processing device can obtain the profile data through the Internet ex101, it is not necessary for the visual processing device to store a large number of profiles for the visual processing in advance, and this allows the storage capacity for the profiles to be reduced. Further, by obtaining the profiles from different servers which locate on the Internet ex101, it is possible for the visual processing device to execute different image processings.

An example regarding a cellular phone will now be described.

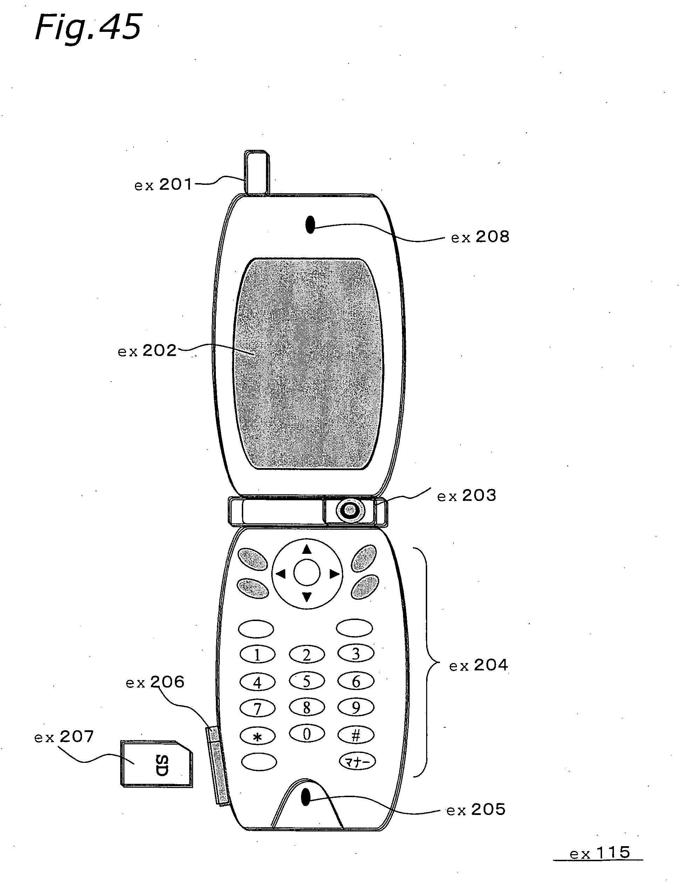

Fig. 45 shows the cellular phone ex115 that utilizes the visual processing devices of the present invention. The cellular phone ex115 includes an antenna ex201 for transmitting and receiving radio waves with the base station ex110, a camera portion ex203 such as a CCD camera that can take a still image, a display portion ex202 such as a liquid crystal display for displaying images obtained by the camera portion ex203 or images received by the antenna ex201 after the image data are decoded, a main body portion including a group of operating keys ex204, a sound output portion ex208 such as a speaker for producing sounds, a sound input portion ex205 such as a microphone for receiving sounds, a recording medium ex207 for storing coded data or decoded data such as data of taken moving images or still images, data of received e-mails, moving images or still images, and a slot portion ex206 that enables the recording medium ex207 to be attached to the cellular phone ex115. The recording medium ex207 such as an SD card includes a plastic case housing a flash memory element that is one type of EEPROM (Electrically Erasable and Programmable Read Only Memory) nonvolatile memory that is electronically rewritable and erasable.

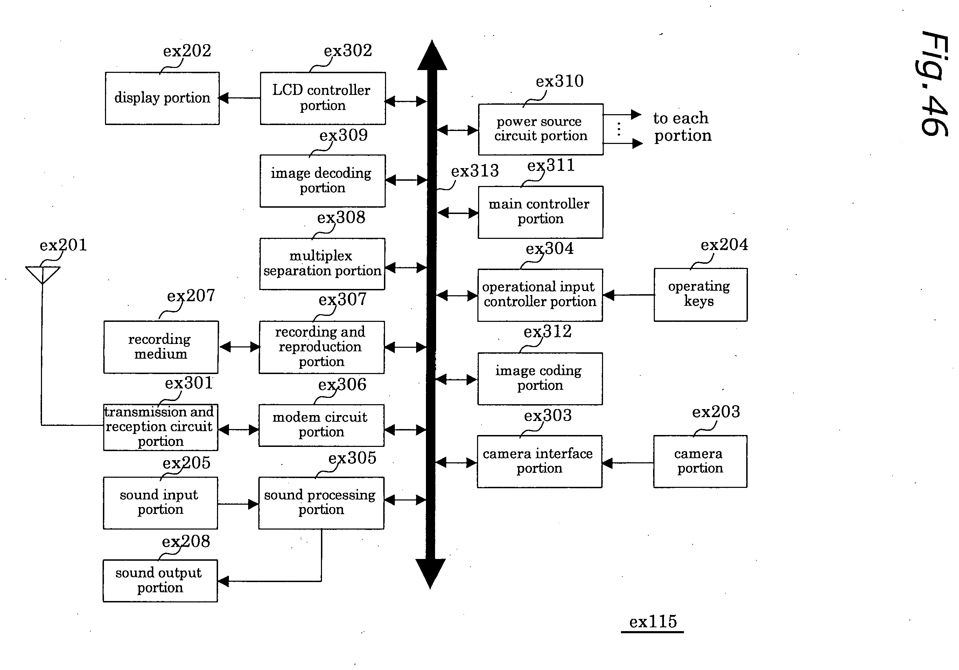

Furthermore, the cellular phone ex115 will be described with reference to Fig. 46. The cellular phone ex115 includes a main controller portion ex311 for controlling each portion of the main body portion having the display portion ex202 and the operating keys ex204, a power source circuit portion ex310, an operational input controller portion ex304, an image coding portion ex312, a camera interface portion ex303, an LCD (Liquid Crystal Display) controller portion ex302, an image decoding portion ex309, a multiplex separation portion ex308, a recording and reproduction portion ex307, a modem circuit portion ex306 and a sound processing portion ex305, which are connected to each other via a synchronizing bus ex313.

When the user turns on a clear and power key, the power source circuit portion ex310 supplies power from a battery pack to each portion so that the digital cellular phone with camera ex115 is activated.

The cellular phone ex115 converts a sound signal collected by the sound input portion ex205 during a sound communication mode into digital sound data by the sound processing portion ex305 under control of the main controller portion ex311 that includes a CPU, a ROM and a RAM. The digital sound data are processed by the modem circuit portion ex306 as a spectrum spreading process and are processed by the transmission and reception circuit portion ex301 as a digital to analog conversion process and a frequency conversion process. After that, the data are transmitted via the antenna ex201. In addition, the cellular phone ex115 amplifies a signal that is received by the antenna ex201 during the sound communication mode and performs the frequency conversion process and an analog to digital conversion process on the data, which is processed by the modem circuit portion ex306 as a spectrum inverse spreading process and is converted into a analog sound signal by the sound processing portion ex305. After that, the analog sound signal is delivered by the sound output portion ex208.

Furthermore, when transmitting electronic mail during a data communication mode, text data of the electronic mail are entered by using the operating keys ex204 of the main body portion and are given to the main controller portion ex311 via the operational input controller portion ex304. The main controller portion ex311 performs the spectrum spreading process on the text data by the modem circuit portion ex306 and performs the digital to analog conversion process and the frequency conversion process by the transmission and reception circuit portion ex301. After that, the data are transmitted to the base station ex110 via the antenna ex201.

When transmitting image data during the data communication mode, the image data obtained by the camera portion ex203 are supplied to the image coding portion ex312 via the camera interface portion ex303. In addition, if the image data are not transmitted, it is possible to display the image data obtained by the camera portion ex203 directly by the display portion ex202 via the camera interface portion ex303 and an LCD controller portion ex302.

The image coding portion ex312 converts the image data supplied from the camera portion ex203 into the coded image data by compressing and coding the data, and the coded image data are supplied to the multiplex separation portion ex308. In addition, the cellular phone ex115 collects sounds by the sound input portion ex205 while the camera portion ex203 is taking the image, and the digital sound data is supplied from the sound processing portion ex305 to the multiplex separation portion ex308.

The multiplex separation portion ex308 performs multiplexing of the coded image data supplied from the image coding portion ex312 and the sound data supplied from the sound processing portion ex305 by a predetermined method. Multiplexed data obtained as a result are processed by the modem circuit portion ex306 as a spectrum spreading process and are processed by the transmission and reception circuit portion ex301 as a digital to analog conversion process and a frequency conversion process. After that, the data are transmitted via the antenna ex201.

When receiving moving image file data that are linked to a web page during the data communication mode, a signal received from the base station ex110 via the antenna ex201 is processed by the modem circuit portion ex306 as a spectrum inverse spreading process. Multiplexed data obtained as a result are supplied to the multiplex separation portion ex308.

In addition, in order to decode multiplexed data received via the antenna ex201, the multiplex separation portion ex308 separates a coded bit stream of image data in the multiplexed data from a coded bit stream of sound data. Then, the multiplex separation portion ex308 supplies the coded image data to the image decoding portion ex309 via the synchronizing bus ex313 and supplies the sound data to the sound processing portion ex305.

Next, the image decoding portion ex309 generates reproduction moving image data by decoding the coded bit stream of the image data and supplies the data to the display portion ex202 via the LCD controller portion ex302. Thus, the moving image data included in a moving image file that is linked to a home page can be displayed. In this case, the sound processing portion ex305 converts the sound data into an analog sound signal, which is supplied to the sound output portion ex208. Thus, sound data included in the moving image file that is linked to a home page can be reproduced.

Note that the image decoding portion ex309 may be provided with the visual processing device shown in the above-described embodiments.

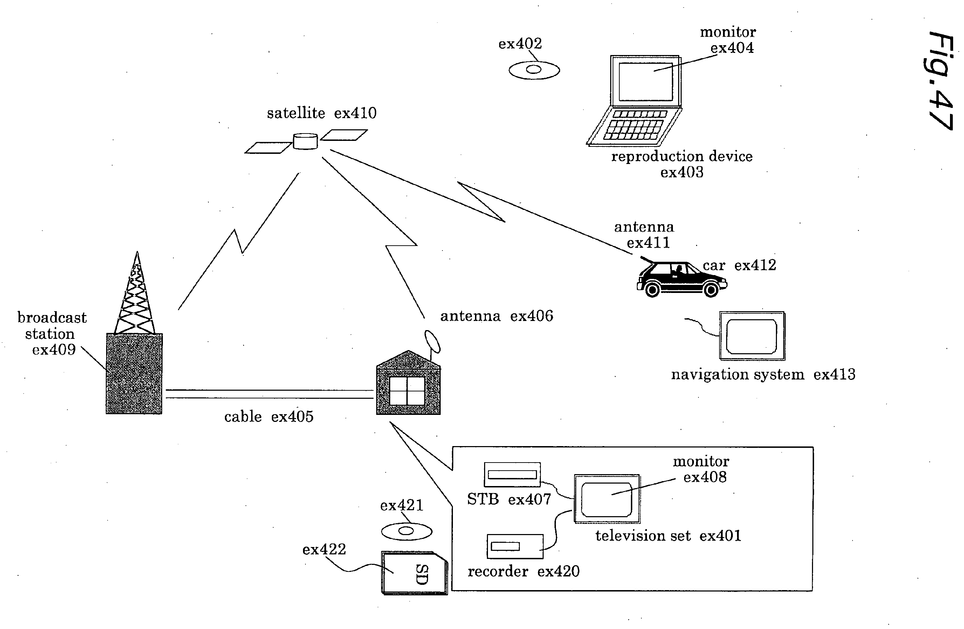

Note that the present invention is not limited to the example of the system described above. Digital broadcasting by satellite or terrestrial signals has been a recent topic of discussion. As shown in Fig. 47, the visual processing devices, the visual processing methods and the visual processing programs of the present invention can be incorporated into the digital broadcasting system, too.

More specifically, in a broadcast station ex409, a coded bit stream of image information is sent to a communication or a broadcasting satellite ex410 via a radio wave. The broadcasting satellite ex410 that received the coded bit stream of image information sends radio waves for broadcasting. These radio waves are received by an antenna ex406 of a house equipped with a satellite broadcasting reception facility, and a device such as a television set (a receiver) ex401 or a set top box (STB) ex407 decodes the coded bit stream and reproduces the same. In addition, the television set (the receiver) ex401 or the set top box (STB) ex407 may be provided with the visual processing devices shown in the above-described embodiments, use the visual processing methods shown in the above-described embodiments or execute the visual processing programs shown in the above-described embodiments. In addition, a reproduction device ex403 for reading and decoding a coded bit stream that is recorded on a storage medium ex402 such as a CD or a DVD that is a recording medium may be equipped with the visual processing devices, the visual processing methods or the visual processing programs shown in the above-described embodiments. In this case, the reproduced image signal and text track are displayed on a monitor ex404. In addition, it is possible to mount the visual processing devices, the visual processing methods or the visual processing programs shown in the above-described embodiments, in a set top box ex407 that is connected to a cable ex405 for a cable television or the antenna ex406 for a satellite or surface wave broadcasting, so that the image can be reproduced on a monitor ex408 of the television set. In this case, it is possible to incorporate the visual processing devices shown in the above-described embodiments not into the set top box but into the television set. In addition, it is possible that a car ex412 equipped with an antenna ex411 receives a signal from the broadcasting satellite ex410 or the base station ex107 and reproduces the moving image on a display of a navigation system ex413 in the car ex412.

Furthermore, it is possible to encode the image signal and record the encoded image signal in a recording medium. As a specific example, there is a recorder ex420 such as a DVD recorder for recording image signals on a DVD disk ex421 or a disk recorder for recording image signals on a hard disk. Furthermore, it is possible to record on an SD card ex422. In addition, in case that the recorder ex420 includes the decoding apparatus of the present invention, it is possible to reproduce image signals recorded on a DVD disk ex421 or a SD card ex422 via the image signal processing device, so as to display on the monitor ex408.

Note that in the structure of the navigation system ex413 shown in Fig. 46, the camera portion ex203, the camera interface portion ex303 and the image coding portion ex312 can be omitted. This can be also applied to the computer ex111 and the television set (the receiver) ex401.

In addition, the terminal device such as the cellular phone ex114 may include three types of assemblies. A first type is a transmission and reception terminal having both the coder and the decoder, a second type is a transmission terminal having only a coder and a third type is a reception terminal having only a decoder.

Thus, the visual processing devices, the visual processing methods or the visual processing programs shown in the above-described embodiments can be used for any device and system described above, so that effects described above can be obtained.

Industrial Applicability

With the visual processing device of the present invention, it is possible to obtain an image that has a better visual effect for the user who will view the visually processed image, and this device can be favorably employed as a visual processing device, and in particular, as a visual processing device that performs visual processing such as spatial processing or gradation processing of an image signal.

**Claims**

1. A visual processing device (1) comprising:

   a parameter output unit operable to output a luminance adjustment parameter based on a parameter expressing the ambient light;
   a spatial processing unit (2) operable to perform a predetermined spatial processing to an image signal (IS) of a target pixel that has been inputted, by using the image signal of pixels surrounding the target pixel, and to output, as a processed signal (US) of the target pixel, an average value of the image signal of surrounding pixels as a result of the spatial processing;
   a conversion characteristic registration unit (702) operable to register a plurality of conversion characteristics, each of which is a two-dimensional lookup table which gives a value of an output signal (OS) of the target pixel with respect to the image signal (IS) of the target pixel and the signal obtained by spatially processing the image signal (IS);
   a controller (705) operable to specify the conversion characteristics to be read out with the luminance adjustment parameter and specify a value of a degree of synthesis of the respective conversion characteristics;
   a conversion characteristic creation unit (704) operable to obtain the specified conversion characteristics from the conversion characteristic registration unit (702) and produce a created conversion characteristic with the value of the degree of synthesis; and
   a visual processing unit (3) operable to convert the image signal (IS) of the target pixel that has been inputted in accordance with the average value of surrounding pixels (US) and the created conversion characteristic, and to output the output signal (OS) of the target pixel,

   wherein the conversion characteristic is that the brightness and/or the local contrast of the image signal is adjusted based on the luminance adjustment parameter, and
   for any given value of the image signal of the target pixel, the value of the output signal of the target pixel monotonically decreases with respect to the average value of pixels surrounding the target pixel.

2. The visual processing device (1) according to claim 1,
   wherein the visual processing unit (3) converts the image signal (IS) in accordance with the conversion characteristic in which the degree of enhancement of the brightness of the image signal (IS) increases as the brightness of the ambient light increases based on the luminance adjustment parameter, and outputs the output signal (OS).

3. The visual processing device (1) according to claim 1,
   wherein the visual processing unit (3) converts the image signal (IS) in accordance with the conversion characteristic wherein the conversion characteristic is such that the values of the output signal (OS) for each value of the input signal (IS), in the case where the value of the image signal (IS) is equal to the value of the processed signal, form a curve that is convex upward, and
   wherein the degree to which the curve is convex upward increases as the brightness of the ambient light increases, based on the luminance adjustment parameter.

4. The visual processing device (1) according to any one of claims 1 to 3,

wherein the visual processing unit (3) converts the image signal (IS) in accordance with the conversion characteristic in which the degree of enhancement of the local contrast of the image signal (IS) increases as the brightness of the ambient light increases, based on the luminance adjustment parameter.

5. The visual processing device (1) according to any one of claims 1 to 4 further comprising:
a time change adjustment unit operable to control change over time in the parameter expressing the ambient light and/or the luminance adjustment parameter.

6. An image display device (ex111, ex403) comprising:

the visual processing device (1) according to any one of claims 1 to 5; and
a display unit (ex404) operable to display the output signal from the visual processing device (1).

7. A television (ex401) comprising:

a receiving unit (ex406) operable to receive a video signal;
a decoding unit operable to decode the video signal and output an image signal;
the visual processing device (1) according to claim 1; and
a display unit (ex408) operable to display the output signal from the visual processing device (1).

8. A portable information terminal (ex115) comprising:

a receiving unit (ex201. ex108) operable to receive a video signal;
a decoding unit operable to decode the video signal and output an image signal;
the visual processing device (1) according to claim 1; and
a display unit (ex202, ex112) operable to display the output signal from the visual processing device (1).

9. The image display device (ex111, ex403) comprising the visual processing device (1) according to any one of claims 1 to 5,

wherein the parameter output unit further comprises a brightness detection unit operable to detect the brightness of display environment of the display unit (ex404), and outputs the luminance adjustment parameter in accordance with the brightness of display environment detected by the brightness detection unit.

10. A camera (ex113, ex116) comprising:

a capturing unit operable to capture an image and generate an image signal; and
the visual processing device (1) according to any one of claims 1 to 5.

11. A visual processing method comprising the steps of:

outputting a luminance adjustment parameter based on a parameter expressing the ambient light;
performing a predetermined spatial processing (S11) to an image signal (IS) of a target pixel that has been inputted, by using the image signal of pixels surrounding the target pixel, and outputting, as a processed signal (US) of the target pixel, an average value of the image signal of surrounding pixels as aresult of the spatial processing;
registering a plurality of conversion characteristics, each of which is a two-dimensional lookup table which gives a value of an output signal (OS) of the target pixel with respect to the image signal (IS) of the target pixel and the signal obtained by spatially processing the image signal (IS);
specifying the conversion characteristics to be read out with the luminance adjustment parameter and specifying a value of a degree of synthesis of the respective conversion characteristics;
obtaining the specified conversion characteristics registered in the registering and producing a created conversion characteristic with the value of the degree of synthesis; and
converting (S12) the image signal (IS) of the target pixel that has been inputted in accordance with the average value of surrounding pixels (US) and the created conversion characteristic, and outputting the output signal (OS) of the target pixel,
wherein the conversion characteristic is that the brightness and/or the local contrast of the image signal (IS) is adjusted based on the luminance adjustment parameter, and

for any given value of the image signal (IS) of the target pixel, the value of the output signal (OS) of the target pixel monotonically decreases with respect to the average value of pixels surrounding the target pixel.

**12.** An integrated circuit that performs the visual processing method according to claim 11.

**13.** A visual processing program that causes a computer to perform the visual processing method according to claim 11.

**Patentansprüche**

**1.** Bildverarbeitungsvorrichtung (1) umfassend:

eine Parameterausgabeeinheit, die angepasst ist zum Ausgeben eines Luminanzanpassungsparameters basierend auf einem Parameter, der das Umgebungslicht ausdrückt;
eine räumliche Verarbeitungseinheit (2), die angepasst ist zum Durchführen einer vorbestimmten räumlichen Verarbeitung auf einem Bildsignal (IS) eines eingegebenen Zielpixels, durch Verwenden des Bildsignals von Pixeln, die den Zielpixel umgeben, und zum Ausgeben, als ein verarbeitetes Signal (US) des Zielpixels, eines Mittelwerts des Bildsignals von umgebenden Pixeln als ein Ergebnis der räumlichen Verarbeitung;
eine Umwandlungscharakteristik-Registrierungseinheit (702), die angepasst ist zum Registrieren einer Mehrzahl von Umwandlungscharakteristiken, von denen jede eine zweidimensionale Lookup-Tabelle ist, die einen Wert eines Ausgabesignals (OS) des Zielpixels in Bezug auf das Bildsignal (IS) des Zielpixels und das durch die räumliche Verarbeitung des Bildsignals (IS) erhaltene Signal angibt;
eine Steuerung (705), die angepasst ist zum Spezifizieren der mit dem Luminanzanpassungsparameter auszulesenden Umwandlungscharakteristiken und zum Spezifizieren eines Wertes eines Synthesegrades der jeweiligen Umwandlungscharakteristiken;
eine Umwandlungscharakteristik-Erzeugungseinheit (704), die angepasst ist zum Erhalten der spezifizierten Umwandlungscharakteristiken von der Umwandlungscharakteristik-Registrierungseinheit (702) und zum Erzeugen einer erzeugten Umwandlungscharakteristik mit dem Wert des Synthesegrades; und
eine Bildverarbeitungseinheit (3), die angepasst ist zum Umwandeln des Bildsignals (IS) des eingegebenen Zielpixels in Übereinstimmung mit dem Mittelwert von umgebenden Pixeln (US) und der erzeugten Umwandlungscharakteristik, und zum Ausgeben des Ausgabesignals (OS) des Zielpixels,
wobei die Umwandlungscharakteristik dergestalt ist, dass die Helligkeit und/oder der lokale Kontrast des Bildsignals basierend auf dem Luminanzanpassungsparameter angepasst wird, und
für jeden gegebenen Wert des Bildsignals des Zielpixels der Wert des Ausgabesignals des Zielpixels monoton fällt in Bezug auf den Mittelwert von Pixeln, die den Zielpixel umgeben.

**2.** Bildverarbeitungsvorrichtung (1) nach Anspruch 1,
wobei die Bildverarbeitungseinheit (3) das Bildsignal (IS) in Übereinstimmung mit der Umwandlungscharakteristik, in welcher der Grad der Erhöhung der Helligkeit des Bildsignals (IS) steigt, wenn die Helligkeit des Umgebungslichts steigt, basierend auf dem Luminanzanpassungsparameter umwandelt und das Ausgabesignal (OS) ausgibt.

**3.** Bildverarbeitungsvorrichtung (1) nach Anspruch 1,
wobei die Bildverarbeitungseinheit (3) das Bildsignal (IS) in Übereinstimmung mit der Umwandlungscharakteristik umwandelt,
wobei die Umwandlungscharakteristik dergestalt ist, dass die Werte des Ausgabesignals (OS) für jeden Wert des Eingangssignals (IS), in dem Fall, in dem der Wert des Bildsignals (IS) gleich dem Wert des verarbeiteten Signals ist, eine Kurve formen, die aufwärts konvex ist, und
wobei der Grad, zu dem die Kurve aufwärts konvex ist, steigt, wenn die Helligkeit des Umgebungslichts steigt, basierend auf dem Luminanzanpassungsparameter.

**4.** Bildverarbeitungsvorrichtung (1) nach einem der Ansprüche 1 bis 3,
wobei die Bildverarbeitungseinheit (3) das Bildsignal (IS) in Übereinstimmung mit der Umwandlungscharakteristik, in welcher der Grad der Erhöhung des lokalen Kontrastes des Bildsignals (IS) steigt, wenn die Helligkeit des Umgebungslichts steigt, umwandelt, basierend auf dem Luminanzanpassungsparameter.

**5.** Bildverarbeitungsvorrichtung (1) nach einem der Ansprüche 1 bis 4, des Weiteren umfassend:
eine Zeitänderungsanpassungseinheit, die angepasst ist zum Steuern einer Änderung über die Zeit in dem Parameter, der das Umgebungslicht ausdrückt, und/oder dem Luminanzanpassungsparameter.

**6.** Bildanzeigevorrichtung (ex111, ex403) umfassend:

die Bildverarbeitungsvorrichtung (1) nach einem der Ansprüche 1 bis 5; und
eine Anzeigeeinheit (ex404), die angepasst ist zum Anzeigen des Ausgabesignals von der Bildverarbeitungsvorrichtung (1).

**7.** Fernseher (ex401), umfassend:

eine Empfangseinheit (ex406), die angepasst ist zum Empfangen eines Videosignals;
eine Decodiereinheit, die angepasst ist zum Decodieren des Videosignals und zum Ausgeben eines Bildsignals;
die Bildverarbeitungsvorrichtung (1) nach Anspruch 1; und
eine Anzeigeeinheit (ex408), die angepasst ist zum Anzeigen des Ausgabesignals von der Bildverarbeitungsvorrichtung (1).

**8.** Tragbares Informationsterminal (ex115) umfassend:

eine Empfangseinheit (ex201, ex108), die angepasst ist zum Empfangen eines Videosignals;
eine Decodiereinheit, die angepasst ist zum Decodieren des Videosignals und zum Ausgeben eines Bildsignals;
die Bildverarbeitungsvorrichtung (1) nach Anspruch 1; und
eine Anzeigeeinheit (ex202, ex112), die angepasst ist zum Anzeigen des Ausgabesignals von der Bildverarbeitungsvorrichtung (1).

**9.** Bildanzeigevorrichtung (ex111, ex403) umfassend die Bildverarbeitungsvorrichtung (1) nach einem der Ansprüche 1 bis 5,
wobei die Parameterausgabeeinheit des Weiteren eine Helligkeitsdetektionseinheit umfasst, die angepasst ist zum Detektieren der Helligkeit der Anzeigeumgebung der Anzeigeeinheit (ex404), und die den Luminanzanpassungsparameter in Übereinstimmung mit der durch die Helligkeitsdetektionseinheit detektierten Helligkeit der Anzeigeumgebung ausgibt.

**10.** Kamera (ex113, ex116) umfassend:

eine Erfassungseinheit, die angepasst ist zum Erfassen eines Bildes und zum Erzeugen eines Bildsignals; und
die Bildverarbeitungsvorrichtung (1) nach einem der Ansprüche 1 bis 5.

**11.** Bildverarbeitungsverfahren umfassend die Schritte:

Ausgeben eines Luminanzanpassungsparameters basierend auf einem Parameter, der das Umgebungslicht ausdrückt;
Durchführen einer vorbestimmten räumlichen Verarbeitung (S11) auf einem Bildsignal (IS) eines eingegebenen Zielpixels, durch Verwendung des Bildsignals von Pixel, die den Zielpixel umgeben, und Ausgeben, als ein verarbeitetes Signal (US) des Zielpixels, eines Mittelwerts des Bildsignals von umgebenden Pixeln als ein Ergebnis der räumlichen Verarbeitung;
Registrieren einer Mehrzahl von Umwandlungscharakteristiken, von denen jede eine zweidimensionale Lookup-Tabelle ist, die einen Wert eines Ausgabesignals (OS) des Zielpixels in Bezug auf das Bildsignal (IS) des Zielpixels und das durch die räumliche Verarbeitung des Bildsignals (IS) erhaltene Signal angibt;
Spezifizieren der mit dem Luminanzanpassungsparameter auszulesenden Umwandlungscharakteristiken und Spezifizieren eines Wertes eines Synthesegrads der jeweiligen Umwandlungscharakteristiken;
Erhalten der in dem Registrieren registrierten spezifizierten Umwandlungscharakteristiken und Erzeugen einer erzeugten Umwandlungscharakteristik mit dem Wert des Synthesegrads; und
Umwandeln (S12) des Bildsignals (IS) des eingegebenen Zielpixels in Übereinstimmung mit dem Mittelwert von umgebenden Pixeln (US) und der erzeugten Umwandlungscharakteristik, und Ausgeben des Ausgabesignals (OS) des Zielpixels,
wobei die Umwandlungscharakteristik dergestalt ist, dass die Helligkeit und/oder der lokale Kontrast des Bildsignals (IS) basierend auf dem Luminanzanpassungsparameter angepasst wird; und
für jeden gegebenen Wert des Bildsignals (IS) des Zielpixels der Wert des Ausgabesignals (OS) des Zielpixels monoton in Bezug auf den Mittelwert von Pixeln, die den Zielpixel umgeben, fällt.

**12.** Integrierte Schaltung, die das Bildverarbeitungsverfahren gemäß Anspruch 11 durchführt.

**13.** Bildverarbeitungsprogramm, das bewirkt, dass ein Computer das Bildverarbeitungsverfahren gemäß Anspruch 11 durchführt.

**Revendications**

**1.** Dispositif de traitement visuel (1) comprenant:

une unité de sortie de paramètre adaptée pour délivrer un paramètre d'ajustement de luminance sur la base d'un paramètre exprimant la lumière ambiante,
une unité de traitement spatial (2) adaptée pour mettre en oeuvre un traitement spatial prédéterminé sur un signal d'image (IS) d'un pixel cible qui a été introduit, en utilisant le signal d'image de pixels entourant le pixel cible, et pour délivrer, en tant que signal traité (US) du pixel cible, une valeur moyenne du signal d'image de pixels entourants en tant que résultat du traitement spatial,
une unité d'enregistrement de caractéristiques de conversion (702) adaptée pour enregistrer une pluralité de caractéristiques de conversion, dont chacune est une table à consulter à deux dimensions qui donne une valeur d'un signal de sortie (OS) du pixel cible par rapport au signal d'image (IS) du pixel cible et au signal obtenu en traitant spatialement le signal d'image (IS),
une commande (705) adaptée pour spécifier les caractéristiques de conversion à lire avec le paramètre d'ajustement de luminance et pour spécifier une valeur d'un degré de synthèse des caractéristiques de conversion respectives,
une unité de création de caractéristiques de conversion (704) adaptée pour obtenir les caractéristiques de conversion spécifiées de l'unité d'enregistrement de caractéristiques de conversion (702) et pour produire une caractéristique de conversion créée avec la valeur du degré de synthèse, et
une unité de traitement visuel (3) adaptée pour convertir le signal d'image (IS) du pixel cible qui a été introduit, conformément à la valeur moyenne de pixels entourants (US) et la caractéristique de conversion créée, et pour délivrer le signal de sortie (OS) du pixel cible,

dans lequel la caractéristique de conversion est telle que la luminosité et/ou le contraste local du signal d'image est ajusté(e) sur la base du paramètre d'ajustement de luminance, et,
pour chaque valeur donnée du signal d'image du pixel cible, la valeur du signal de sortie du pixel cible diminue de manière monotone par rapport à la valeur moyenne de pixels qui entourent le pixel cible.

**2.** Dispositif de traitement visuel (1) selon la revendication 1,
dans lequel ladite unité de traitement visuel (3) convertit le signal d'image (IS) conformément à la caractéristique de conversion dans laquelle le degré d'augmentation de la luminosité du signal d'image (IS) augmente lorsque la luminosité de la lumière ambiante augmente, sur la base du paramètre d'ajustement de luminance, et délivre le signal de sortie (OS).

**3.** Dispositif de traitement visuel (1) selon la revendication 1,
dans lequel ladite unité de traitement visuel (3) convertit le signal d'image (IS) conformément à la caractéristique de conversion,
dans lequel la caractéristique de conversion est telle que les valeurs du signal de sortie (OS) pour chaque valeur du signal d'entrée (IS), au cas où la valeur du signal d'image (IS) serait égale à la valeur du signal traité, forment une courbe qui est convexe vers le haut, et
dans lequel le degré auquel la courbe est convexe vers le haut, augmente lorsque la luminosité de la lumière ambiante augmente, sur la base du paramètre d'ajustement de luminance.

**4.** Dispositif de traitement visuel (1) selon l'une quelconque des revendications 1 à 3,
dans lequel ladite unité de traitement visuel (3) convertit le signal d'image (IS) conformément à la caractéristique de conversion dans laquelle le degré d'augmentation du contraste local du signal d'image (IS) augmente lorsque la luminosité de la lumière ambiante augmente, sur la base du paramètre d'ajustement de luminance.

**5.** Dispositif de traitement visuel (1) selon l'une quelconque des revendications 1 à 4, comprenant en outre:
une unité d'ajustement de changement de temps adaptée pour commander un changement sur le temps dans le paramètre exprimant la lumière ambiante et/ou le paramètre d'ajustement de luminance.

**6.** Dispositif d'affichage d'image (ex111, ex403) comprenant:

ledit dispositif de traitement visuel (1) selon l'une quelconque des revendications 1 à 5, et
une unité d'affichage (ex404) adaptée pour afficher le signal de sortie du dispositif de traitement visuel (1).

7. Appareil de télévision (ex401) comprenant:

une unité de réception (ex406) adaptée pour recevoir un signal vidéo,
une unité de décodage adaptée pour décoder le signal vidéo et pour délivrer un signal d'image,
le dispositif de traitement visuel (1) selon la revendication 1, et
une unité d'affichage (ex408) adaptée pour afficher le signal de sortie du dispositif de traitement visuel (1).

8. Terminal d'information portatif (ex115) comprenant:

une unité de réception (ex201, ex108) adaptée pour recevoir un signal vidéo,
une unité de décodage adaptée pour décoder le signal vidéo et pour délivrer un signal d'image,
le dispositif de traitement visuel (1) selon la revendication 1, et
une unité d'affichage (ex202, ex112) adaptée pour afficher le signal de sortie du dispositif de traitement visuel (1).

9. Dispositif d'affichage d'image (ex111, ex403) comprenant le dispositif de traitement visuel (1) selon l'une quelconque des revendications 1 à 5,

dans lequel ladite unité de sortie de paramètre comprend en outre une unité de détection de luminosité adaptée pour détecter la luminosité de l'environnement d'affichage de l'unité d'affichage (ex404), et qui délivre le paramètre d'ajustement de luminance conformément à la luminosité de l'environnement d'affichage détectée par l'unité de détection de luminosité.

10. Caméra (ex113, ex116) comprenant:

une unité de capture adaptée pour capturer une image et pour générer un signal d'image, et
le dispositif de traitement visuel (1) selon l'une quelconque des revendications 1 à 5.

11. Procédé de traitement visuel comprenant les étapes consistant à:

délivrer un paramètre d'ajustement de luminance sur la base d'un paramètre exprimant la lumière ambiante,
mettre en oeuvre un traitement spatial prédéterminé (S11) sur un signal d'image (IS) d'un pixel cible qui a été introduit, en utilisant le signal d'image de pixels entourant le pixel cible, et délivrer, en tant que signal traité (US) du pixel cible, une valeur moyenne du signal d'image de pixels entourants en tant que résultat du traitement spatial,
enregistrer une pluralité de caractéristiques de conversion, dont chacune est une table à consulter à deux dimensions qui donne une valeur d'un signal de sortie (OS) du pixel cible par rapport au signal d'image (IS) du pixel cible et au signal obtenu en traitant spatialement le signal d'image (IS),
spécifier les caractéristiques de conversion à lire avec le paramètre d'ajustement de luminance et spécifier une valeur d'un degré de synthèse des caractéristiques de conversion respectives,
obtenir les caractéristiques de conversion spécifiées enregistrées dans l'enregistrement et produire une caractéristique de conversion créée avec la valeur du degré de synthèse, et
convertir (S12) le signal d'image (IS) du pixel cible qui a été introduit, conformément à la valeur moyenne de pixels entourants (US) et la caractéristique de conversion créée, et délivrer le signal de sortie (OS) du pixel cible,
dans lequel la caractéristique de conversion est telle que la luminosité et/ou le contraste local du signal d'image (IS) est ajusté(e) sur la base du paramètre d'ajustement de luminance, et,
pour chaque valeur donnée du signal d'image (IS) du pixel cible, la valeur du signal de sortie (OS) du pixel cible diminue de manière monotone par rapport à la valeur moyenne de pixels qui entourent le pixel cible.

12. Circuit intégré qui met en oeuvre le procédé de traitement visuel selon la revendication 11.

13. Programme de traitement visuel qui amène un ordinateur à mettre en oeuvre le procédé de traitement visuel selon la revendication 11.

Fig.1

Fig.2

EP 1 667 065 B1

C = A + 0.5 * ( A − B )

input signal IS
[value A]

unsharp signal US
[value B]

S61
S57
S53
S49
S45
S41
S37
S33
S29
S25
S21
S17
S13
S9
S5
S1

1  5  9  13  17  21  25  29  33  37  41  45  49  53  57  61

250−260
240−250
230−240
220−230
210−220
200−210
190−200
180−190
170−180
160−170
150−160
140−150
130−140
120−130
110−120
100−110
90−100
80−90
70−80
60−70
50−60
40−50
30−40
20−30
10−20
0−10

# Fig.3

```
        ┌──────────────┐
        │    start     │
        └──────┬───────┘
               │
               ▼
   ┌──────────────────────┐
   │  spatial processing  │    S11
   └──────────┬───────────┘
              │
              ▼
   ┌──────────────────────┐
   │  visual processing   │    S12
   │  based on 2D LUT     │
   └──────────┬───────────┘
              │
              ▼
        ┌──────────────┐
        │     end      │
        └──────────────┘
```

# Fig.4

visual processing portion

IS

2D
LUT

interpolating
portion

US

4

NS

501

500

OS

EP 1 667 065 B1

# Fig.5

Legend:
- 250–260
- 240–250
- 230–240
- 220–230
- 210–220
- 200–210
- 190–200
- 180–190
- 170–180
- 160–170
- 150–160
- 140–150
- 130–140
- 120–130
- 110–120
- 100–110
- 90–100
- 80–90
- 70–80
- 60–70
- 50–60
- 40–50
- 30–40
- 20–30
- 10–20
- 0–10

input signal IS [value A]

S61 S57 S53 S49 S45 S41 S37 S33 S29 S25 S21 S17 S13 S9 S5 S1

1 5 9 13 17 21 25 29 33 37 41 45 49 53 57 61

unsharp signal US [value B]

Fig.6

EP 1 667 065 B1

visual processing device

520

input signal

IS

visual processing portion

3

2D LUT

output signal

OS

4

PD

spatial processing portion

US

2

image determination portion

profile data registration portion

profile data

521

522    SA

# Fig.7

*Fig. 8*

EP 1 667 065 B1

530

**visual processing device**

visual processing portion

3

input signal

2D LUT → output signal

IS

OS

spatial processing portion

4

2

US

PD

SA
brightness detection portion

image determination portion

profile data registration portion

522

profile data

531

input device

527

532

SB

706 — parameter input portion

702 — profile data registration portion

profile data

control portion
degree of synthesis

c10
c11
c12 (degree of synthesis k)

d11
d10

profile creation portion

l=(1−k)*m+k*n

705

d6

2D LUT

visual processing portion

US
IS
OS
4
3

704
703
701

*Fig.9*

# Fig.10

```
                    ┌─────────────┐
                    │    START    │
                    └──────┬──────┘
                           │    ◄─────────────────┐
                           ▼                       │
      ┌─────────────────────────────────────┐     │
S701  │      read selected profile data     │     │
      └─────────────────┬───────────────────┘     │
                        ▼                           │
      ┌─────────────────────────────────────┐     │
S702  │      obtain degree of synthesis     │     │
      └─────────────────┬───────────────────┘     │
                        ▼                           │
      ┌─────────────────────────────────────┐     │
S703  │      create created profile data    │     │
      └─────────────────┬───────────────────┘     │
                        ▼                           │
      ┌─────────────────────────────────────┐     │
S704  │    write created profile data to    │     │
      │                2D LUT               │     │
      └─────────────────┬───────────────────┘     │
                        ▼                           │
                   ╱─────────╲                      │
                  ╱    all    ╲                     │
S705             ╱ data processing╲────────────────┘
                 ╲   finished?   ╱
                  ╲─────────────╱
                        │
                        ▼
                 ┌─────────────┐
                 │     END     │
                 └─────────────┘
```

*Fig.11*

visual processing device

901

903

transformation portion

[y] output signal

OS'

[x]

[z]

input signal

IS'

processing portion

902

US'

*Fig.12*

*Fig.13*

(a)

f1(z)

a3

1 ‑ ‑ ‑ ‑ ‑ ‑ ‑ ‑ ‑ ‑ ‑ ‑ ‑ ‑ ‑ ‑ ‑

a1

a2

0

z

monotonously decreasing

(b)

f2(z)

b3

0

z

b1

b2

monotonously decreasing

EP 1 667 065 B1

*Fig.14*

Fig.15

EP 1 667 065 B1

Fig.15

## Fig.16

*Fig.17*

# Fig.18

*Fig.19*

spatial processing portion

enhancing portion

IS

OS

TS

RS

US

22

25

26

31

32

33

EP 1 667 065 B1

# Fig.20

spatial processing portion 42

enhancing portion 45

DR compression portion

enhancement amount adjustment portion 46

IS, OS, US, DS, TS, IC, MS, DRS

41, 43, 44, 47, 48, 49, 50

70

*Fig.21*

EP 1 667 065 B1

# Fig.22

Fig.23

EP 1 667 065 B1

Fig.24

Fig.25

A: target contrast
signal JS

M20: $A= \frac{m-1}{m}P + \frac{1}{m}$

1.0

1/m

0.0          1.0    P: input signal IS

*Fig.26*

F4: $A^{\gamma}$ $\left(\gamma = \dfrac{\log(n)}{\log(m)}\right)$

# Fig.27

Q: output
signal OS

M21: $Q= \dfrac{n}{n-1}C - \dfrac{1}{n-1}$

1.0

0.0        1/n        1.0    C: visually processed signal
                                    KS

# Fig.28

```
                    ┌─────────────┐
                    │    START    │
                    └─────────────┘
                           │
S601        ┌──────────────────────────┐
            │   obtain target contrast C1   │
            │    and actual contrast C2    │
            └──────────────────────────┘
                           │
                           ▼◄──────────────┐
S602        ┌──────────────────────────┐   │
            │  transform input signal IS  │   │
            │    into target contrast     │   │
            │        signal JS            │   │
            └──────────────────────────┘   │
                           │                │
S603        ┌──────────────────────────┐   │
            │  spatially process target   │   │
            │   contrast signal JS        │   │
            └──────────────────────────┘   │
                           │                │
S604        ┌──────────────────────────┐   │
            │   divide target contrast    │   │
            │   signal JS by unsharp      │   │
            │        signal US            │   │
            └──────────────────────────┘   │
                           │                │
S605        ┌──────────────────────────┐   │
            │  enhance divided signal     │   │
            │   RS by enhancement         │   │
            │      function F5            │   │
            └──────────────────────────┘   │
                           │                │
S606        ┌──────────────────────────┐   │
            │ compress dynamic range      │   │
            │ of target contrast signal   │   │
            │   JS by dynamic range       │   │
            │ compression function F4     │   │
            └──────────────────────────┘   │
                           │                │
S607        ┌──────────────────────────┐   │
            │  multiply enhanced signal   │   │
            │   TS and DR compressed      │   │
            │        signal DRS           │   │
            └──────────────────────────┘   │
                           │                │
S608        ┌──────────────────────────┐   │
            │   transform visually        │   │
            │ processed signal KS into    │   │
            │    output signal OS         │   │
            └──────────────────────────┘   │
                           │                │
S609              ◇─────────────────◇      │
                  ◇ all pixels processed? ◇──┘ NO
                  ◇─────────────────◇
                           │ YES
                    ┌─────────────┐
                    │     END     │
                    └─────────────┘
```

## Fig.29

(if A>B)

$\alpha 1(A)$

M2:  $C = A^{\gamma} \times (\dfrac{A}{B})^{\alpha 1(A)\cdot(1-\gamma)}$

$[\, \gamma = \dfrac{\log(n)}{\log(m)} \,]$

1.0

0.0

1.0

A

# Fig.30

(if A<B)

M2: $C = A^{\gamma} \times (\dfrac{A}{B})^{\alpha 2(A) \cdot (1-\gamma)}$

$[\gamma = \dfrac{\log(n)}{\log(m)}\ ]$

$\alpha 2(A)$

1.0

0.0

1.0   A

*Fig.31*

(if A>B)

M2:  $C = A^{\gamma} \times (\frac{A}{B})^{\alpha 3(A) \cdot (1-\gamma)}$

$\alpha 3(A)$

$[\gamma = \dfrac{\log(n)}{\log(m)} \ ]$

$$\begin{array}{c} 1.0 \\ \\ 0.0 \end{array}$$

1.0    A

# Fig.32

$\alpha 4(A,B)$

M2: $C = A^{\gamma} \times (\dfrac{A}{B})^{\alpha 4(A,B) \cdot (1-\gamma)}$

$[\gamma = \dfrac{\log(n)}{\log(m)}\ ]$

1.0

-1.0  0.0  1.0  A-B

*Fig.33*

605

605c

actual contrast setting portion

605a — luminance measuring portion

605b — memory portion

calculation portion

C2

*Fig.34*

605

605e

actual contrast setting portion

605d

| luminance measuring portion | control portion |

C2

# Fig.35

```
           ┌─────────────┐
          (    START     )
           └──────┬──────┘
                  │
          ┌───────┴────────┐
  S620    │ control white level │
          │    display      │
          └───────┬────────┘
                  │
          ┌───────┴────────┐
  S621    │ obtain measured │
          │ value of white level │
          └───────┬────────┘
                  │
          ┌───────┴────────┐
  S622    │ control black level │
          │    display      │
          └───────┬────────┘
                  │
          ┌───────┴────────┐
  S623    │ obtain measured │
          │ value of black level │
          └───────┬────────┘
                  │
          ┌───────┴────────┐
  S624    │ calculate actual │
          │   contrast C2   │
          └───────┬────────┘
                  │
           ┌──────┴──────┐
          (    END       )
           └─────────────┘
```

# Fig.36

## Fig.37

[Yout] ──────────► ┌─────────────┐
[Yin] ───────────► │   color     │
                    │  difference │ ────────► [CBout]
[CBin] ──────────► │ correcting  │ ────────► [CRout]
[CRin] ──────────► │  portion    │
                    └─────────────┘
                          608

[CBout]=a1 * ([Yout] − [Yin]) * [CBin] + a2 * (1 − [Yout] ∕ [Yin]) * [CBin]
      + a3 * ([Yout] − [Yin]) * [CRin] + a4 * (1 − [Yout] ∕ [Yin]) * [CRin]
      + [CBin]

[CRout]=a5 * ([Yout] − [Yin]) * [CBin] + a6 * (1 − [Yout] ∕ [Yin]) * [CBin]
      + a7 * ([Yout] − [Yin]) * [CRin] + a8 * (1 − [Yout] ∕ [Yin]) * [CRin]
      + [CRin]

# Fig.38

START

S630 — obtain [Yin], [Yout], [CBin], [CRin]

S631 — Lab transformation: derive [Ain], [Bin]

S632 — CB Eq. and CR Eq. calculation: derive [CBout], [CRout]

S633 — Lab transformation: derive [Aout], [Bout]

S634 — calculate evaluation function

S635 — evaluation function $\leqq$ threshold value?

S636 — correct coefficients a1 to a8

NO

YES

S637 — output coefficients a1 to a8

END

Fig.39

# Fig.40

*Fig.41*

Fig.42

Fig.43

EP 1 667 065 B1

Fig.44

camera ex116

computer ex111

LSI ex117

ex107

PDA ex112

ex108

camera ex113

ex109

cellular phone
ex115

ex100

cellular phone
ex114

ex110

telephone
network
ex104

streaming server ex103

the Internet ex101

internet service provider ex102

# Fig.45

ex 201

ex 208

ex 202

ex 203

ex 204

ex 206

ex 207

SD

ex 205

ex 115

**Fig.46**

ex115

ex310 power source circuit portion — to each portion ...

ex313

ex311 main controller portion

ex304 operational input controller portion

ex204 operating keys

ex312 image coding portion

ex303 camera interface portion

ex203 camera portion

ex302 LCD controller portion

ex202 display portion

ex309 image decoding portion

ex308 multiplex separation portion

ex307 recording and reproduction portion

ex207 recording medium

ex306 modem circuit portion

ex301 transmission and reception circuit portion

ex305 sound processing portion

ex205 sound input portion

ex208 sound output portion

ex201

Fig.47

monitor
ex404

ex402

satellite ex410

reproduction device
ex403

antenna
ex411

car ex412

broadcast
station
ex409

antenna ex406

navigation system ex413

cable ex405

monitor
ex408

STB ex407

ex421

television set ex401

ex422

SD

recorder ex420

Fig.48

EP 1 667 065 B1

*Fig.49*

# Fig.50

# Fig.51

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0732669 A1
- US 6618045 B
- JP 2000057335 A
- JP 2832954 B
- JP 2001298619 A